(19) Europäisches Patentamt / European Patent Office / Office européen des brevets

(11) **EP 4 692 724 A1**

(12) **EUROPEAN PATENT APPLICATION**
published in accordance with Art. 153(4) EPC

(43) Date of publication:
**11.02.2026  Bulletin 2026/07**

(21) Application number: **24780572.4**

(22) Date of filing: **27.03.2024**

(51) International Patent Classification (IPC):
*G01C 15/00* (2006.01)      *G01B 7/16* (2006.01)
*G01B 11/16* (2006.01)      *G01B 21/32* (2006.01)
*G01N 22/00* (2006.01)      *G01N 22/04* (2006.01)

(52) Cooperative Patent Classification (CPC):
**G01B 7/16; G01B 11/16; G01B 21/32; G01C 15/00;
G01N 22/00; G01N 22/04**

(86) International application number:
**PCT/JP2024/012516**

(87) International publication number:
**WO 2024/204471 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.03.2023  JP 2023054006
29.03.2023  JP 2023054007
30.03.2023  JP 2023056304**

(71) Applicant: **The Chugoku Electric Power Co., Inc.
Hiroshima-shi, Hiroshima 730-8701 (JP)**

(72) Inventors:
• **FUKUHARA, Yoji
Hiroshima-shi, Hiroshima 730-8701 (JP)**

• **KAMATA, Ryosuke
Hiroshima-shi, Hiroshima 730-8701 (JP)**
• **TANABE, Ryota
Hiroshima-shi, Hiroshima 730-8701 (JP)**
• **TAKANO, Tomohiro
Hiroshima-shi, Hiroshima 730-8701 (JP)**
• **TOYOTA, Mitsuo
Hiroshima-shi, Hiroshima 730-8701 (JP)**
• **KAMINO, Kenta
Hiroshima-shi, Hiroshima 730-8701 (JP)**
• **TAKI, Yoshihiko
Tokyo 102-0094 (JP)**

(74) Representative: **Hoffmann Eitle
Patent- und Rechtsanwälte PartmbB
Arabellastraße 30
81925 München (DE)**

(54) **ABNORMALITY DETECTION SYSTEM**

(57)    An object of the present invention is to provide a system that calculates information usable for abnormality detection.

A system comprising at least one computer apparatus, the system comprising a communicator that establishes communication between at least two wireless devices, and a calculator that calculates information usable for abnormality detection.

# FIG. 5

| FIRST WIRELESS DEVICE | | SECOND WIRELESS DEVICE |
|---|---|---|

DISTANCE CALCULATION PROCESSING

S101 TRANSMIT SIGNAL → S102 RECEIVE SIGNAL

S104 RECEIVE SIGNAL ← S103 TRANSMIT SIGNAL

S106 RECEIVE INFORMATION ON PHASE OF SECOND WIRELESS DEVICE ← S105 TRANSMIT INFORMATION ON PHASE OF SECOND WIRELESS DEVICE

S107 CALCULATE PHASE DEVIATION

S108 TRANSMIT PHASE DEVIATION CORRECTION INSTRUCTION → S109 RECEIVE PHASE DEVIATION CORRECTION INSTRUCTION

S110 CORRECT PHASE DEVIATION

S112 RECEIVE SIGNAL ← S111 TRANSMIT SIGNAL

S113 TRANSMIT SIGNAL → S114 RECEIVE SIGNAL

S116 RECEIVE INFORMATION ON TIME OF SECOND WIRELESS DEVICE ← S115 TRANSMIT INFORMATION ON TIME OF SECOND WIRELESS DEVICE

S117 CALCULATE TIME DEVIATION

S118 TRANSMIT TIME DEVIATION CORRECTION INSTRUCTION → S119 RECEIVE TIME DEVIATION CORRECTION INSTRUCTION

S120 CORRECT TIME DEVIATION

S122 RECEIVE INFORMATION ON TIME OF SECOND WIRELESS DEVICE ← S121 TRANSMIT INFORMATION ON TIME OF SECOND WIRELESS DEVICE

S123 CALCULATE PROPAGATION TIME

S124 CALCULATE DISTANCE

END

2

**Description**

Technical Field

The present invention relates to a system, a method, a wireless device, and a ground improvement object.

Background Art

In order to detect various abnormalities such as a temperature change of a road, a building, or equipment, intrusion of a human or an animal into the road, the building, or the equipment, a rockfall on the road, the building, or the equipment, and occurrence or possibility of occurrence of a disaster, it is important to use various information.

For example, there is a risk that a sediment disaster such as collapse of a slope of a mountain or a cliff, a landslide, and a debris flow occurs due to heavy rain or an earthquake.

In order to reinforce the slope of a mountain or a cliff and reduce the risk of the occurrence of a sediment disaster, a method of cutting down trees growing on a slope and covering the slope with concrete has conventionally been performed. However, in recent years, attention has also been paid to a method of reinforcing a slope by inserting a ground improvement object such as a rock bolt into the slope without cutting down trees growing on the slope.

A method of installing an inclination sensor on a slope to observe ground displacement has also been proposed (see, for example, Patent Literature 1).

In addition, ground displacement may occur due to heavy rain or an earthquake, and damage such as collapse of structures such as ground improvement walls, dams, levees, tunnels, and bridges may occur.

In order to prevent the occurrence of such damage, ground displacement is observed. For example, a method of installing an inclination sensor on a slope to observe ground displacement has been proposed (see, for example, Patent Literature 2).

Furthermore, measures against natural disasters such as flooding of a river and a sediment disaster caused by local heavy rain or the like have conventionally been studied. As a method for taking measures against such natural disasters, for example, it has been studied to measure an elastic wave propagating in the ground and a water content in the ground using a sensor, to monitor an underground situation of a levee over a basin along the levee (Patent Literature 3).

A situation related to a natural disaster changes from moment to moment in some cases. In order to grasp the situation, more accurate information, for example, information such as a water content at an accurate time is required.

In addition, abnormalities in a road, a building, or equipment have conventionally been detected by humans in most cases. For example, regarding abnormalities in a road, a worker visually monitors an abnormality of a road surface temperature, occurrence of a landslide, intrusion of an animal or a human into a highway, or the like. However, monitoring by a worker requires not only a lot of cost and time, but may also delay abnormality detection and handling.

For example, a system for monitoring abnormalities in a road using an optical fiber has been proposed. As the system for monitoring abnormalities in a road using an optical fiber, Patent Literature 4 discloses a technique in which an optical fiber is laid on the side of a road, and a rockfall on the road is detected by using a change in a polarization state of an optical signal in the optical fiber when a large external force is applied such as a falling rock colliding with the optical fiber. However, the technique of Patent Literature 4, in which it is not necessary for a worker to detect abnormalities in a road by himself/herself, does not take account of time-dependent detection of the abnormalities. For example, an operating situation of a road, a building, or equipment may greatly differ depending on time even on the same day.

Citation List

Patent Literature

Patent Literature 1: JP 2018-146469 A
Patent Literature 2: JP 2018-146469 A
Patent Literature 3: JP 2000-46597 A
Patent Literature 4: JP 2000-180219 A

Summary of Invention

Technical Problem

An object of the present invention is, for example, any of the following. A first object of the present invention is to provide a system that calculates information usable for abnormality detection. A second object of the present invention is to provide a system that calculates information usable for detecting occurrence of a disaster or detecting possibility of occurrence of a disaster. A third object of the present invention is to provide a system for observing ground displacement. A fourth object of the present invention is to provide a system and a method capable of acquiring a water content or information enabling specification of a water content in association with time. A fifth object of the present invention is to provide a system and a method for specifying a situation of a road, a building, or equipment.

Solution to Problem

According to the invention, the above object is achieved by any of the following:

[1] A system comprising at least one computer apparatus, the system comprising: a communicator that establishes communication between at least two wireless devices; and a calculator that calculates information usable for abnormality detection;

[2] The system according to [1], comprising: a time deviation calculator that calculates a time deviation between internal clocks of the wireless devices by performing communication between the wireless devices; and a time deviation corrector that corrects the time deviation between the internal clocks of the wireless devices on a basis of the calculated time deviation;

[3] The system according to [2], comprising a storage that stores the information calculated by the calculator in association with the time of the internal clock corrected by the time deviation corrector;

[4] The system according to [3], comprising a server apparatus, wherein the server apparatus comprises the storage;

[5] The system according to [2], comprising: a phase deviation calculator that calculates a phase deviation between the internal clocks of the wireless devices by performing communication between the wireless devices; and a phase deviation corrector that corrects the phase deviation between the internal clocks of the wireless devices on a basis of the calculated phase deviation;

[6] The system according to [5], wherein the time deviation calculator calculates the time deviation after the phase deviation corrector corrects the phase deviation;

[7] The system according to [2], wherein the calculator comprises a distance calculator that calculates a distance between the wireless devices on a basis of a propagation time of communication between the wireless devices;

[8] The system according to [7], wherein the distance calculator calculates the distance on a basis of the time deviation calculated by the time deviation calculator;

[9] The system according to [8], wherein the distance calculator calculates the distance after the time deviation corrector corrects the time deviation;

[10] The system according to any one of [7] to [9], comprising a positional relationship specifier that specifies a positional relationship of the wireless devices on a basis of the calculated distance between the wireless devices;

[11] The system according to any one of [7] to [9], wherein the calculator comprises a change amount specifier that specifies a change amount of the calculated distance between the wireless devices;

[12] The system according to any one of [1] to [9], comprising an acquisition device for acquiring a water content under a ground surface or information enabling specification of a water content under a ground surface;

[13] The system according to [12], wherein the acquisition device comprises an antenna installed above and in a vicinity of the ground surface, the system comprising at least one of: a specifier that specifies the water content under the ground surface on a basis of information on an electromagnetic wave received by the antenna; and a detector that detects that the information on an electromagnetic wave received by the antenna satisfies a predetermined condition;

[14] The system according to [13], wherein the antenna is connected to a reactance circuit;

[15] The system according to any one of [1] to [9], comprising a fiber cable including an optical fiber, and further comprising a sensor that detects sound, vibration, and/or temperature by the optical fiber;

[16] The system according to any one of [1] to [9], comprising a notification outputter that outputs a notification in a case where the information calculated by the calculator satisfies a predetermined condition;

[17] The system according to any one of [7] to [9], comprising two or more ground improvement objects, wherein each of the ground improvement objects comprises at least one wireless device;

[18] The system according to [17], comprising the wireless device provided in the ground improvement object, and a wireless device installed at another predetermined location;

[19] The system according to any one of [7] to [9], wherein one of the at least two wireless devices is a first wireless device installed in a structure, and another one of the at least two wireless devices is a second wireless device installed at another predetermined location;

[20] The system according to [19], wherein the second wireless device is installed on a steel tower and/or a utility pole;

[21] The system according to [1], comprising: a first wireless device; an acquisition device for acquiring a water content under a ground surface or information enabling specification of a water content under a ground surface; and a second wireless device installed within a predetermined distance from the acquisition device, the system comprising: a time deviation calculator that calculates a time deviation between the first wireless device and the second wireless device by performing communication between the first wireless device and the second wireless device; a time corrector that corrects a time in the second wireless device on a basis of the calculated time deviation; and a storage that stores the water content or the information enabling specification of the water content in association with the time clocked by the second wireless device;

[22] A method executed in a system comprising at least one computer apparatus, the method comprising: a communication step of establishing communication between at least two wireless devices; and a calculation step of calculating information usable for detecting occurrence of a disaster or detecting possibility of occurrence of a disaster;

[23] The method according to [22], comprising: a time deviation calculation step of calculating a time deviation between internal clocks of the wireless devices by performing communication between the wireless devices; and a time deviation correction step of correcting the time deviation between the internal clocks of the wireless devices on a basis of the calculated time deviation;

[24] The method according to [22], comprising: a phase deviation calculation step of calculating a phase deviation between internal clocks of the wireless devices by performing communication between the wireless devices; and a phase deviation correction step of correcting the phase deviation between the internal clocks of the wireless devices on a basis of the calculated phase deviation;

[25] The method according to any one of [22] to [24], wherein the calculation step comprises a distance calculation step of calculating a distance between the wireless devices on a basis of a propagation time of communication between the wireless devices;

[26] A wireless device comprising: a communicator that establishes communication with another wireless device; and a calculator that calculates information usable for detecting occurrence of a disaster or detecting possibility of occurrence of a disaster;

[27] The wireless device according to [26], comprising: a time deviation calculator that calculates a time deviation between internal clocks of the wireless devices by performing communication between the wireless devices; and a time deviation corrector that corrects the time deviation between the internal clocks of the wireless devices on a basis of the calculated time deviation;

[28] The wireless device according to [26], comprising: a phase deviation calculator that calculates a phase deviation between internal clocks of the wireless devices by performing communication between the wireless devices; and a phase deviation corrector that corrects the phase deviation between the internal clocks of the wireless devices on a basis of the calculated phase deviation;

[29] The wireless device according to any one of [26] to [28], wherein the calculator comprises a distance calculator that calculates a distance between the wireless devices on a basis of a propagation time of communication between the wireless devices;

[30] The wireless device according to [26], in a system comprising two or more wireless devices provided in ground improvement objects, wherein the communicator establishes communication with another wireless device provided in a ground improvement object, the wireless device comprising a distance calculator that calculates a distance between the wireless devices on a basis of a propagation time of communication between the wireless devices, wherein the distance calculator calculates the distance on a basis of a time deviation between internal clocks of the wireless devices;

[31] The wireless device according to [26], the wireless device being provided in a ground improvement object in a system comprising the wireless device provided in the ground improvement object and a wireless device installed at another predetermined location, wherein the communicator establishes communication with the wireless device installed at the other predetermined location, the wireless device comprising a distance calculator that calculates a distance between the wireless devices on a basis of a propagation time of communication between the wireless devices, wherein the distance calculator calculates the distance on a basis of a time deviation between internal clocks of the wireless devices;

[32] The wireless device according to [26], the wireless device being installed at another predetermined location in a system comprising a wireless device provided in a ground improvement object and the wireless device installed at the other predetermined location, wherein the communicator establishes communication with the wireless device provided in the ground improvement object, the wireless device comprising a distance calculator that calculates a distance between the wireless devices on a basis of a propagation time of communication between the wireless devices, wherein the distance calculator calculates the distance on a basis of a time deviation between internal clocks of the wireless devices;

[33] A ground improvement object comprising the wireless device according to [30] or [31];

[34] The first wireless device according to [26], in a system comprising the first wireless device installed in a structure and a second wireless device installed at another predetermined location, wherein the communicator establishes communication with the second wireless device, the first wireless device comprising a distance calculator that calculates a distance between the wireless devices on a basis of a propagation time of communication between the wireless devices, wherein the distance calculator calculates the distance on a basis of a time deviation between internal clocks of the wireless devices;

[35] The second wireless device according to [26], in a system comprising a first wireless device installed in a structure and the second wireless device installed at another predetermined location, wherein the communicator establishes communication with the first wireless device, the second wireless device comprising a distance calculator that calculates a distance between the wireless devices on a basis of a propagation time of communication between the wireless devices, wherein the distance calculator calculates the distance on a basis of a time deviation between internal clocks of the wireless devices;

[36] A system including at least one computer apparatus, the system comprising a calculator that calculates information usable for detecting occurrence of a disaster or detecting possibility of occurrence of a disaster on the basis of communication between at least two wireless devices;

[37] The system according to [36], comprising the two or more ground improvement objects, the ground improvement objects including the wireless devices, the system comprising a distance calculator that calculates a distance between the wireless devices on the basis of a propagation time of communication between the wireless devices, wherein the distance calculator calculates the distance on the basis of a time deviation of the internal clock between the wireless devices;

[38] The system according to [36], comprising the wireless device provided in the ground improvement object and the wireless device installed at another predetermined location, the system comprising a distance calculator that calculates a distance between the wireless devices on the basis of a propagation time of communication between the wireless devices, wherein the distance calculator calculates the distance on the basis of a time deviation of the internal clock between the wireless devices;

[39] The system according to [37] or [38], comprising a positional relationship specifier that specifies a positional relationship of the wireless devices on the basis of the calculated distance between the wireless devices;

[40] The system according to any one of [36] to [39], comprising a fiber cable including an optical fiber, and further comprising a sensor that detects sound, vibration, and/or temperature by the optical fiber;

[41] The system according to [36], comprising a first wireless device installed in a structure and a second wireless device installed at another predetermined location, the system comprising a distance calculator that calculates a distance between the wireless devices on a basis of a propagation time of communication between the wireless devices, wherein the distance calculator calculates the distance on a basis of a time deviation between internal clocks of the wireless devices;

[42] The system according to [41], wherein the second wireless device is installed on a steel tower and/or a utility pole;

[43] The system according to any one of [37] to [42], comprising: a time deviation calculator that calculates a time deviation between the internal clocks provided in the wireless devices by transmitting and receiving a signal between the wireless devices; and a time deviation corrector that corrects a time deviation of the internal clock provided in the wireless device on the basis of the calculated time deviation, wherein a distance calculator calculates a distance after the time deviation corrector corrects the time deviation;

[44] The system according to [43], comprising: a phase deviation calculator that calculates a phase deviation between the internal clocks provided in the wireless devices by transmitting and receiving a signal between the wireless devices; and a phase deviation corrector that corrects a phase deviation of the internal clock provided in the wireless device on the basis of the calculated phase deviation, wherein the time deviation calculator calculates the time deviation after the phase deviation corrector corrects the phase deviation;

[45] The system according to any one of [37] to [44], comprising a change amount specifier that specifies a change amount of the calculated distance between the wireless devices and/or a change amount of the specified positional relationship of the wireless devices;

[46] The system according to [45], comprising a notification outputter that outputs a notification in a case where the specified change amount satisfies a predetermined condition;

[47] The system according to [36], comprising: a first wireless device; an acquisition device for acquiring a water content under a ground surface or information enabling specification of a water content under a ground surface; and a second wireless device installed within a predetermined distance from the acquisition device, the system comprising: a time deviation calculator that calculates a time deviation between the first wireless device and the second wireless device by performing communication between the first wireless device and the second wireless device; a time corrector that corrects a time in the second wireless device on a basis of the calculated time deviation; and a storage that stores the water content or the information enabling specification of the water content in association with the time clocked by the second wireless device;

[48] The system according to [47], comprising: a phase deviation calculator that calculates a phase deviation of the clock between the first wireless device and the second wireless device by performing communication between the first wireless device and the second wireless device; and a phase corrector that corrects a phase in the second wireless device on the basis of the calculated phase deviation;

[49] The system according to [47] or [48], comprising a transmitter that transmits information on a warning to at least one computer apparatus in a case where the water content or the information enabling specification of the water content satisfies a predetermined condition;

[50] The system according to [49], wherein the transmitter transmits the information on a warning to a computer apparatus having a predetermined relationship with the second wireless device or the acquisition device;

[51] The system according to [49], wherein the predetermined condition is a condition determined on the basis of the water content or the information enabling specification of the water content;

[52] The system according to any one of [47] to [51], wherein the acquisition device comprises an antenna installed above and in the vicinity of the ground surface, the system comprising a specifier that specifies the water content under the ground surface on the basis of information on an electromagnetic wave received by the antenna;

[53] The system according to any one of [47] to [52], wherein the acquisition device comprises an antenna installed above and in the vicinity of the ground surface, the system comprising a detector that detects that the information on an electromagnetic wave received by the antenna satisfies a predetermined condition;

[54] The system according to [52] or [53], wherein the antenna is connected to a reactance circuit;

[55] The system according to any one of [47] to [54], comprising a server apparatus, wherein the server apparatus comprises the storage;

[56] The system according to any one of [52] to [55], comprising a server apparatus, wherein the server apparatus includes the specifier;

[57] A method executed in a system comprising at least one computer apparatus, the method comprising a calculation step of calculating information usable for detecting occurrence of a disaster or detecting possibility of occurrence of a disaster on the basis of communication between at least two wireless devices;

[58] The method according to [57], comprising a distance calculation step of calculating a distance between the wireless devices on the basis of a propagation time of communication between the wireless devices provided in the two or more ground improvement objects, wherein the distance calculation step calculates the distance on the basis of a time deviation of the internal clock between the wireless devices;

[59] The method according to [57], comprising a distance calculation step of calculating a distance between the wireless devices on the basis of a propagation time of communication between the wireless device provided in the ground improvement object and the wireless device installed at another predetermined location, wherein the distance calculation step calculates the distance on the basis of a time deviation of the internal clock between the wireless devices;

[60] The method according to [57], comprising a distance calculation step of calculating a distance between the wireless devices on the basis of a propagation time of communication between a first wireless device installed in a structure and a second wireless device installed at another predetermined location, wherein the distance calculation step calculates the distance on the basis of a time deviation of the internal clock between the wireless devices;

[61] The method according to [57], wherein the system comprising: a first wireless device; an acquisition device for acquiring a water content under a ground surface or information enabling specification of a water content under a ground surface; and a second wireless device installed within a predetermined distance from the acquisition device, the method comprising: a calculation step of calculating a time deviation between the first wireless device and the second wireless device by performing communication between the first wireless device and the second wireless device; a time correcting step of correcting a time in the second wireless device on a basis of the calculated time deviation; and a water content storage step of storing the water content or the information enabling specification of the water content in association with the time clocked by the second wireless device;

[62] A wireless device comprising a calculator that calculates information usable for detecting occurrence of a disaster or detecting possibility of occurrence of a disaster on the basis of communication between the wireless device and another wireless device;

[63] The wireless device according to [62], in a system comprising two or more wireless devices provided in ground improvement objects, the wireless device comprising: a communication connector that connects communication with another wireless device provided in a ground improvement object; and a distance calculator that calculates a distance between the wireless devices on a basis of a propagation time of communication between the wireless devices, wherein the distance calculator calculates the distance on a basis of a time deviation between internal clocks of the wireless devices;

[64] The wireless device according to [62], the wireless device being provided in a ground improvement object in a system comprising the wireless device provided in the ground improvement object and a wireless device installed at another predetermined location, the wireless device comprising: a communication connector that connects communication with the wireless device installed at the other predetermined location; and a distance calculator that calculates a distance between the wireless devices on a basis of a propagation time of communication between the wireless devices, wherein the distance calculator calculates the distance on a basis of a time deviation between internal clocks of the wireless devices;

[65] The wireless device according to [61], the wireless device being installed at another predetermined location in a system comprising a wireless device provided in a ground improvement object and the wireless device installed at the other predetermined location, the wireless device comprising: a communication connector that connects communication with the wireless device provided in the ground improvement object; and a distance calculator that calculates a distance between the wireless devices on a basis of a propagation time of communication between the wireless devices, wherein the distance calculator calculates the distance on a basis of a time deviation between internal clocks of the wireless devices;

[66] A ground improvement object comprising the wireless device according to [63] or [64];

[67] The first wireless device according to [62], in a system comprising the first wireless device installed in a structure and a second wireless device installed at another predetermined location, the first wireless device comprising: a communication connector that connects communication with the second wireless device; and a distance calculator that calculates a distance between the wireless devices on a basis of a propagation time of communication between the wireless devices, wherein the distance calculator calculates the distance on a basis of a time deviation between internal clocks of the wireless devices;

[68] The second wireless device according to [62], in a system comprising a first wireless device installed in a structure and the second wireless device installed at another predetermined location, the second wireless device comprising: a communication connector that connects communication with the first wireless device; and a distance calculator that calculates a distance between the wireless devices on a basis of a propagation time of communication between the wireless devices, wherein the distance calculator calculates the distance on a basis of a time deviation between internal clocks of the wireless devices;

[69] A system comprising at least one computer apparatus, the system comprising a situation specifier that specifies a situation of a road, a building, or equipment present in the vicinity of an optical fiber laid in the vicinity of the road, the building, or the equipment corresponding to an optical signal obtained by receiving light from a light source via the optical fiber at the time of receiving the optical signal according to information on the optical signal, and a time at which the optical signal is received;

[70] The system according to [69], wherein the situation specifier specifies the situation of the road, the building, or the equipment present in the vicinity of the optical fiber corresponding to the received optical signal by adapting a variation pattern of the information on the received optical signal to a unique variation pattern of information on the optical signal that varies according to the situation of the road, the building, or the equipment;

[71] The system according to [69], wherein the situation specifier uses a prediction model obtained by machine learning using, as input data, information on the optical signal obtained by receiving light from the light source via the optical fiber laid in the vicinity of the road, the building, or the equipment and information on the time at which the optical signal is received, and as output data, an information regarding a situation of the road, the building, or the equipment present in the vicinity of the optical fiber corresponding to the optical signal at the time of receiving the optical signal, to specify the situation of the road, the building, or the equipment corresponding to an information regarding the optical signal received via the optical fiber and the time at which the optical signal is received;

[72] The system according to any one of [69] to [71], wherein the situation specifier specifies a congestion situation of the road, a situation related to the soundness of the road, or the type of a vehicle present on the road:

[73] The system according to any one of [69] to [71], wherein the situation specifier specifies a situation related to the soundness of the building, information on equipment in the building, or information on activities of a human or an animal in the building;

[74] The system according to any one of [69] to [71], wherein the situation specifier specifies an operating situation of the equipment or a situation related to the soundness of the equipment;

[75] The system according to any one of [69] to [74], comprising an outputter that outputs information indicating that a predetermined condition is satisfied in a case where the situation specified by the situation specifier satisfies the predetermined condition, and/or an output controller configured to perform control such that the information can be output by another apparatus;

[76] The system according to any one of [69] to [75], comprising: a plurality of first wireless devices; and a second device present in the vicinity of a reception unit of an optical fiber laid in the vicinity of a road, a building, or equipment, the system comprising: a time deviation calculator that calculates a time deviation between a time of a clock of one of the first devices and a time of a clock of the second device by performing communication between one of the first devices and the second device; a time corrector that corrects a time in the clock of the second device on a basis of the calculated time deviation; wherein the system specifies the time at which the optical signal is received by the clock of the second device;

[77] The system according to any one of [69] to [76], comprising: a plurality of first wireless devices; and a second device present in the vicinity of a reception unit of an optical fiber laid in the vicinity of a road, a building, or equipment, the system comprising: a phase deviation calculator that calculates a phase deviation between a time of a clock of one of the first devices and a time of a clock of the second device by performing communication between one of the first devices and the second device; a phase corrector that corrects a phase in the clock of the second device on a basis of the calculated phase deviation; wherein the system specifies the time at which the optical signal received by the clock of the second device;

[78] The system according to any one of [69] to [77], comprising: a plurality of first wireless devices; and a second device present in the vicinity of a reception unit of an optical fiber laid in the vicinity of a road, a building, or equipment, the system comprising: a distance calculator that calculates the distance between each of the plurality of first devices and the second device on the basis of propagation time of the information or the signal between each of the plurality of first devices and the second device; and a position specifier that specifies the position of the second device based on the calculated distance between each of the plurality of first devices and the second device;

[79] The system according to [78], wherein the distance calculator calculates the distance on a basis of a time deviation between the clock of one of the first devices and the clock of the second device;

[80] The system according to [78] or [79], comprising a manager terminal operated by a manager, the system comprising a situation displayer that controls so as to display the situation of the road, the building, or the equipment specified by the situation specifier in association with the position of the second device present in the vicinity of the reception unit of the optical fiber corresponding to the road, the building, or the equipment;

[81] A method executed in a system comprising at least one computer apparatus, the method comprising a situation specifying step of specifying a situation of a road, a building, or equipment present in the vicinity of an optical fiber laid in the vicinity of the road, the building, or the equipment corresponding to an optical signal obtained by receiving light from a light source via the optical fiber at the time of receiving the optical signal according to information on the optical signal, and a time at which the optical signal is received.

Advantageous Effects of Invention

According to the present invention, it is possible to provide a system that calculates information usable for abnormality detection. According to the present invention, it is possible to provide a system for observing ground displacement. According to the present invention, it is possible to provide a system and a method capable of acquiring a water content or information enabling specification of a water content in association with time.

Brief Description of Drawings

Fig. 1 is a block diagram illustrating a configuration of a system according to the embodiment of the present invention.
Fig. 2 is a diagram illustrating a system installing method according to the embodiment of the present invention.
Fig. 3 is a block diagram illustrating a hardware configuration of the wireless device according to the embodiment of the present invention.
Fig. 4 is a block diagram illustrating a hardware configuration of the computer apparatus according to the embodiment of the present invention.
Fig. 5 is a diagram illustrating a flowchart of the distance calculation processing according to the embodiment of the present invention.
Fig. 6 is a diagram illustrating a flowchart of positional relationship specification processing according to the embodiment of the present invention.
Fig. 7 is a diagram illustrating an example of the display screen of the system according to the embodiment of the present invention.
Fig. 8 is a diagram illustrating a flowchart of notification processing according to the embodiment of the present invention.
Fig. 9 is a diagram illustrating an example of the display screen of the system according to the embodiment of the present invention.
Fig. 10 is a block diagram illustrating a configuration of a system according to the embodiment of the present invention.
Fig. 11 is a block diagram illustrating a hardware configuration of the wireless device according to the embodiment of the present invention.
Fig. 12 is a block diagram illustrating a hardware configuration of the computer apparatus according to the embodiment of the present invention.
Fig. 13 is a diagram illustrating a flowchart of the distance calculation processing according to the embodiment of the present invention.
Fig. 14 is a diagram illustrating a flowchart of the notification processing according to the embodiment of the present

invention.

Fig. 15 is a block diagram illustrating a configuration of a system according to the embodiment of the present invention.

Fig. 16 is a block diagram illustrating a hardware configuration of the first device according to the embodiment of the present invention.

Fig. 17 is a block diagram illustrating a hardware configuration of the second device according to the embodiment of the present invention.

Fig. 18 is a diagram illustrating a flowchart of the distance calculation processing according to the embodiment of the present invention.

Fig. 19 is a block diagram illustrating a configuration of the acquisition device according to the embodiment of the present invention.

Fig. 20 is a diagram illustrating a flowchart of the information acquisition processing for acquiring the information enabling specification of the water content according to the embodiment of the present invention.

Fig. 21 is a diagram illustrating a flowchart of the position specification processing according to the embodiment of the present invention.

Fig. 22 is a block diagram illustrating a configuration of a system according to the embodiment of the present invention.

Fig. 23 is a block diagram illustrating a configuration of the optical fiber sensing system according to the embodiment of the present invention.

Fig. 24 is a diagram illustrating a flowchart of the information specification processing according to the embodiment of the present invention.

Fig. 25 is a diagram illustrating an example of the road situation management table according to the embodiment of the present invention.

Fig. 26 is a diagram illustrating a flowchart of the alarm output processing according to the embodiment of the present invention.

Fig. 27 is a diagram illustrating an example of the in-store situation management table according to the embodiment of the present invention.

Description of Embodiments

Hereinafter, embodiments of the present invention will be described, but the present invention is not limited to the following embodiments unless it is contrary to the spirit / scope of the present invention. The order of processes constituting a flowchart described later may be changed within a range in which inconsistency or mismatching does not occur in the processing contents, and it is also possible to omit some of the processes constituting the flowchart or add a new process to the processes constituting the flowchart within a range in which inconsistency or mismatching does not occur in the processing contents. In addition, an apparatus that mainly executes the processes constituting the flowchart can be changed to another apparatus unless it is contrary to the gist of the present invention. At this time, it is possible to change the processing contents so as not to cause inconsistency or mismatching in the processing contents.

A system of the present invention is a system including at least one computer apparatus. The system of the present invention calculates information usable for abnormality detection. In the present invention, the "abnormality" means a temperature change of a road, a building, or equipment; intrusion of a human or an animal; a rockfall; occurrence or possibility of occurrence of a disaster; or the like. The type of the disaster is not particularly limited, and can be appropriately designed. The type of the disaster may be, for example, a sediment disaster. The system of the present invention will be described in detail in first to fourth embodiments described below.

[First Embodiment]

In the first embodiment, a case will be described in which a ground improvement object includes a wireless device, and a distance between the wireless devices is calculated, to detect occurrence of a sediment disaster or possibility of occurrence of a sediment disaster. That is, in the first embodiment, a distance between the ground improvement objects (that is, the distance between the wireless devices) may be information usable for detecting occurrence of a disaster or detecting possibility of occurrence of a disaster.

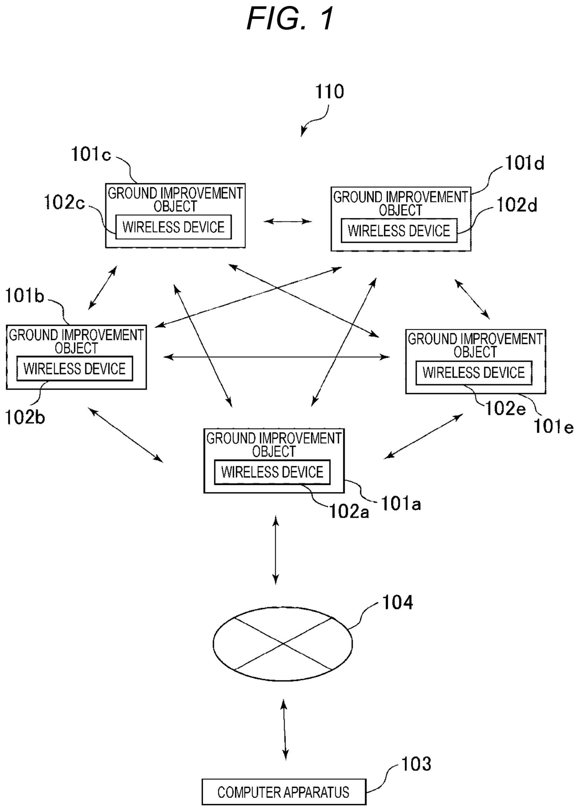

Fig. 1 is a block diagram illustrating a configuration of a system according to the embodiment of the present invention. A system 110 includes ground improvement objects 101 (101a, 101b, 101c, 101d, and 101e), wireless devices 102 (102a, 102b, 102c, 102d, and 102e), and a computer apparatus 103. In addition, the wireless device 102 and the computer apparatus 103 are communicably connected to each other via a communication network 104. In Fig. 1, the wireless device 102a and the computer apparatus 103 are communicably connected. It is sufficient that any one or more of the wireless devices 102 are communicably connected to the computer apparatus 103. In addition, the wireless devices 102 can be connected to each other by wireless communication.

In Fig. 1, one ground improvement object 101 includes one wireless device 102, but one ground improvement object 101 may include two or more wireless devices 102. In addition, in Fig. 1, the system 110 includes the five ground improvement objects 101 and wireless devices 102, but the number of ground improvement objects 101 and wireless devices 102 only needs to be 2 or more. Moreover, the number of computer apparatuses 103 is not particularly limited as long as it is at least 1.

Although not illustrated, the wireless device 102 may also be provided at another predetermined location different from locations where the ground improvement objects 101 are provided. Specifically, the wireless device 102 may be provided on, for example, a steel tower, a utility pole, or the like. It is preferable that the other predetermined location different from the locations where the ground improvement objects 101 are provided is in a place where ground displacement rarely occurs. In addition, the wireless device 102 provided in the ground improvement object 101 and the wireless device 102 installed at the other predetermined location can be connected to each other by wireless communication. In this case, the number of ground improvement objects 101 and wireless devices 102 only needs to be at least 1.

Here, the "ground improvement object" refers to a member for reinforcing the ground. The ground improvement object 101 may be independently insertable into the ground. For example, the ground improvement object 101 may be a rod-like object such as a rock bolt, an anchor, or a pile. In addition, the ground improvement object 101 may include a member for pressing the ground, such as a bearing plate or the like, together with a rock bolt, an anchor, a pile, or the like.

The length of the ground improvement object 101 such as a rock bolt, an anchor, or a pile is not particularly limited, and can be appropriately designed. In addition, the depth of inserting the ground improvement object 101 such as a rock bolt, an anchor, and a pile into the ground is not particularly limited, and can be appropriately designed. The length of the ground improvement object 101 such as a rock bolt, an anchor, and a pile and the depth of inserting the ground improvement object 101 such as a rock bolt, an anchor, and a pile into the ground only need to be designed so as to be able to reinforce the ground according to a place where the ground improvement object 101 is installed. The ground improvement object 101 such as a rock bolt, an anchor, and a pile may be inserted, for example, so as to reach firm ground at a position deeper than soft ground near the surface of a slope or the like.

By inserting the ground improvement object 101 such as a rock bolt, an anchor, and a pile into the ground, an axial force generated in the ground improvement object 101 and a sliding force are balanced on a surface (sliding surface) where the soft ground and the firm ground are in contact with each other, which makes it possible to stabilize solid clods of the slope or the like. In addition, when the ground improvement object 101 such as a rock bolt, an anchor, and a pile is inserted into the ground, grout or the like may be injected into the periphery of the ground improvement object 101. By injecting grout or the like into the periphery of the ground improvement object 101, the periphery of the ground improvement object 101 is solidified, which makes it possible to stabilize the solid clods.

In addition, the shape, material, and diameter size of the ground improvement object 101 such as a rock bolt, an anchor, and a pile are not particularly limited, and can be appropriately designed. For example, the shape of the ground improvement object 101 such as a rock bolt, an anchor, and a pile may be a columnar shape, a triangular prism shape, or a quadrangular prism shape.

The shape, material, and size of the ground improvement object 101 such as a bearing plate are not particularly limited, and can be appropriately designed. The shape, material, and size of the ground improvement object 101 such as a bearing plate only need to be designed so as to be able to press the ground according to the place where the ground improvement object 101 is installed.

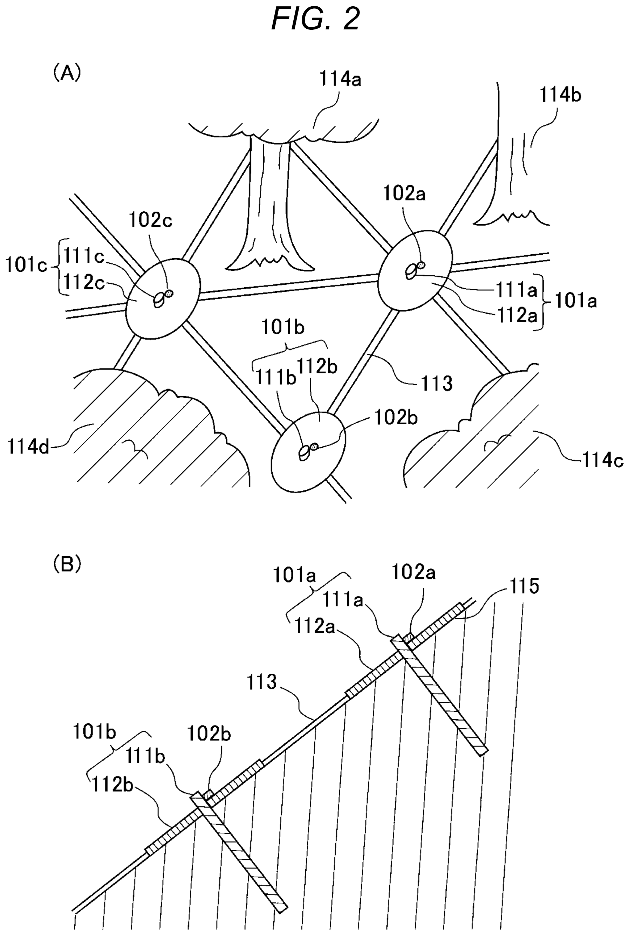

Fig. 2 is a diagram illustrating a system installing method according to the embodiment of the present invention. Fig. 2A is a diagram illustrating an example on the surface of a slope on which trees are growing when the system is installed on the slope. As illustrated in Fig. 2A, the ground improvement object 101a includes the wireless device 102a, the ground improvement object 101b includes the wireless device 102b, and the ground improvement object 101c includes the wireless device 102c. The ground improvement object 101 also includes a rock bolt 111 and a bearing plate 112. In Fig. 2A, the ground improvement object 101 includes the bearing plate 112 having a circular shape centered on the rock bolt 111.

In Fig. 2A, the wireless device 102 is provided in the vicinity of the rock bolt 111 on the bearing plate 112, but the position of the wireless device 102 in the ground improvement object 101 is not particularly limited, and can be appropriately designed. For example, the position where the wireless device 102 is provided may be in the vicinity of a portion of the rock bolt 111 protruding from the ground or in the vicinity of a portion of the rock bolt 111 buried in the ground.

In addition, in Fig. 2A, the bearing plates 112 are connected to each other by a wire rope 113. In Fig. 2A, reference numerals of wire ropes other than the wire rope 113 connecting the bearing plate 112a and the bearing plate 112b are omitted.

Although not illustrated, a cable for communication connection may be installed along the wire rope 113. The cable for communication connection may be an optical fiber cable. By installing the cable for communication connection, stable communication connection can be established between the wireless device 102 and the computer apparatus 103.

Furthermore, although not illustrated, a sensing cable may be installed along the wire rope 113. The sensing cable may be a fiber cable including an optical fiber for sensing. The optical fiber for sensing can detect sound, vibration, temperature, or the like.

The optical fiber sensing is not particularly limited, and known optical fiber sensing can be used. The type of the optical fiber sensing may be distributed type or multipoint type. The optical fiber sensing may be, for example, to observe a change in strain, vibration, or temperature in the optical fiber longitudinal direction by causing an optical pulse to enter from one end of the optical fiber and observing backscattered light generated in the optical fiber.

It is known that earth rumbling or mountain rumbling occurs before a landslide occurs. In addition, a landslide may occur due to ground vibration such as an earthquake. Furthermore, an example is also known in which landslides are activated in the cold season, and it is considered that a temperature change in the ground near a sliding surface can affect the occurrence of a landslide. Therefore, by detecting sound, vibration, and/or temperature by the optical fiber for sensing, it is possible to predict the occurrence of a landslide at an early stage.

Note that the optical fiber for communication connection and the optical fiber for sensing may be the same or different. That is, the same optical fiber may perform both communication connection and sensing, or different optical fibers may be used for communication connection and sensing.

As described above, the system includes the fiber cable including the optical fiber, and a sensor configured to detect sound, vibration, and/or temperature by the optical fiber. As a result, it is possible to predict the occurrence of a landslide at an early stage.

By installing the ground improvement objects 101 so as to avoid trees 114 (114a, 114b, 114c, and 114d) growing on the slope as illustrated in Fig. 2A, the slope can be reinforced without cutting down the trees 114. In addition, as will be described later, ground displacement can be estimated from a distance, a positional relationship, or the like between the wireless devices 102 by providing the wireless devices 102 in the ground improvement objects 101.

Fig. 2B is a diagram illustrating an example in the cross section of the slope on which the trees are growing when the system is installed on the slope. Fig. 2B illustrates a cross-sectional view in a direction perpendicular to the slope, including the ground improvement object 101a and the ground improvement object 101b in Fig. 2A. As illustrated in Fig. 2B, of the ground improvement object 101, the rock bolt 111 is inserted into the ground, and the bearing plate 112 is placed on a slope 115.

In Fig. 2B, the rock bolt 111 is inserted into the ground so as to be substantially perpendicular to the slope 115, but an angle at which the rock bolt 111 is inserted is not particularly limited, and can be appropriately designed.

In addition, in Fig. 2B, the wireless device 102 is provided in the vicinity of the rock bolt 111 on the bearing plate 112, so that the state of the slope 115 can be estimated from the positional relationship of the wireless devices 102 as described later.

The wireless device 102 can be connected to the wireless device 102 provided in another ground improvement object 101 by communication. In addition, the wireless device 102 can be connected to the computer apparatus 103 by communication.

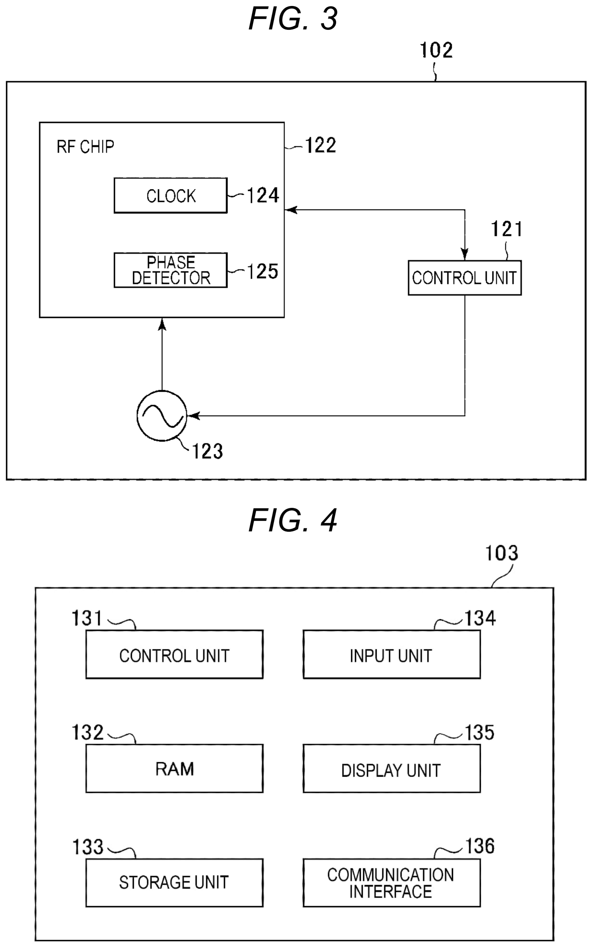

Fig. 3 is a block diagram illustrating a hardware configuration of the wireless device according to the embodiment of the present invention. The wireless device 102 includes a control unit 121, an RF chip 122, an oscillator 123, a clock 124, and a phase detector 125. The RF chip 122 includes the clock 124 and the phase detector 125. The wireless device 102 may include an element other than the control unit 121, the RF chip 122, the oscillator 123, the clock 124, and the phase detector 125 as necessary.

The control unit 121 is not particularly limited, but for example, a microcomputer (microcontroller) can be used. The control unit 121 performs program execution processing based on a program and data. The RF chip 122 executes reception and transmission processing of a radio signal. Data received by the RF chip 122 is subjected to arithmetic processing by the control unit 121.

The oscillator 123 oscillates at a predetermined frequency and outputs a signal for giving an operational timing of each unit of the device. As the oscillator 123, an atomic oscillator or a crystal oscillator can be used. The clock 124 clocks the output signal of the oscillator 123 as a vibration source and outputs time. The time clocked by the clock 124 is controlled by the control unit 121 so as to be transmitted to another wireless device 102 via the RF chip 122. The phase detector 125 detects the phase of a carrier wave constituting information received from the other wireless device 102, and detects the phase of the signal oscillated by the oscillator 123 in the wireless device 102.

Hereinafter, the clock 124 provided in the wireless device 102 is also referred to as an internal clock of the wireless device 102.

Fig. 4 is a block diagram illustrating a hardware configuration of the computer apparatus according to the embodiment of the present invention. The computer apparatus 103 includes a control unit 131, a RAM 132, a storage unit 133, an input unit 134, a display unit 135, and a communication interface 136, which are connected by a bus.

The control unit 131 includes a CPU and a ROM. The control unit 131 executes a program stored in the storage unit 133 and controls the computer apparatus 103. The RAM 132 is a work area of the control unit 131. The storage unit 133 is a storage region for saving programs and data. That is, the storage unit 133 functions as a recording medium storing programs. The control unit 131 executes arithmetic processing on the basis of a program and data read from the RAM 132 and data input by the input unit 134.

The display unit 135 has a display screen. The control unit 131 outputs a video signal for displaying an image on the display screen according to the result of arithmetic processing. Here, the display screen of the display unit 135 may be a touch panel including a touch sensor. In this case, the touch panel functions as the input unit 134.

The communication interface 136 can be connected to a communication network in a wireless or wired manner, and can transmit and receive data to and from another computer apparatus via the communication network. Data received via the communication interface 136 is loaded into the RAM 132, and arithmetic processing is performed by the control unit 131.

Note that the program may be stored in a recording medium such as a CD-ROM. In this case, the program stored in the recording medium may be installed in the wireless device 102 or the computer apparatus 103 to execute a predetermined function.

Alternatively, the program may be distributed from a computer apparatus outside the system. In this case, the program distributed from the computer apparatus outside the system may be installed in the wireless device 102 or the computer apparatus 103 to execute a predetermined function.

Hereinafter, an aspect of observing ground displacement by the system of the present invention will be described.

The wireless device 102 provided in the ground improvement object 101 transmits and receives a signal to and from the wireless device 102 provided in another ground improvement object 101 at predetermined intervals. The predetermined interval is not particularly limited, and can be appropriately designed. For example, the transmission and reception of a signal may be performed at intervals of 1 minute, at intervals of 10 minutes, or at intervals of 60 minutes.

The wireless device 102 can calculate a distance between the wireless devices 102 by transmitting and receiving a signal to and from the other wireless device 102. The wireless devices 102 are provided in the ground improvement objects 101. Thus, in a case where the distance between the wireless devices 102 changes, there is a possibility that displacement occurs in the ground on which the ground improvement objects 101 are installed.

The distance between the wireless devices 102 is calculated on the basis of a propagation time of communication between the wireless devices 102. For example, the distance between the wireless devices 102 can be calculated by multiplying the propagation time of communication between the wireless devices 102 by a propagation speed of the communication.

The propagation time of the communication between the wireless devices 102, that is, the propagation time of a signal can be calculated by transmitting and receiving a signal between the wireless devices 102 and obtaining a difference between a transmission time of the signal and a reception time of the signal. The transmission time of the signal and the reception time of the signal are clocked by the internal clocks provided in the wireless devices 102. Therefore, the smaller a time deviation of the internal clock between the wireless devices 102, the more accurately the propagation time can be calculated.

In addition, with regard to the phase of the internal clock provided in the wireless device 102, that is, the phase of a signal oscillated by the oscillator 123 in the wireless device 102, there may be a deviation between the wireless devices 102. Hereinafter, the phase of the internal clock provided in the wireless device 102 is also referred to as a phase of the wireless device 102. In addition, the phase deviation of the internal clock between the wireless devices 102 is also referred to as a phase deviation between the wireless devices 102.

Note that the phase of the signal oscillated by the oscillator 123 in the wireless device 102 is considered to be substantially equal to the phase of a carrier wave constituting information transmitted by the wireless device 102.

Hereinafter, an example of calculating the distance between the wireless devices 102 after correcting the phase deviation of the internal clock between the wireless devices 102 and correcting the time deviation of the internal clock between the wireless devices 102 will be described. Here, the wireless devices 102 that transmit and receive signals are referred to as a first wireless device 102 and a second wireless device 102. In addition, the first wireless device 102 calculates a distance between the first wireless device 102 and the second wireless device 102.

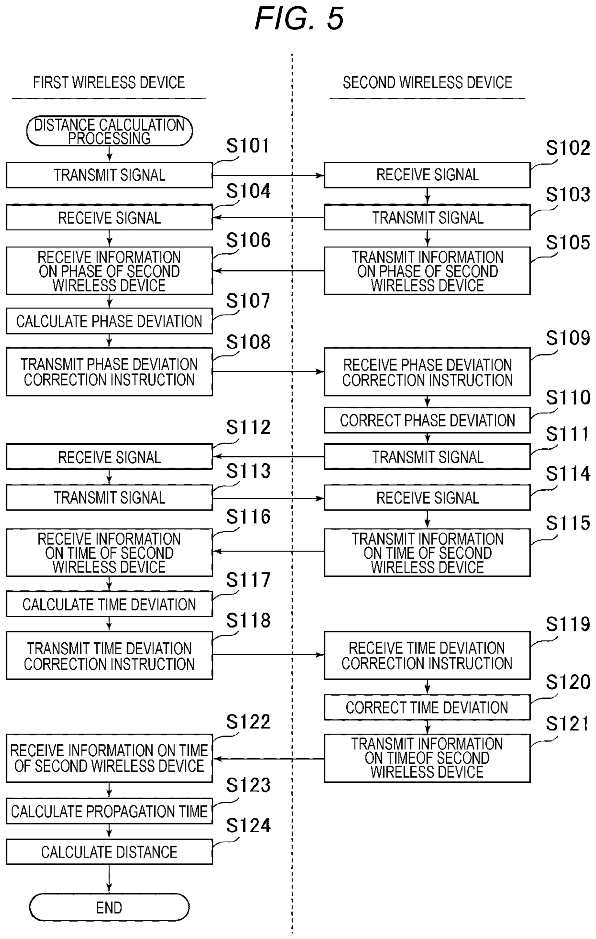

Fig. 5 is a diagram illustrating a flowchart of distance calculation processing according to the embodiment of the present invention.

First, the first wireless device 102 transmits a signal to the second wireless device 102 (step S101). Then, the second wireless device 102 receives the transmitted signal (step S102). Next, the second wireless device 102 transmits a signal to the first wireless device 102 (step S103). Then, the first wireless device 102 receives the transmitted signal (step S104).

After step S103 is performed, the second wireless device 102 transmits information on the phase of the second wireless device 102 to the first wireless device 102 (step S105). Then, the first wireless device 102 receives the transmitted phase information (step S106). The first wireless device 102 calculates the phase deviation between the first wireless device 102 and the second wireless device 102 (step S107). Next, the first wireless device 102 transmits an instruction to correct the phase deviation (hereinafter also referred to as a phase deviation correction instruction) of the second wireless device 102 to the second wireless device 102 (step S108). The second wireless device 102 receives the transmitted phase deviation correction instruction (step S109). Then, the second wireless device 102 corrects the phase deviation of the second wireless device 102 (step S110).

The signal in step S101 may include a signal transmission request for requesting the first wireless device 102 that has transmitted the signal to transmit a signal.

In addition, when the first wireless device 102 transmits the signal in step S101, the first wireless device 102 may measure a phase when the signal is transmitted and store the phase in the memory in the control unit 121 of the first wireless device 102. The phase when the signal is transmitted may be the phase of a carrier wave constituting the transmitted signal.

Furthermore, when the second wireless device 102 receives the signal in step S102, the second wireless device 102 may measure a phase when the signal is received and store the phase in the memory in the control unit 121 of the second wireless device 102. The phase when the signal is received may be the phase of a signal oscillated by the oscillator 123 of the second wireless device 102 when the signal is received.

In addition, when the second wireless device 102 transmits the signal in step S103, the second wireless device 102 may measure a phase when the signal is transmitted and store the phase in the memory in the control unit 121 of the second wireless device 102. The phase when the signal is transmitted may be the phase of a carrier wave constituting the transmitted signal.

Furthermore, when the first wireless device 102 receives the signal in step S104, the first wireless device 102 may measure a phase when the signal is received and store the phase in the memory in the control unit 121 of the first wireless device 102. The phase when the signal is received may be the phase of a signal oscillated by the oscillator 123 of the clock of the first wireless device 102 when the signal is received.

The information on the phase of the second wireless device 102 transmitted to the first wireless device 102 in step S105 may include information on the phase when the second wireless device 102 receives the signal in step S102 and information on the phase when the second wireless device 102 transmits the signal in step S103.

In step S107, the phase deviation can be calculated on the basis of a phase difference between the phase of the carrier wave constituting the signal transmitted from the first wireless device 102 to the second wireless device 102 and the phase of the signal oscillated by the oscillator 123 of the second wireless device 102 when the signal is received by the second wireless device 102, and a phase difference between the phase of the carrier wave constituting the signal transmitted from the second wireless device 102 to the first wireless device 102 and the phase of the signal oscillated by the oscillator 123 of the clock of the first wireless device 102 when the signal is received by the first wireless device 102.

The phase of the carrier wave constituting the signal transmitted from the first wireless device 102 to the second wireless device 102 is the phase of the signal transmitted in step S101. The phase of the signal oscillated by the oscillator 123 of the second wireless device 102 when the signal is received by the second wireless device 102 is the phase of the signal received in step S102. The phase of the carrier wave constituting the signal transmitted from the second wireless device 102 to the first wireless device 102 is the phase of the signal transmitted in step S103. The phase of the signal oscillated by the oscillator 123 of the clock of the first wireless device 102 when the signal is received by the first wireless device 102 is the phase of the signal received in step S104.

A phase difference $\Delta\Phi_P$ generated by the signal propagating between the first wireless device 102 and the second wireless device 102 can be calculated from the arithmetic mean of a phase difference $\Delta\Phi_M$ and a phase difference $\Delta\Phi_F$, by defining: as $\Delta\Phi_M$, the phase difference between the phase of the carrier wave constituting the signal transmitted from the first wireless device 102 to the second wireless device 102 and the phase of the signal oscillated by the oscillator 123 of the second wireless device 102 when the signal is received by the second wireless device 102; and as $\Delta\Phi_F$, the phase difference between the phase of the carrier wave constituting the signal transmitted from the second wireless device 102 to the first wireless device 102 and the phase of the signal oscillated by the oscillator 123 of the first wireless device 102 when the signal is received by the first wireless device 102. That is, the phase difference $\Delta\Phi_P$ can be calculated by Equation (1): $\Delta\Phi_P = 1/2 \times (\Delta\Phi_M + \Delta\Phi_F)$.

When the phase deviation between the first wireless device 102 and the second wireless device 102 is defined as $\Delta\Phi_C$, the relationship expressed by Equation (2): $\Delta\Phi_F = \Delta\Phi_P + (-\Delta\Phi_C)$ is established, so that the phase deviation $\Delta\Phi_C$ can be calculated by subtracting the phase difference $\Delta\Phi_F$ from the phase difference $\Delta\Phi_P$. That is, the phase difference $\Delta\Phi_C$ can be calculated by Equation (3): $\Delta\Phi_C = 1/2 \times (\Delta\Phi_M - \Delta\Phi_F)$. In step S107, the phase deviation between the first wireless device 102 and the second wireless device 102 may be calculated using Equation (3).

Here, the phase deviation $\Delta\Phi_C$ is calculated by Equation (3), but in some cases, the phase deviation $\Delta\Phi_C$ to be calculated may be obtained by further subtracting $2\pi$ or $4\pi$, that is, $2n\pi$. n may take zero or a positive integer. Therefore, it is also possible to specify whether n is zero, or an integer such as 1 or 2 (that is, whether the value obtained by further subtracting $2n\pi$ from the phase difference $\Delta\Phi_C$ obtained by Equation (3) is the original phase deviation or whether the value not subtracted is the original phase deviation) on the basis of a propagation time to be described later or a time deviation between the first wireless device 102 and the second wireless device 102.

There may be a case in which the signal transmitted from the first wireless device 102 to the second wireless device 102 and the signal transmitted from the second wireless device 102 to the first wireless device 102 start with an output that is not zero but is an arbitrary value at the start of transmission. In such a case, it is necessary to correct the phase deviation $\Delta\Phi_C$ by measuring the phase at the start of transmission and the transmission time. Meanwhile, by configuring such that the phase at the start of transmission is always constant and transmission is performed at a predetermined time, it is possible to omit such a processing of correcting $\Delta\Phi_C$ after measuring the phase at the start of transmission and the transmission time.

The phase deviation correction instruction in step S108 may be an instruction to correct the phase of the second wireless device 102 so as to be synchronized with the phase of the first wireless device 102.

In step S110, the second wireless device 102 may correct the phase of the second wireless device 102 so as to be synchronized with the phase of the first wireless device 102 on the basis of the calculated phase deviation $\Delta\Phi_C$. That is, the second wireless device 102 may correct the phase of the signal generated by the oscillator 123 of the second wireless device 102 so as to be synchronized with the signal generated by the oscillator 123 of the first wireless device 102 on the basis of the calculated phase deviation $\Delta\Phi_C$. The correction of the phase in step S110 is controlled and executed by the control unit 121 of the second wireless device 102.

In this manner, the phase of the second wireless device 102 is corrected so as to match the phase of the first wireless device 102, and therefore the frequencies of the clock 124 of the second wireless device 102 and the clock 124 of the first wireless device 102 are also adjusted. That is, the phase is locked. When the phase lock is established, the clock 124 of the second wireless device 102 and the clock 124 of the first wireless device 102 clock time at the same frequency. Here, an example of calculating and correcting the time deviation between the second wireless device 102 and the first wireless device 102 in a state where the phase lock is established will be described. While the phase lock continues, a time difference between the clock 124 of the second wireless device 102 and the clock 124 of the first wireless device 102 does not change, so that it is possible to accurately compare the times.

After the phase deviation of the second wireless device 102 is corrected in step S110, the second wireless device 102 transmits a signal to the first wireless device 102 (step S111). Then, the first wireless device 102 receives the transmitted signal (step S112). Next, the first wireless device 102 transmits a signal to the second wireless device 102 (step S113). Then, the second wireless device 102 receives the transmitted signal (step S114).

Next, the second wireless device 102 transmits information on the time of the second wireless device 102 to the first wireless device 102 (step S115). Then, the first wireless device 102 receives the transmitted time information (step S116). The first wireless device 102 calculates the time deviation between the first wireless device 102 and the second wireless device 102 (step S117). Next, the first wireless device 102 transmits an instruction to correct the time deviation (hereinafter also referred to as a time deviation correction instruction) of the second wireless device 102 to the second wireless device 102 (step S118). The second wireless device 102 receives the transmitted time deviation correction instruction (step S119). Then, the second wireless device 102 corrects the time deviation of the second wireless device 102 (step S120).

The signal in step S111 may include a signal transmission request for requesting the second wireless device 102 that has transmitted the signal to transmit a signal.

In addition, when the second wireless device 102 transmits the signal in step S111, the second wireless device 102 may clock a time at which the signal is transmitted and store the time in the memory in the control unit 121 of the second wireless device 102.

Furthermore, when the first wireless device 102 receives the signal in step S112, the first wireless device 102 may clock a time at which the signal is received and store the time in the memory in the control unit 121 of the first wireless device 102.

In addition, when the first wireless device 102 transmits the signal in step S113, the first wireless device 102 may clock a time at which the signal is transmitted and store the time in the memory in the control unit 121 of the first wireless device 102.

Furthermore, when the second wireless device 102 receives the signal in step S114, the second wireless device 102 may clock a time at which the signal is received and store the time in the memory in the control unit 121 of the second wireless device 102.

The information on the time of the second wireless device 102 transmitted to the first wireless device 102 in step S115 may include information on the time at which the second wireless device 102 transmits the signal in step S111 and information on the time at which the second wireless device 102 receives the signal in step S114.

In step S107, the time deviation can be calculated on the basis of the time at which the second wireless device 102 transmits the signal to the first wireless device 102, the time at which the first wireless device 102 receives the signal, the time at which the first wireless device 102 transmits the signal to the second wireless device 102, and the time at which the second wireless device 102 receives the signal.

The time at which the first wireless device 102 transmits the signal to the second wireless device 102 is the time at which the signal is transmitted in step S111. The time at which the first wireless device 102 receives the signal is the time at which the signal is received in step S112. The time at which the first wireless device 102 transmits the signal to the second wireless device 102 is the time at which the signal is transmitted in step S113. The time at which the second wireless device 102 receives the signal is the time at which the signal is received in step S114.

A time deviation $T_L$ between the first wireless device 102 and the second wireless device 102 can be calculated by Equation (4): $T_L = 1/2 \times ((T_{MF} - T_M) - (T_{FM} - T_F))$, by defining: as $T_M$, the time at which the second wireless device 102 transmits the signal to the first wireless device 102; as $T_{MF}$, the time at which the first wireless device 102 receives the signal; as $T_F$, the time at which the first wireless device 102 transmits the signal to the second wireless device 102; and as $T_{FM}$, the time at which the first wireless device 102 receives the signal. In step S117, the time deviation $T_L$ between the first wireless device 102 and the second wireless device 102 may be calculated by Equation (4).

The time deviation correction instruction in step S118 may be an instruction to correct the time of the second wireless device 102 so as to be synchronized with the time of the first wireless device 102.

In step S120, the second wireless device 102 may correct the time of the second wireless device 102 so as to be synchronized with the time of the first wireless device 102 on the basis of the calculated time deviation $T_L$.

After the time deviation of the second wireless device 102 is corrected in step S120, the second wireless device 102 transmits information on the time of the second wireless device 102 to the first wireless device 102 (step S121). Then, the first wireless device 102 receives the transmitted time information (step S122). Next, the first wireless device 102 calculates the propagation time of communication between the first wireless device 102 and the second wireless device 102 (step S123). Then, the first wireless device 102 calculates the distance between the first wireless device 102 and the second wireless device 102 (step S124), and the distance calculation processing ends.

The information on the time of the second wireless device 102 in step S121 may include information on a time at which the second wireless device 102 transmits the information.

In step S123, the first wireless device 102 can calculate the propagation time of communication between the second wireless device 102 and the first wireless device 102 from a difference between a time at which the second wireless device 102 transmits the information in step S121 and a time at which the first wireless device 102 receives the information in step S122.

In step S124, the first wireless device 102 can calculate the distance between the second wireless device 102 and the first wireless device 102 by multiplying the propagation time calculated in step S123 by the propagation speed of the communication (for example, the speed of light).

As described above, the system includes the two or more ground improvement objects, the ground improvement objects including the wireless devices, the system including a distance calculator configured to calculate a distance between the wireless devices on the basis of a propagation time of communication between the wireless devices, wherein the distance calculator calculates the distance on the basis of a time deviation of the internal clock between the wireless devices. As a result, it is possible to provide the system for observing ground displacement.

In addition, as described above, the system includes: a time deviation calculator configured to calculate a time deviation between the internal clocks provided in the wireless devices by transmitting and receiving a signal between the wireless devices; and a time deviation corrector configured to correct a time deviation of the internal clock provided in the wireless device on the basis of the calculated time deviation, wherein a distance calculator calculates a distance after the time deviation corrector corrects the time deviation. As a result, the distance between the wireless devices can be accurately calculated.

In addition, as described above, the system includes: a phase deviation calculator configured to calculate a phase deviation between the internal clocks provided in the wireless devices by transmitting and receiving a signal between the wireless devices; and a phase deviation corrector configured to correct a phase deviation of the internal clock provided in the wireless device on the basis of the calculated phase deviation, wherein the time deviation calculator calculates the time deviation after the phase deviation corrector corrects the phase deviation. As a result, the distance between the wireless devices can be calculated more accurately.

In the above description, an aspect has been described in which the first wireless device 102 calculates the phase deviation, gives the phase deviation correction instruction, calculates the time deviation, gives the time deviation correction instruction, calculates the propagation time, and calculates the distance. However, the calculation of the phase deviation, the phase deviation correction instruction, the calculation of the time deviation, the time deviation correction instruction, the calculation of the propagation time, and/or the calculation of the distance may be executed by the second wireless device 102 and/or the computer apparatus 103. In this case, the information necessary for each processing may be transmitted to the apparatus that executes each processing.

For example, the second wireless device 102 may calculate the distance between the second wireless device 102 and the first wireless device 102.

Note that the method of calculating the phase deviation and the time deviation between the second wireless device 102 and the first wireless device 102 can be appropriately designed regardless of the above description. That is, the number of times of transmission and reception of signals between the second wireless device 102 and the first wireless device 102 and the content of information transmitted and received between the second wireless device 102 and the first wireless device 102 are not particularly limited. It is sufficient that the phase deviation and the time deviation between the second wireless device 102 and the first wireless device 102 can be calculated.

In addition, in the above description, an aspect has been described in which the distance is calculated after correcting the phase deviation and the time deviation between second wireless device 102 and the first wireless device 102, but the distance may be calculated without correcting the phase deviation and/or the time deviation between the second wireless device 102 and the first wireless device 102.

For example, the distance may be calculated by correcting the time deviation between the second wireless device 102 and the first wireless device 102 without correcting the phase deviation between the second wireless device 102 and the first wireless device 102. In this case, steps S103 to S110 may not be performed.

Alternatively, for example, the distance may be calculated without correcting the phase deviation and the time deviation between the second wireless device 102 and the first wireless device 102. Specifically, for example, after correcting the phase deviation and the time deviation between the second wireless device 102 and the first wireless device 102, the distance may be calculated without correcting the phase deviation and the time deviation again within a predetermined time. Alternatively, for example, the distance may be calculated on the basis of the propagation time of a case where the phase deviation and the time deviation are theoretically corrected without actually correcting the phase deviation and the time deviation between the second wireless device 102 and the first wireless device 102.

A time deviation in a common clock is said to be less than one second per day. Therefore, within a predetermined time after correcting the phase deviation and the time deviation between the second wireless device 102 and the first wireless device 102, the phase and time of the internal clock provided in the second wireless device 102 and the phase and time of the internal clock provided in the first wireless device 102 are considered to be equivalent to those when the phase deviation and the time deviation are corrected.

Therefore, after correcting the phase deviation and the time deviation between the second wireless device 102 and the first wireless device 102, the propagation time when the phase deviation and the time deviation are corrected can be calculated by steps S121 to S123 without correcting the phase deviation and the time deviation again by steps S103 to S120 within a predetermined time.

The predetermined time may be 1 minute, 5 minutes, 10 minutes, 20 minutes, or 30 minutes.

In addition, the distance may be calculated by calculating the propagation time of a case where the phase deviation and the time deviation are theoretically corrected on the basis of the calculated phase deviation and time deviation without actually correcting the phase deviation and the time deviation between the second wireless device 102 and the first wireless device 102. In this case, by clocking and storing the time at which the signal is transmitted and/or received in steps S101 to S104 and transmitting the information on the time in step S105, steps S108 to S116 and steps S118 to S122 can be omitted.

That is, as long as the distance between the second wireless device 102 and the first wireless device 102 is calculated on the basis of the time deviation between the internal clock provided in the second wireless device 102 and the internal clock provided in the first wireless device 102, the phase deviation and the time deviation between the second wireless device 102 and the first wireless device 102 may or may not be corrected.

In addition, in the above description, an example has been described in which the distance between the second wireless device 102 and the first wireless device 102 is calculated by calculating the propagation time of the communication between the second wireless device 102 and the first wireless device 102, and multiplying the calculated propagation time by the propagation speed of the communication. However, the aspect of calculating the distance between the second wireless device 102 and the first wireless device 102 is not limited to this example.

For example, a signal may be transmitted and received between the second wireless device 102 and the first wireless device 102 without calculating the propagation time of the communication between the second wireless device 102 and the first wireless device 102, and the distance between the second wireless device 102 and the first wireless device 102 may be calculated from the transmission time of the signal, the reception time of the signal, and the propagation speed of the signal. In this case, the distance between the second wireless device 102 and the first wireless device 102 may be calculated in step S124 on the basis of the transmission time of the information in step S121, the reception time of the information in step S122, and the propagation speed of the information without performing step S123.

That is, the distance between the second wireless device 102 and the first wireless device 102 only needs to be calculated on the basis of the propagation time based on the time deviation between the internal clock provided in the second wireless device 102 and the internal clock provided in the first wireless device 102.

Furthermore, in the above description, an example has been described in which correction is performed so that the phase and time of the internal clock provided in the second wireless device 102 are synchronized with the phase and time of the internal clock provided in the first wireless device 102. However, the aspect of correcting the phase deviation and the time deviation is not limited to this example. It is sufficient that the phase deviation and the time deviation between the internal clock provided in the second wireless device 102 and the internal clock provided in the first wireless device 102 are corrected. For example, correction may be performed so that the phase and time of the internal clock provided in the first wireless device 102 are synchronized with the phase and time of the internal clock provided in the second wireless device 102, or both the internal clock provided in the first wireless device 102 and the internal clock provided in the second wireless device 102 may be corrected so as to be synchronized with each other.

In a case where the wireless device 102 is also provided at another predetermined location different from the location where the ground improvement object 101 is provided, a distance between the wireless devices 102 can be calculated on the basis of a propagation time of communication between the wireless device 102 provided in the ground improvement object 101 and the wireless device 102 installed at the other predetermined location. Also in this case, the distance can be calculated on the basis of a time deviation of the internal clock between the wireless device 102 provided in the ground improvement object 101 and the wireless device 102 installed at the other predetermined location. As the aspect of calculating the distance between the wireless devices 102, the description of the distance calculation processing described above can be adopted within a necessary range.

As described above, the system includes the wireless device provided in the ground improvement object and the wireless device installed at another predetermined location, the system including a distance calculator configured to calculate a distance between the wireless devices on the basis of a propagation time of communication between the wireless devices, wherein the distance calculator calculates the distance on the basis of a time deviation of the internal clock between the wireless devices. As a result, it is possible to provide the system for observing ground displacement.

That is, the system 110 includes the two or more wireless devices 102 and calculates the distance between the wireless devices 102, which makes it possible to predict the possibility of ground displacement at the locations where the wireless devices 102 are provided.

In a case where the system 110 includes two wireless devices, it is possible to specify a positional relationship of the wireless devices on a straight line including two points when each wireless device is regarded as a point. In addition, in a case where the system 110 includes three wireless devices, it is possible to specify a positional relationship of the wireless devices on a plane including three points when each wireless device is regarded as a point. Furthermore, in a case where the system 110 includes four wireless devices, it is possible to specify a positional relationship of the wireless devices in a space including four points, that is, a relative positional relationship of one point with respect to the other three points when each wireless device is regarded as a point. Moreover, in a case where the system 110 includes five or more wireless devices, it is possible to specify a positional relationship of the wireless devices in an xyz space, that is, position coordinates when each wireless device is regarded as a point.

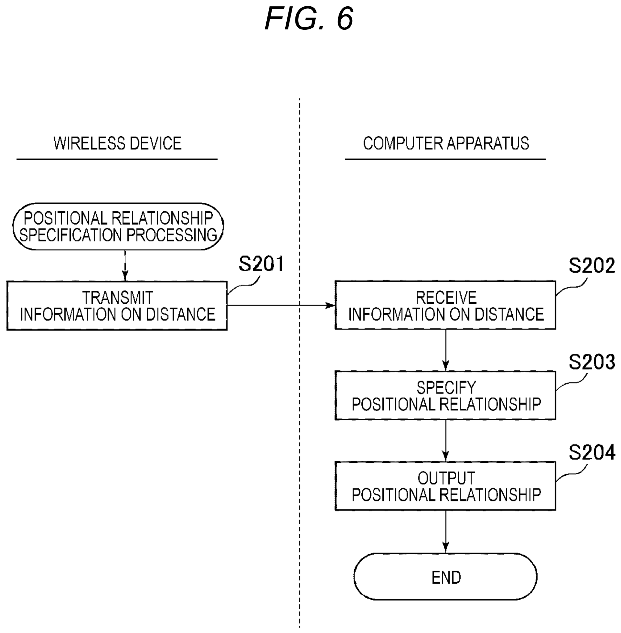

Fig. 6 is a diagram illustrating a flowchart of positional relationship specification processing according to the embodiment of the present invention.

First, the wireless device 102 that has calculated the distance between the wireless devices 102 transmits information on the calculated distance to the computer apparatus 103 (step S201). The computer apparatus 103 receives the transmitted information on the distance between the wireless devices 102 (step S202). The computer apparatus 103 specifies the positional relationship of the wireless devices 102 on the basis of the distance between the wireless devices 102 (step S203). The computer apparatus 103 outputs the specified positional relationship of the wireless devices 102 (step S204), and the positional relationship specification processing ends.

Fig. 6 illustrates the process of transmitting the information on the distance from one wireless device 102 to the computer apparatus 103. However, after calculating the distance between the wireless devices 102, the wireless devices 102 that have calculated the distance between the wireless devices 102 each transmit the information on the distance between the wireless devices 102 to the computer apparatus 103.

It is preferable that the distance between which wireless devices 102 is calculated and/or which wireless device 102 calculates the distance between the wireless devices 102 among the wireless devices 102 provided in the system 110 is determined in advance. In addition, it is preferable that the time of the internal clock of which wireless device 102 the time deviation and/or the phase deviation between the wireless devices 102 is corrected according to is determined in advance.

The information on the distance between the wireless devices 102 transmitted in step S201 may include information on the distance between the wireless devices 102 calculated in step S124 of the distance calculation processing, a time at which the distance is calculated, and the like. Regarding the distance between the wireless devices 102 used for specifying the positional relationship of the wireless devices 102, it is preferable that times at which the distance between the wireless devices 102 is calculated are synchronized. Then, in step S203, the positional relationship of the wireless devices 102 may be specified on the basis of the plurality of distances between the wireless devices 102 calculated at the same time.

In step S203, the method of specifying the positional relationship of the wireless devices 102 on the basis of the distance between the wireless devices 102 is not particularly limited, and a known method can be adopted. For example, in a case where the system 110 includes the four or more wireless devices 102 and specifies the positional relationship of the wireless devices 102 on the basis of the distances between the respective wireless devices 102, the positional relationship of the respective wireless devices 102 may be specified by three-point positioning. In addition, in a case where the positional relationship of the wireless devices 102 is specified by using position information of the wireless devices 102 by GNSS, information on an inclination angle of the slope by an inclination sensor, or the like together with the information on the distance between the wireless devices 102, the required number of wireless devices 102 is smaller than the above. In order to specify the positional relationship of the wireless devices 102, the system 110 only needs to include the required number of wireless devices 102 according to the type of information that can be used.

In addition, in a case where the system 110 includes the wireless device 102 at another predetermined location different from the location where the ground improvement object 101 is provided, and the position of the wireless device 102 provided at the other predetermined location is specified in advance, the position of another wireless device 102 may be specified with reference to the wireless device 102 whose position is specified in advance. Alternatively, the position of the wireless device 102 may be specified by using the position information of the wireless device 102 by GNSS, the information on an inclination angle of the slope by an inclination sensor, or the like together with the distance between the wireless devices 102.

Here, the "position" refers to an absolute position represented by latitude, longitude, altitude, and the like. In addition, the "positional relationship" refers to a relative positional relationship represented by the relationship of the positions of respective objects.

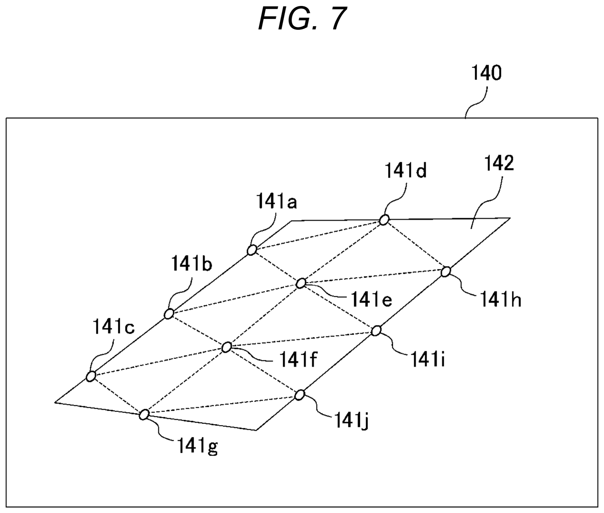

In step S204, the positional relationship of the wireless devices 102 may be displayed on the display screen of the computer apparatus 103. Fig. 7 is a diagram illustrating an example of the display screen of the system according to the embodiment of the present invention.

In Fig. 7, an execution screen 140 indicating the positional relationship of the wireless devices 102 is displayed on the display screen of the computer apparatus 103. On the execution screen 140, icons 141 (141a to 141j) corresponding to the positions of the wireless devices 102 are indicated by circles. The length of a dotted line connecting the icons 141 corresponds to the distance between the wireless devices 102. In addition, in Fig. 7, a plane including all the icons 141 is displayed as a plane 142. In a case where the wireless devices 102 are installed along the slope 115 as illustrated in Fig. 2, the plane 142 is considered to correspond to the state of the slope 115.

By displaying the positional relationship of the wireless devices 102 as illustrated in Fig. 7, it is possible to visually grasp the positional relationship of the wireless devices 102.

In addition, it is preferable that the storage unit 133 of the computer apparatus 103 stores a positional relationship between the ground improvement object 101 and the wireless device 102 and/or a positional relationship between the wireless device 102 and the slope 115. Since the positional relationship between the ground improvement object 101 and the wireless device 102 and/or the positional relationship between the wireless device 102 and the slope 115 is stored, it is possible to estimate the positional relationship of the ground improvement objects 101 and/or the state of the slope 115 on the basis of the positional relationship of the wireless devices 102. The estimated positional relationship of the ground improvement objects 101 and/or the estimated state of the slope 115 may be able to be displayed on the display screen of the computer apparatus 103.

As described above, the system includes a positional relationship specifier configured to specify a positional relationship of the wireless devices on the basis of the calculated distance between the wireless devices. As a result, it is possible to estimate the state of the ground on the basis of the positional relationship of the wireless devices.

Since the system of the present invention calculates the distance between the wireless devices 102 at predetermined time intervals, it is possible to specify a change in the distance between the wireless devices 102 and/or a change in the positional relationship of the wireless devices 102. In addition, in a case where a change amount of the distance between the wireless devices 102 and/or a change amount of the positional relationship of the wireless devices 102 satisfy a predetermined condition, a notification may be output.

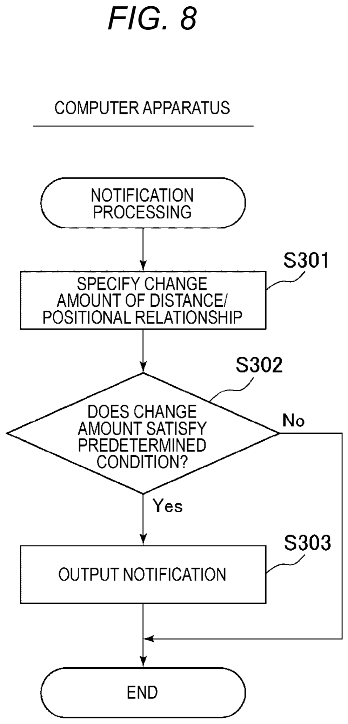

Fig. 8 is a diagram illustrating a flowchart of notification processing according to the embodiment of the present invention.

First, the computer apparatus 103 specifies the change amount of the received distance between the wireless devices 102 and/or the change amount of the specified positional relationship of the wireless devices 102 (step S301). The computer apparatus 103 determines whether or not the specified change amount satisfies a predetermined condition (step S302). When determining that the specified change amount satisfies the predetermined condition (Yes in step S302), the computer apparatus 103 outputs a notification (step S303), and the notification processing ends. On the other hand, when it is not determined that the specified change amount satisfies the predetermined condition (No in step S302), step S303 is not performed, and the notification processing ends.

In step S301, it is sufficient that the change amount before and after a predetermined time is specified. The predetermined time is not particularly limited, and can be appropriately designed. The predetermined time may be 10 minutes, 1 hour, or 24 hours. In a case where the predetermined time is 1 hour, for example, the change amount between the distance between the wireless devices 102 and/or the positional relationship of the wireless devices 102 one hour ago and the current distance between the wireless devices 102 and/or the current positional relationship of the wireless devices 102 may be specified. Hereinafter, the distance between the wireless devices 102 and/or the positional relationship of the wireless devices 102 before the time for specifying the change amount is also referred to as a "distance between the wireless devices 102 and/or positional relationship of the wireless devices 102 before change". In addition, the distance between the wireless devices 102 and/or the positional relationship of the wireless devices 102 after the time for specifying the change amount is also referred to as a "distance between the wireless devices 102 and/or positional relationship of the wireless devices 102 after change".

The system 110 may perform control so as to calculate the distance between the wireless devices 102 according to an interval of the time for specifying the change amount. For example, a signal for controlling a time interval for calculating the distance between the wireless devices 102 may be transmitted from the computer apparatus 103 to the wireless device 102. In addition, the interval of the time for specifying the change amount may be changed according to the change amount specified in step S301. For example, in a case where the change amount is larger than a predetermined value, there is a high possibility that ground displacement is occurring. Thus, the change amount may be specified by calculating the distance between the wireless devices 102 at a shorter time interval than in a case where the change amount is smaller than the predetermined value. Note that the predetermined value at the time of determining whether to change the interval of the time for specifying the change amount may be the same as or different from a predetermined value at the time of determining whether to output the notification in step S302.

In step S301, the change amount of the distance between the wireless devices 102 may be represented by length. In addition, the change amount of the positional relationship of the wireless devices 102 may be represented by, for example, a change amount of an x coordinate, a y coordinate, and/or a z coordinate. Furthermore, in a case where the change amount of the positional relationship of the wireless devices 102 is specified, the direction of change may be specified together with the change amount. In this case, the change amount of the positional relationship of the wireless devices 102 may be represented by a vector.

The predetermined condition in step S302 is not particularly limited, and can be appropriately designed. For example, the predetermined condition may be that the change amount of the distance between the wireless devices 102 is larger than a predetermined value, the change amount of the distance between the wireless devices 102 is equal to or larger than a predetermined value, the change amount of the positional relationship of the wireless devices 102 is larger than a predetermined value, the change amount of the positional relationship of the wireless devices 102 is equal to or larger than a predetermined value, or the like. In a case where the change amount of the distance between the wireless devices 102 and/or the change amount of the positional relationship of the wireless devices 102 is large, it is considered that the risk of occurrence of a sediment disaster is high.

In step S303, the notification may be displayed on the display screen of the computer apparatus 103, or notification voice may be output by a speaker of the computer apparatus 103. Alternatively, the notification may be transmitted from the computer apparatus 103 to another computer apparatus. Then, the notification may be displayed on a display screen of the other computer apparatus, or notification voice may be output by a speaker of the other computer apparatus.

The contents of the notification may be information indicating that the change amount of the distance between the wireless devices 102 and/or the change amount of the positional relationship of the wireless devices 102 satisfies the predetermined condition, or may be information on the change amount of the distance between the wireless devices 102 and/or the change amount of the positional relationship of the wireless devices 102.

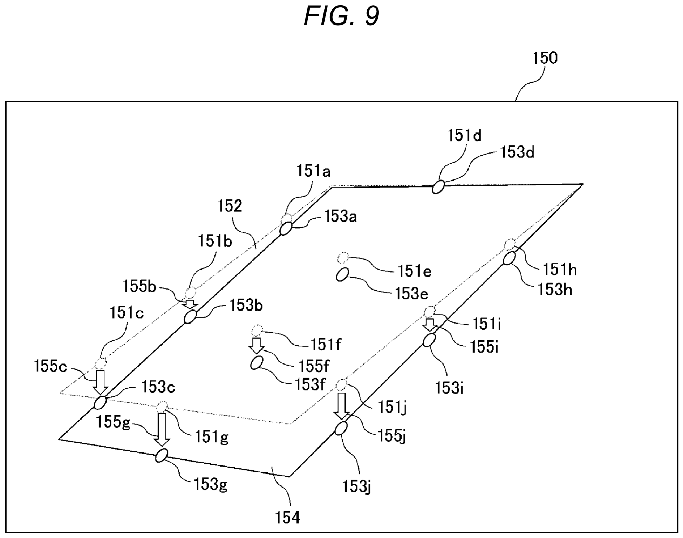

In addition, the change amount of the distance between the wireless devices 102 and/or the change amount of the positional relationship of the wireless devices 102 specified in step S301 may be output in the computer apparatus 103. Fig. 9 is a diagram illustrating an example of the display screen of the system according to the embodiment of the present invention.

In Fig. 9, an execution screen 150 indicating a change in the positional relationship of the wireless devices 102 is displayed on the display screen of the computer apparatus 103. On the execution screen 150, icons 151 (151a to 151j) drawn in a gray line correspond to the positions of the wireless devices 102 before change. In addition, in Fig. 9, a plane including all the icons 151 is displayed as a plane 152. In a case where the wireless devices 102 are installed along the slope 115 as illustrated in Fig. 2, the plane 152 is considered to correspond to the state of the slope 115.

In addition, on the execution screen 150, icons 153 (153a to 153j) drawn in a black line correspond to the positions of the wireless devices 102 after change. In addition, a plane including all the icons 153 is displayed as a plane 154. In a case where the wireless devices 102 are installed along the slope 115 as illustrated in Fig. 2, the plane 154 is considered to correspond to the state of the slope 115 after change.

In Fig. 9, the icons corresponding to the positions of the wireless devices 102 and the planes including the icons before and after change have changed downward. Icons 155 (155b, 155c, 155f, 155g, 155i, and 155j) indicating the change amounts are displayed by arrows. It can be seen that the longer the arrow is displayed, the larger the change amount is. In a case where the change amount is smaller than a predetermined value or equal to or smaller than the predetermined value, the icon 155 indicating the change amount does not have to be displayed.

By displaying the change in the positional relationship of the wireless devices 102 as illustrated in Fig. 9, it is possible to visually grasp the change in the positional relationship of the wireless devices 102.

As described above, the system includes a change amount specifier configured to specify a change amount of the calculated distance between the wireless devices and/or the specified positional relationship of the wireless devices. As a result, it is possible to estimate ground displacement.

As described above, the system includes a notification outputter configured to output a notification in a case where the specified change amount satisfies a predetermined condition. As a result, it is easy to report the ground displacement.

By calculating the distance between the wireless devices 102 on the basis of the propagation time of the communication between the wireless devices 102 and specifying the positional relationship of the wireless devices 102 as described above, the positional relationship of the wireless devices 102 can be specified with higher accuracy than GNSS.

In addition, while the GNSS has lower position measurement accuracy on a cloudy or rainy day than on a sunny day, the communication by the wireless devices is hardly affected by weather. Therefore, it is possible to specify the positional relationship of the wireless devices 102 regardless of weather.

Although the example in which the system 110 is installed on the slope has been described above, the place where the system 110 is installed is not particularly limited as long as ground displacement can occur in the place. For example, the system 110 may be installed on a wall surface of a tunnel.

[Second Embodiment]

In the second embodiment, a case will be described in which wireless devices are installed in a structure and at another predetermined location, and a distance between the wireless devices is calculated, to detect occurrence of a sediment disaster or possibility of occurrence of a sediment disaster. That is, in the second embodiment, the distance between the wireless devices may be information usable for detecting occurrence of a disaster or detecting possibility of occurrence of a disaster.

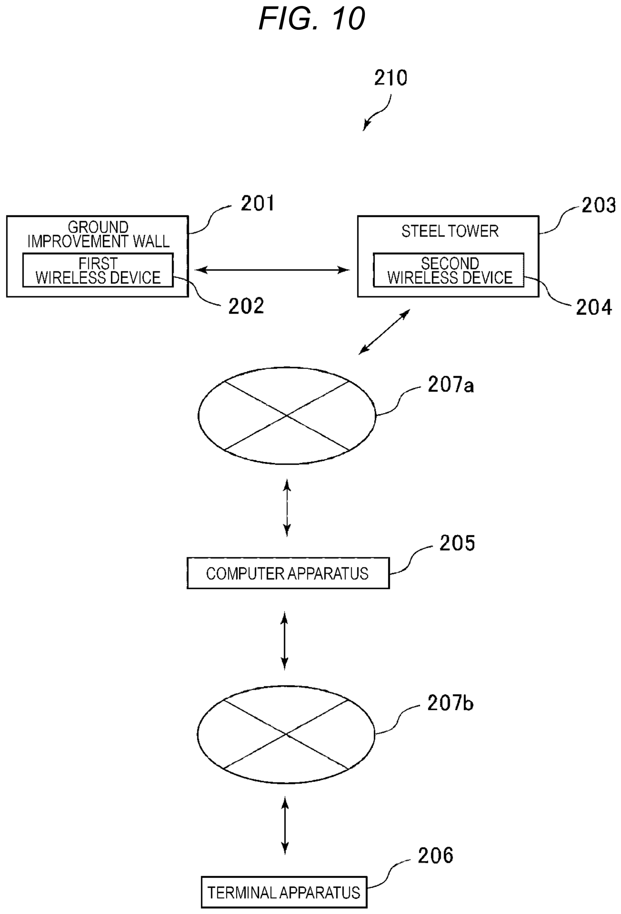

Fig. 10 is a block diagram illustrating a configuration of a system according to the embodiment of the present invention. A system 210 includes a first wireless device 202 installed on a ground improvement wall 201, a second wireless device 204 installed on a steel tower 203, a computer apparatus 205, and a terminal apparatus 206. The second wireless device 204 and the computer apparatus 205 are communicably connected to each other via a communication network 207a. In addition, the computer apparatus 205 and the terminal apparatus 206 are communicably connected to each other via a communication network 207b. Moreover, the first wireless device 202 and the second wireless device 204 can be connected to each other by wireless communication. Although not illustrated, the first wireless device 202 and the computer apparatus 205 may be communicably connected to each other via the communication network.

Although Fig. 10 illustrates an example in which the first wireless device 202 is installed on the ground improvement wall 201, the first wireless device 202 may be installed in a structure other than the ground improvement wall. Note that the "ground improvement wall" refers to a wall that planarly covers the surface of the ground with an improvement material such as cement in order to reinforce the ground. In addition, the "structure" refers to a structure composed of a plurality of materials, members, and the like, in which the weight is supported by a foundation and the like. The structure may be a building structure having a roof and a column or a wall, or may be a civil engineering structure other than the building structure. In addition, the material constituting the structure is not particularly limited. For example, the structure may be a concrete structure made of concrete, such as an airport, a highway, a high-rise building, a station, and a harbor; may be a steel structure made of steel, such as a steel bridge, a factory, and other steel frame buildings; or may be a soil structure made of soil, such as a levee, an embankment, and a bank.

The first wireless device 202 can be installed, for example, on a ground improvement wall, a dam, a levee, a tunnel, and/or a bridge. The first wireless device 202 may be installed on a wall surface of a ground improvement wall, a dam, a levee, a tunnel, a bridge, or other structures.

Although one first wireless device 202 is installed on one ground improvement wall 201 in Fig. 10, two or more first wireless devices 202 may be installed on one ground improvement wall 201. In this case, the two or more first wireless devices 202 installed on one ground improvement wall 201 may be connectable to each other by wireless communication. In addition, it is sufficient that any one or more of the two or more first wireless devices 202 installed on one ground improvement wall 201 are connectable to the second wireless device 204 by wireless communication.

Although Fig. 10 illustrates the system 210 including one ground improvement wall 201, the system 210 may include two or more ground improvement walls 201. In this case, it is preferable that one or more first wireless devices 202 are installed on each of the two or more ground improvement walls 201. In addition, it is sufficient that any one or more of the one or more first wireless devices 202 installed on each of the ground improvement walls 201 are connectable to the second wireless device 204 by wireless communication. Moreover, one or more first wireless devices 202 installed on one ground improvement wall 201 may be connectable to one or more first wireless devices 202 installed on another ground improvement wall 201 by wireless communication.

Although the example in which the system 210 includes the two or more ground improvement walls 201 has been described, the system 210 may include two or more structures of one type, or may include one or more structures for each of two or more types. Also in this case, the description of the example in which the system 210 includes the two or more ground improvement walls 201 can be adopted within a necessary range.

Although Fig. 10 illustrates an example in which the second wireless device 204 is installed on the steel tower 203, the second wireless device 204 only needs to be installed at a predetermined location different from the structure in which the first wireless device 202 is installed. It is preferable that the second wireless device 204 is installed at a place where ground displacement hardly occurs. In addition, the second wireless device 204 may be installed in another structure different from the structure in which the first wireless device 202 is installed.

The second wireless device 204 may be installed on, for example, a steel tower and/or a utility pole. Since the second wireless device 204 is installed on a steel tower and/or a utility pole, it is easy to use a cable for communication connection provided on the steel tower and/or the utility pole in communication connection between the second wireless device 204 and the computer apparatus 205. The cable for communication connection may be an optical fiber cable. By using the cable for communication connection provided on the steel tower and/or the utility pole, stable communication connection can be established between the second wireless device 204 and the computer apparatus 205.

Although one second wireless device 204 is installed on one steel tower 203 in Fig. 10, two or more second wireless devices 204 may be installed on one steel tower 203. In this case, the two or more second wireless devices 204 installed on one steel tower 203 may be connectable to each other by wireless communication. In addition, it is sufficient that any one or more of the two or more second wireless devices 204 installed on one steel tower 203 are connectable to the first wireless device 202 by wireless communication. Moreover, it is sufficient that any one or more of the two or more second wireless devices 204 installed on one steel tower 203 are communicably connected to the computer apparatus 205.

Although Fig. 10 illustrates the system 210 including one steel tower 203, the system 210 may include two or more steel towers 203. In this case, it is preferable that one or more second wireless devices 204 are installed on each of the two or more steel towers 203. In addition, it is sufficient that any one or more of the one or more second wireless devices 204 installed on each of the steel towers 203 are connectable to the first wireless device 202 by wireless communication. Moreover, one or more second wireless devices 204 installed on one steel tower 203 may be connectable to one or more second wireless devices 204 installed on another steel tower 203 by wireless communication.

Although the example in which the system 210 includes the two or more steel towers 203 has been described, the system 210 may include two or more installation locations of the same type, or may include one or more installation locations for each of two or more types. Also in this case, the description of the example in which the system 210 includes the two or more steel towers 203 can be adopted within a necessary range.

Although Fig. 10 illustrates an example in which the system 210 includes one computer apparatus 205, the system 210 may include two or more computer apparatuses 205. In addition, although Fig. 10 illustrates an example in which the system 210 includes one terminal apparatus 206, the system 210 may include two or more terminal apparatuses 206.

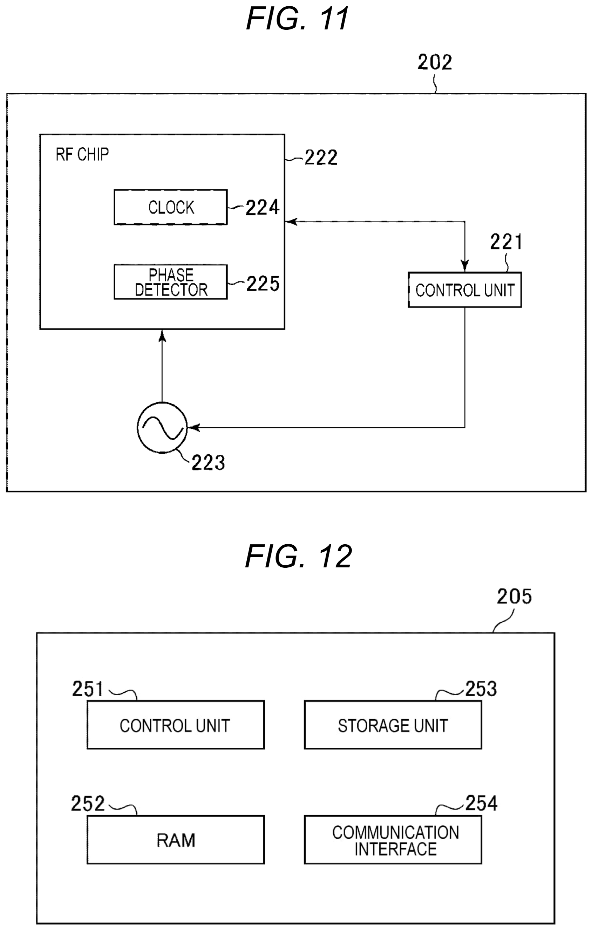

Fig. 11 is a block diagram illustrating a hardware configuration of the wireless device according to the embodiment of the present invention. The first wireless device 202 includes a control unit 221, an RF chip 222, an oscillator 223, a clock 224, and a phase detector 225. The RF chip 222 includes the clock 224 and the phase detector 225. The first wireless device 202 may include an element other than the control unit 221, the RF chip 222, the oscillator 223, the clock 224, and the phase detector 225 as necessary.

The control unit 221 is not particularly limited, but for example, a microcomputer (microcontroller) can be used. The control unit 221 performs program execution processing based on a program and data. The RF chip 222 executes reception and transmission processing of a radio signal. Data received by the RF chip 222 is subjected to arithmetic processing by the control unit 221.

The oscillator 223 oscillates at a predetermined frequency and outputs a signal for giving an operational timing of each unit of the device. As the oscillator 223, an atomic oscillator or a crystal oscillator can be used. The clock 224 clocks the output signal of the oscillator 223 as a vibration source and outputs time. The time clocked by the clock 224 is controlled by the control unit 221 so as to be transmitted to another wireless device via the RF chip 222. The phase detector 225 detects the phase of a carrier wave constituting information received from the other wireless device, and detects the phase of the signal oscillated by the oscillator 223 in the first wireless device 202.

Hereinafter, the clock 224 provided in the first wireless device 202 is also referred to as an internal clock of the first wireless device 202.

A hardware configuration similar to that in Fig. 11 can be adopted for the second wireless device 204.

Fig. 12 is a block diagram illustrating a hardware configuration of the computer apparatus according to the embodiment of the present invention. The computer apparatus 205 includes at least a control unit 251, a RAM 252, a storage unit 253, and a communication interface 254, which are connected by an internal bus.

The control unit 251 includes a CPU and a ROM, executes a program stored in the storage unit 253, and controls the computer apparatus 205. In addition, the control unit 251 includes an internal timer that clocks time. The RAM 252 is a work area of the control unit 251. The storage unit 253 is a storage region for saving programs and data. That is, the storage unit 253 functions as a recording medium storing programs. The control unit 251 reads a program and data from the RAM 252, and performs program execution processing on the basis of information or the like received from the second wireless device 204.

The computer apparatus 205 may be a server apparatus, or may be a terminal apparatus such as a desktop/notebook personal computer, a tablet terminal, and a smartphone. The computer apparatus 205 may function in a distributed manner in a plurality of computer apparatuses. For example, instead of the server apparatus, a distributed ledger technology such as a blockchain may be used.

As for the hardware configuration and function of the terminal apparatus 206, the description of the computer apparatus 103 in the first embodiment can be adopted within a necessary range.

Note that the program may be stored in a recording medium such as a CD-ROM. In this case, the program stored in the recording medium may be installed in the first wireless device 202, the second wireless device 204, the computer apparatus 205, or the terminal apparatus 206 to execute a predetermined function.

Alternatively, the program may be distributed from a computer apparatus outside the system. In this case, the program distributed from the computer apparatus outside the system may be installed in the first wireless device 202, the second wireless device 204, the computer apparatus 205, or the terminal apparatus 206 to execute a predetermined function.

Hereinafter, an aspect of observing ground displacement by the system of the present invention will be described.

The first wireless device 202 provided on the ground improvement wall 201 transmits and receives a signal to and from the second wireless device 204 provided on the steel tower 203 at predetermined intervals. The predetermined interval is not particularly limited, and can be appropriately designed. For example, the transmission and reception of a signal may be performed at intervals of 1 minute, at intervals of 10 minutes, or at intervals of 60 minutes.

The first wireless device 202 can calculate a distance between the first wireless device 202 and the second wireless device 204, that is, the distance between the wireless devices by transmitting and receiving a signal to and from the second wireless device 204. The first wireless device 202 is provided on the ground improvement wall 201, and the second wireless device 204 is provided on the steel tower 203. Thus, in a case where the distance between the wireless devices changes, there is a possibility that displacement occurs in the ground on which the ground improvement wall 201 is installed and/or the ground on which the steel tower 203 is installed.

The distance between the wireless devices is calculated on the basis of a propagation time of communication between the wireless devices. For example, the distance between the wireless devices can be calculated by multiplying the propagation time of communication between the wireless devices by a propagation speed of the communication.

The propagation time of the communication between the wireless devices, that is, the propagation time of a signal can be calculated by transmitting and receiving a signal between the wireless devices and obtaining a difference between a transmission time of the signal and a reception time of the signal. The transmission time of the signal and the reception time of the signal are clocked by the internal clocks provided in the wireless devices. Therefore, the smaller a time deviation of the internal clock between the wireless devices, the more accurately the propagation time can be calculated.

In addition, with regard to the phase of the internal clock provided in the wireless device, that is, the phase of a signal oscillated by the oscillator 223 in the first wireless device 202, there may be a deviation between the wireless devices. Hereinafter, the phase of the internal clock provided in the wireless device is also referred to as a phase of the wireless device. In addition, the phase deviation of the internal clock between the wireless devices is also referred to as a phase deviation between the wireless devices.

Note that the phase of the signal oscillated by the oscillator 223 in the first wireless device 202 is considered to be substantially equal to the phase of a carrier wave constituting information transmitted by the first wireless device 202.

Hereinafter, an example of calculating the distance between the wireless devices after correcting the phase deviation of the internal clock between the wireless devices and correcting the time deviation of the internal clock between the wireless devices will be described. Here, the second wireless device 204 calculates the distance between the first wireless device 202 and the second wireless device 204.

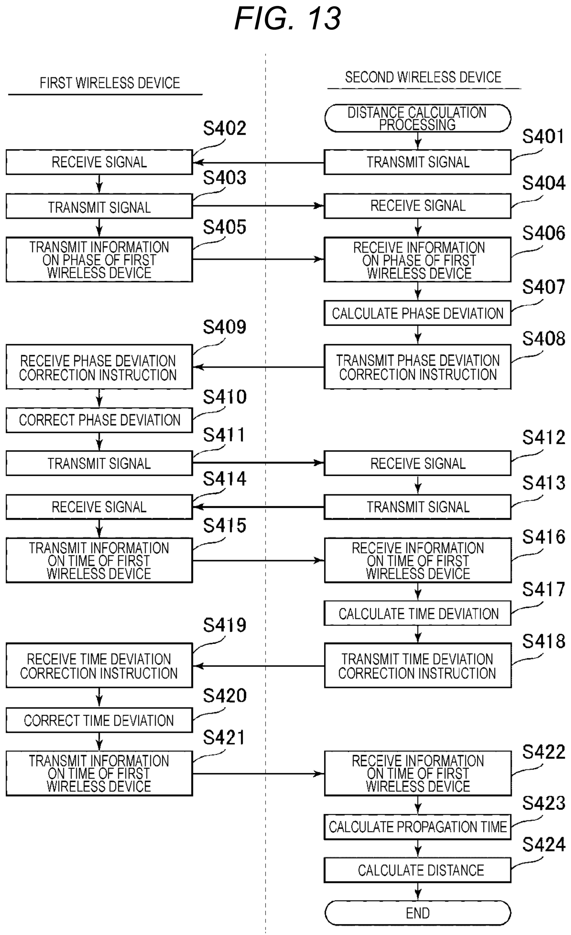

Fig. 13 is a diagram illustrating a flowchart of distance calculation processing according to the embodiment of the present invention.

First, the second wireless device 204 transmits a signal to the first wireless device 202 (step S401). Then, the first wireless device 202 receives the transmitted signal (step S402). Next, the first wireless device 202 transmits a signal to the second wireless device 204 (step S403). Then, the second wireless device 204 receives the transmitted signal (step S404).

After step S403 is performed, the first wireless device 202 transmits information on the phase of the first wireless device 202 to the second wireless device 204 (step S405). Then, the second wireless device 204 receives the transmitted phase information (step S406). The second wireless device 204 calculates the phase deviation between the first wireless device 202 and the second wireless device 204 (step S407). Next, the second wireless device 204 transmits an instruction to correct the phase deviation (hereinafter also referred to as a phase deviation correction instruction) of the first wireless device 202 to the first wireless device 202 1 (step S408). The first wireless device 202 receives the transmitted phase deviation correction instruction (step S409). Then, the first wireless device 202 corrects the phase deviation of the first wireless device 202 (step S410).

The signal in step S401 may include a signal transmission request for requesting the second wireless device 204 that has transmitted the signal to transmit a signal.

In addition, when the second wireless device 204 transmits the signal in step S401, the second wireless device 204 may measure a phase when the signal is transmitted and store the phase in the memory in the control unit of the second wireless device 204. The phase when the signal is transmitted may be the phase of a carrier wave constituting the transmitted signal.

Furthermore, when the first wireless device 202 receives the signal in step S402, the first wireless device 202 may measure a phase when the signal is received and store the phase in the memory in the control unit 221 of the first wireless device 202. The phase when the signal is received may be the phase of a signal oscillated by the oscillator 223 of the first wireless device 202 when the signal is received.

In addition, when the first wireless device 202 transmits the signal in step S403, the first wireless device 202 may measure a phase when the signal is transmitted and store the phase in the memory in the control unit 221 of the first wireless device 202. The phase when the signal is transmitted may be the phase of a carrier wave constituting the transmitted signal.

Furthermore, when second wireless device 204 receives the signal in step S404, the second wireless device 204 may measure a phase when the signal is received and store the phase in the memory in the control unit of the second wireless device 204. The phase when the signal is received may be the phase of a signal oscillated by the oscillator of the clock of the second wireless device 204 when the signal is received.

The information on the phase of the first wireless device 202 transmitted to the second wireless device 204 in step S405 may include information on the phase when the first wireless device 202 receives the signal in step S402 and information on the phase when the first wireless device 202 transmits the signal in step S403.

In step S407, the phase deviation can be calculated on the basis of a phase difference between the phase of the carrier wave constituting the signal transmitted from the second wireless device 204 to the first wireless device 202 and the phase of the signal oscillated by the oscillator 223 of the first wireless device 202 when the signal is received by the first wireless device 202, and a phase difference between the phase of the carrier wave constituting the signal transmitted from the first wireless device 202 to the second wireless device 204 and the phase of the signal oscillated by the oscillator of the clock of the second wireless device 204 when the signal is received by the second wireless device 204.

The phase of the carrier wave constituting the signal transmitted from the second wireless device 204 to the first wireless device 202 is the phase of the signal transmitted in step S401. The phase of the signal oscillated by the oscillator 223 of the first wireless device 202 when the signal is received by the first wireless device 202 is the phase of the signal received in step S402. The phase of the carrier wave constituting the signal transmitted from the first wireless device 202 to the second wireless device 204 is the phase of the signal transmitted in step S403. The phase of the signal oscillated by the oscillator of the clock of the second wireless device 204 when the signal is received by the second wireless device 204 is the phase of the signal received in step S404.

A phase difference $\Delta\Phi_P$ generated by the signal propagating between the second wireless device 204 and the first wireless device 202 can be calculated from the arithmetic mean of a phase difference $\Delta\Phi_M$ and a phase difference $\Delta\Phi_F$, by defining: as $\Delta\Phi_M$, the phase difference between the phase of the carrier wave constituting the signal transmitted from the second wireless device 204 to the first wireless device 202 and the phase of the signal oscillated by the oscillator 223 of the first wireless device 202 when the signal is received by the first wireless device 202; and as $\Delta\Phi_F$, the phase difference between the phase of the carrier wave constituting the signal transmitted from first wireless device 202 to the second wireless device 204 and the phase of the signal oscillated by the oscillator of the second wireless device 204 when the signal is received by the second wireless device 204. That is, the phase difference $\Delta\Phi_P$ can be calculated by

$$\text{Equation (1): } \Delta\Phi_P = 1/2 \times (\Delta\Phi_M + \Delta\Phi_F).$$

When the phase deviation between the second wireless device 204 and the first wireless device 202 is defined as $\Delta\Phi_C$, the relationship expressed by

$$\text{Equation (2): } \Delta\Phi_F = \Delta\Phi_P + (-\Delta\Phi_C)$$

is established, so that the phase deviation $\Delta\Phi_C$ can be calculated by subtracting the phase difference $\Delta\Phi_F$ from the phase difference $\Delta\Phi_P$. That is, the phase difference $\Delta\Phi_C$ can be calculated by

$$\text{Equation (3): } \Delta\Phi_C = 1/2 \times (\Delta\Phi_M - \Delta\Phi_F).$$

In step S407, the phase deviation between the second wireless device 204 and the first wireless device 202 may be calculated using Equation (3).

Here, the phase deviation $\Delta\Phi_C$ is calculated by Equation (3), but in some cases, the phase deviation $\Delta\Phi_C$ to be calculated may be obtained by further subtracting $2\Pi$ or $4\Pi$, that is, $2n\Pi$. n may take zero or a positive integer. Therefore, it is also possible to specify whether n is zero, or an integer such as 1 or 2 (that is, whether the value obtained by further subtracting $2n\pi$ from the phase difference $\Delta\Phi_C$ obtained by Equation (3) is the original phase deviation or whether the value not subtracted is the original phase deviation) on the basis of a propagation time to be described later or a time deviation between the second wireless device 204 and the first wireless device 202.

There may be a case in which the signal transmitted from the second wireless device 204 to the first wireless device 202 and the signal transmitted from the first wireless device 202 to the second wireless device 204 start with an output that is not zero but is an arbitrary value at the start of transmission. In such a case, it is necessary to correct the phase deviation $\Delta\Phi_C$ by measuring the phase at the start of transmission and the transmission time. Meanwhile, by configuring such that the phase at the start of transmission is always constant and transmission is performed at a predetermined time, it is possible to omit such a processing of correcting $\Delta\Phi_C$ after measuring the phase at the start of transmission and the transmission time.

The phase deviation correction instruction in step S408 may be an instruction to correct the phase of the first wireless device 202 so as to be synchronized with the phase of the second wireless device 204.

In step S410, the first wireless device 202 may correct the phase of the first wireless device 202 so as to be synchronized with the phase of the second wireless device 204 on the basis of the calculated phase deviation $\Delta\Phi_C$. That is, the first wireless device 202 may correct the phase of the signal generated by the oscillator 223 of the first wireless device 202 so as to be synchronized with the signal generated by the oscillator of the second wireless device 204 on the basis of the calculated phase deviation $\Delta\Phi_C$. The correction of the phase in step S410 is controlled and executed by the control unit 221 of the first wireless device 202.

In this manner, the phase of the first wireless device 202 is corrected so as to match the phase of the second wireless device 204, and therefore the frequencies of the clock 224 of the first wireless device 202 and the clock of the second wireless device 204 are also adjusted. That is, the phase is locked. When the phase lock is established, the clock 224 of the first wireless device 202 and the clock of the second wireless device 204 clock time at the same frequency. Here, an example of calculating and correcting the time deviation between the first wireless device 202 and the second wireless device 204 in a state where the phase lock is established will be described. While the phase lock continues, a time difference between the clock 224 of the first wireless device 202 and the clock of the second wireless device 204 does not change, so that it is possible to accurately compare the times.

After the phase deviation of the first wireless device 202 is corrected in step S410, the first wireless device 202 transmits a signal to the second wireless device 204 (step S411). Then, the second wireless device 204 receives the transmitted signal (step S412). Next, the second wireless device 204 transmits a signal to the first wireless device 202 (step S413). Then, the first wireless device 202 receives the transmitted signal (step S414).

Next, the first wireless device 202 transmits information on the time of the first wireless device 202 to the second wireless device 204 (step S415). Then, the second wireless device 204 receives the transmitted time information (step S416). The second wireless device 204 calculates the time deviation between the second wireless device 204 and the first wireless device 202 (step S417). Next, the second wireless device 204 transmits an instruction to correct the time deviation (hereinafter also referred to as a time deviation correction instruction) of the first wireless device 202 to the first wireless device 202 (step S418). The first wireless device 202 receives the transmitted time deviation correction instruction (step S419). Then, the first wireless device 202 corrects the time deviation of the first wireless device 202 (step S420).

The signal in step S411 may include a signal transmission request for requesting the first wireless device 202 that has transmitted the signal to transmit a signal.

In addition, when the first wireless device 202 transmits the signal in step S411, the first wireless device 202 may clock a time at which the signal is transmitted and store the time in the memory in the control unit 221 of the first wireless device 202.

Furthermore, when the second wireless device 204 receives the signal in step S412, the second wireless device 204 may clock a time at which the signal is received and store the time in the memory in the control unit of the second wireless device 204.

In addition, when the second wireless device 204 transmits the signal in step S413, the second wireless device 204 may clock a time at which the signal is transmitted and store the time in the memory in the control unit of the second wireless device 204.

Furthermore, when the first wireless device 202 receives the signal in step S414, the first wireless device 202 may clock a time at which the signal is received and store the time in the memory in the control unit 221 of the first wireless device 202.

The information on the time of the first wireless device 202 transmitted to the second wireless device 204 in step S415 may include information on the time at which the first wireless device 202 transmits the signal in step S411 and information on the time at which the first wireless device 202 receives the signal in step S414.

In step S417, the time deviation can be calculated on the basis of the time at which the first wireless device 202 transmits the signal to the second wireless device 204, the time at which the second wireless device 204 receives the signal, the time at which the second wireless device 204 transmits the signal to the first wireless device 202, and the time at which the first wireless device 202 receives the signal.

The time at which the first wireless device 202 transmits the signal to the second wireless device 204 is the time at which the signal is transmitted in step S411. The time at which the second wireless device 204 receives the signal is the time at which the signal is received in step S412. The time at which the second wireless device 204 transmits the signal to the first wireless device 202 is the time at which the signal is transmitted in step S413. The time at which the first wireless device 202 receives the signal is the time at which the signal is received in step S414.

A time deviation $T_L$ between the second wireless device 204 and the first wireless device 202 can be calculated by Equation (4): $T_L = 1/2 \times ((T_{MF} - T_M) - (T_{FM} - T_F))$, by defining: as $T_M$, the time at which the first wireless device 202 transmits the signal to the second wireless device 204; as $T_{MF}$, the time at which the second wireless device 204 receives the signal; as $T_F$, the time at which the second wireless device 204 transmits the signal to the first wireless device 202; and as $T_{FM}$, the time at which the first wireless device 202 receives the signal. In step S417, the time deviation $T_L$ between the second wireless device 204 and the first wireless device 202 may be calculated by Equation (4).

The time deviation correction instruction in step S418 may be an instruction to correct the time of the first wireless device 202 so as to be synchronized with the time of the second wireless device 204.

In step S420, the first wireless device 202 may correct the time of the first wireless device 202 so as to be synchronized with the time of the second wireless device 204 on the basis of the calculated time deviation $T_L$.

After the time deviation of the first wireless device 202 is corrected in step S420, the first wireless device 202 transmits information on the time of the first wireless device 202 to the second wireless device 204 (step S421). Then, the second wireless device 204 receives the transmitted time information (step S422). Next, the second wireless device 204 calculates the propagation time of communication between the second wireless device 204 and the first wireless device 202 (step S423). Then, the second wireless device 204 calculates the distance between the second wireless device 204 and the first wireless device 202 (step S424), and the distance calculation processing ends.

The information on the time of the first wireless device 202 in step S421 may include information on a time at which the first wireless device 202 transmits the information.

In step S423, the second wireless device 204 can calculate the propagation time of communication between the first wireless device 202 and the second wireless device 204 from a difference between a time at which the first wireless device 202 transmits the information in step S421 and a time at which the second wireless device 204 receives the information in step S422.

In step S424, the second wireless device 204 can calculate the distance between the first wireless device 202 and the second wireless device 204 by multiplying the propagation time calculated in step S423 by the propagation speed of the communication (for example, the speed of light).

As described above, the system includes the first wireless device installed in a structure and a second wireless device installed at another predetermined location, the system including a distance calculator configured to calculate a distance between the wireless devices on the basis of a propagation time of communication between the wireless devices, wherein the distance calculator calculates the distance on the basis of a time deviation of the internal clock between the wireless devices. As a result, it is possible to provide the system for observing ground displacement.

In addition, as described above, the system includes: a time deviation calculator configured to calculate a time deviation between the internal clocks provided in the wireless devices by transmitting and receiving a signal between the wireless devices; and a time deviation corrector configured to correct a time deviation of the internal clock provided in the wireless device on the basis of the calculated time deviation, wherein a distance calculator calculates a distance after the time deviation corrector corrects the time deviation. As a result, the distance between the wireless devices can be accurately calculated.

In addition, as described above, the system includes: a phase deviation calculator configured to calculate a phase deviation between the internal clocks provided in the wireless devices by transmitting and receiving a signal between the wireless devices; and a phase deviation corrector configured to correct a phase deviation of the internal clock provided in the wireless device on the basis of the calculated phase deviation, wherein the time deviation calculator calculates the time deviation after the phase deviation corrector corrects the phase deviation. As a result, the distance between the wireless devices can be calculated more accurately.

In the above description, an aspect has been described in which the second wireless device 204 calculates the phase deviation, gives the phase deviation correction instruction, calculates the time deviation, gives the time deviation correction instruction, calculates the propagation time, and calculates the distance. However, the calculation of the phase deviation, the phase deviation correction instruction, the calculation of the time deviation, the time deviation correction instruction, the calculation of the propagation time, and/or the calculation of the distance may be executed by the first wireless device 202 and/or the computer apparatus 205. In this case, the information necessary for each processing may be transmitted to the apparatus that executes each processing.

For example, the first wireless device 202 may calculate the distance between the first wireless device 202 and the second wireless device 204.

Note that the method of calculating the phase deviation and the time deviation between the first wireless device 202 and the second wireless device 204 can be appropriately designed regardless of the above description. That is, the number of times of transmission and reception of signals between the first wireless device 202 and the second wireless device 204 and the content of information transmitted and received between the first wireless device 202 and the second wireless device 204 are not particularly limited. It is sufficient that the phase deviation and the time deviation between the first wireless device 202 and the second wireless device 204 can be calculated.

In addition, in the above description, an aspect has been described in which the distance is calculated after correcting the phase deviation and the time deviation between first wireless device 202 and the second wireless device 204, but the distance may be calculated without correcting the phase deviation and/or the time deviation between the first wireless device 202 and the second wireless device 204.

For example, the distance may be calculated by correcting the time deviation between the first wireless device 202 and the second wireless device 204 without correcting the phase deviation between the first wireless device 202 and the second wireless device 204. In this case, steps S403 to S410 may not be performed.

Alternatively, for example, the distance may be calculated without correcting the phase deviation and the time deviation between the first wireless device 202 and the second wireless device 204. Specifically, for example, after correcting the phase deviation and the time deviation between the first wireless device 202 and the second wireless device 204, the distance may be calculated without correcting the phase deviation and the time deviation again within a predetermined time. Alternatively, for example, the distance may be calculated on the basis of the propagation time of a case where the phase deviation and the time deviation are theoretically corrected without actually correcting the phase deviation and the time deviation between the first wireless device 202 and the second wireless device 204.

A time deviation in a common clock is said to be less than one second per day. Therefore, within a predetermined time after correcting the phase deviation and the time deviation between the first wireless device 202 and the second wireless device 204, the phase and time of the internal clock provided in the first wireless device 202 and the phase and time of the internal clock provided in the second wireless device 204 are considered to be equivalent to those when the phase deviation and the time deviation are corrected.

Therefore, after correcting the phase deviation and the time deviation between the first wireless device 202 and the second wireless device 204, the propagation time when the phase deviation and the time deviation are corrected can be calculated by steps S421 to S423 without correcting the phase deviation and the time deviation again by steps S403 to S420 within a predetermined time.

The predetermined time may be 1 minute, 5 minutes, 10 minutes, 20 minutes, or 30 minutes.

In addition, the distance may be calculated by calculating the propagation time of a case where the phase deviation and the time deviation are theoretically corrected on the basis of the calculated phase deviation and time deviation without actually correcting the phase deviation and the time deviation between the first wireless device 202 and the second wireless device 204. In this case, by clocking and storing the time at which the signal is transmitted and/or received in steps S401 to S404 and transmitting the information on the time in step S405, steps S408 to S416 and steps S418 to S422 can be omitted.

That is, as long as the distance between the first wireless device 202 and the second wireless device 204 is calculated on the basis of the time deviation between the internal clock provided in the first wireless device 202 and the internal clock provided in the second wireless device 204, the phase deviation and the time deviation between the first wireless device 202 and the second wireless device 204 may or may not be corrected.

In addition, in the above description, an example has been described in which the distance between the first wireless device 202 and the second wireless device 204 is calculated by calculating the propagation time of the communication between the first wireless device 202 and the second wireless device 204, and multiplying the calculated propagation time by the propagation speed of the communication. However, the aspect of calculating the distance between the first wireless device 202 and the second wireless device 204 is not limited to this example.

For example, a signal may be transmitted and received between the first wireless device 202 and the second wireless device 204 without calculating the propagation time of the communication between the first wireless device 202 and the second wireless device 204, and the distance between the first wireless device 202 and the second wireless device 204 may be calculated from the transmission time of the signal, the reception time of the signal, and the propagation speed of the signal. In this case, the distance between the first wireless device 202 and the second wireless device 204 may be calculated in step S424 on the basis of the transmission time of the information in step S421, the reception time of the information in step S422, and the propagation speed of the information without performing step S423.

That is, the distance between the first wireless device 202 and the second wireless device 204 only needs to be calculated on the basis of the propagation time based on the time deviation between the internal clock provided in the first wireless device 202 and the internal clock provided in the second wireless device 204.

Furthermore, in the above description, an example has been described in which correction is performed so that the phase and time of the internal clock provided in the first wireless device 202 are synchronized with the phase and time of the internal clock provided in the second wireless device 204. However, the aspect of correcting the phase deviation and the time deviation is not limited to this example. It is sufficient that the phase deviation and the time deviation between the internal clock provided in the first wireless device 202 and the internal clock provided in the second wireless device 204 are corrected. For example, correction may be performed so that the phase and time of the internal clock provided in the second wireless device 204 are synchronized with the phase and time of the internal clock provided in the first wireless device 202, or both the internal clock provided in the second wireless device 204 and the internal clock provided in the first wireless device 202 may be corrected so as to be synchronized with each other.

In a case where there is a change in the distance between the wireless devices calculated in this manner, there is a possibility that displacement occurs in the ground on which the ground improvement wall 201 is installed and/or the ground on which the steel tower 203 is installed. Therefore, in a case where a change amount of the distance between the wireless devices satisfies a predetermined condition, the following notification processing may be performed.

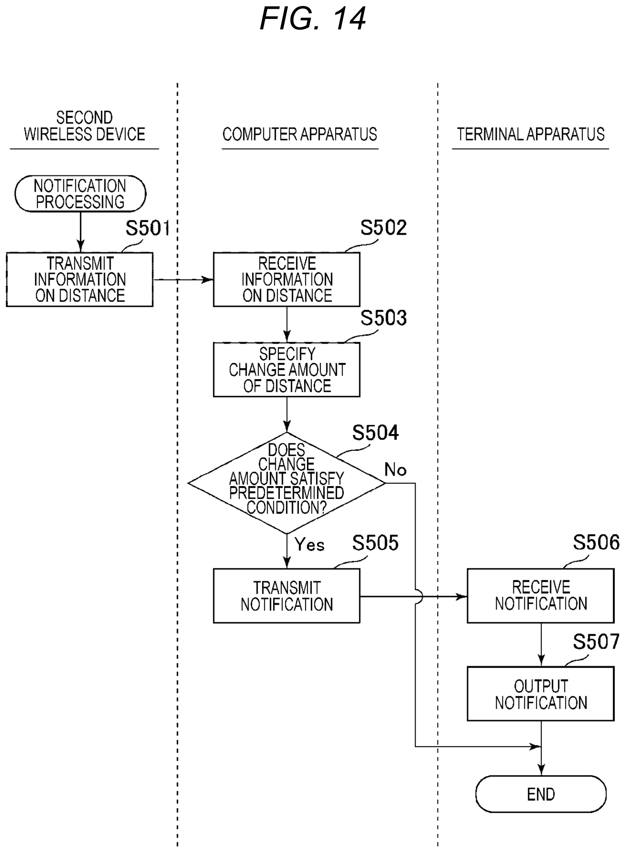

Fig. 14 is a diagram illustrating a flowchart of the notification processing according to the embodiment of the present invention.

First, the second wireless device 204 that has calculated the distance between the wireless devices transmits information on the calculated distance to the computer apparatus 205 (step S501). The computer apparatus 205 receives the transmitted information on the distance between the wireless devices (step S502). The computer apparatus 205 specifies the change amount of the received distance between the wireless devices (step S503). The computer apparatus 205 determines whether or not the specified change amount satisfies a predetermined condition (step S504).

When determining that the specified change amount satisfies the predetermined condition (Yes in step S504), the computer apparatus 205 transmits a notification to the terminal apparatus 206 (step S505). The terminal apparatus 206 receives the transmitted notification (step S506). The terminal apparatus 206 outputs the received notification (step S507), and the notification processing ends.

On the other hand, when it is not determined that the specified change amount satisfies the predetermined condition (No in step S504), steps S505 to S507 are not performed, and the notification processing ends.

The information on the distance between the wireless devices transmitted in step S501 may include information on the distance between the wireless devices calculated in step S424 of the distance calculation processing, a time at which the distance is calculated, and the like.

In step S503, it is sufficient that the change amount before and after a predetermined time is specified. The predetermined time is not particularly limited, and can be appropriately designed. The predetermined time may be 10 minutes, 1 hour, or 24 hours. In a case where the predetermined time is 1 hour, for example, the change amount between the distance between the wireless devices one hour ago and the current distance between the wireless devices may be specified. Hereinafter, the distance between the wireless devices before the time for specifying the change amount is also referred to as a "distance between the wireless devices before change". In addition, the distance between the wireless devices after the time for specifying the change amount is also referred to as a "distance between the wireless devices after change".

In step S503, the change amount of the distance may be specified, for example, by subtracting the distance between the wireless devices before change from the distance between the wireless devices after change.

The system 210 may perform control so as to calculate the distance between the wireless devices according to an interval of the time for specifying the change amount. For example, a signal for controlling a time interval for calculating the distance between the wireless devices may be transmitted from the computer apparatus 205 to the second wireless device 204. In addition, the interval of the time for specifying the change amount may be changed according to the change amount specified in step S503. For example, in a case where the change amount is larger than a predetermined value, there is a high possibility that ground displacement is occurring. Thus, the change amount may be specified by calculating the distance between the wireless devices at a shorter time interval than in a case where the change amount is smaller than the predetermined value. Note that the predetermined value at the time of determining whether to change the interval of the time for specifying the change amount may be the same as or different from a predetermined value at the time of determining whether to output the notification in step S504.

The predetermined condition in step S504 is not particularly limited, and can be appropriately designed. For example, the predetermined condition may be that the change amount of the distance between the wireless devices is larger than a predetermined value, the change amount of the distance between the wireless devices is equal to or larger than a predetermined value, or the like. In a case where the change amount of the distance between the wireless devices is large, it is considered that the risk of occurrence of a sediment disaster is high.

In step S507, the notification may be displayed on the display screen of the terminal apparatus 206, or notification voice may be output by a speaker of the terminal apparatus 206.

The contents of the notification may be information indicating that the change amount of the distance between the wireless devices satisfies the predetermined condition, or may be information on the change amount of the distance between the wireless devices.

The terminal apparatus 206 may be used by an operator of the system 210 or may be used by a user of the system 210. The user of the system 210 may include a manager of the structure or the predetermined location where the wireless device is installed, a local government or a resident near the structure or the predetermined location where the wireless device is installed, and the like.

As described above, the system includes a change amount specifier configured to specify a change amount of the calculated distance between the wireless devices, and a notification outputter configured to output a notification in a case where the specified change amount satisfies a predetermined condition. As a result, it is easy to report ground displacement.

As described above, by calculating the distance between the wireless devices on the basis of the propagation time of the communication between the wireless devices, the distance between the wireless devices can be calculated with higher accuracy than GNSS.

In addition, while the GNSS has lower position measurement accuracy on a cloudy or rainy day than on a sunny day, the communication by the wireless devices is hardly affected by weather. Therefore, it is possible to calculate the distance between the wireless devices regardless of weather.

[Third Embodiment]

In the third embodiment, a case will be described in which wireless devices are installed at a predetermined location and within a predetermined distance from an acquisition device for acquiring a water content under the ground surface or information enabling specification of a water content under the ground surface, a time deviation between the wireless devices is calculated, and the time of the wireless device is corrected, to acquire the water content under the ground surface or the information enabling specification of the water content under the ground surface at an accurate time. That is, in the third embodiment, the time deviation between the wireless devices may be information usable for detecting occurrence of a disaster or detecting possibility of occurrence of a disaster.

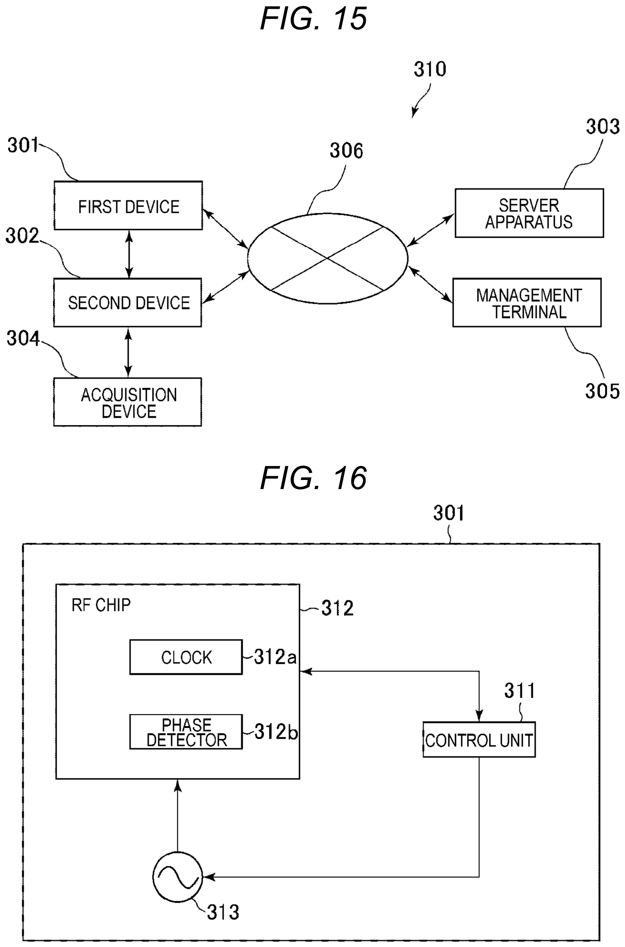

Fig. 15 is a block diagram illustrating a configuration of a system according to the embodiment of the present invention. As illustrated, a system 310 includes, for example, a first device 301, a second device 302, a server apparatus 303, an acquisition device 304, a management terminal 305, and a communication network 306. The first device 301 can establish communication connection with each of the server apparatus 303 and the management terminal 305 via the communication network 306. In addition, the first device 301 can directly establish communication connection with the second device 302. The first device 301 and the second device 302 may be wireless devices. That is, the first device 301 may be a first wireless device 301, and the second device 302 may be a second wireless device 302. The first device 301 is a reference device for synchronizing a clock of the second device 302, and one first device 301 can also function as a first device for a plurality of second devices 302. Since the first device 301 is a reference device for synchronizing the clock of the second device 302, the first device 301 preferably has a clock with higher accuracy. Note that the system 310 may include one or a plurality of first devices 301.

Furthermore, what functions as the second device 302 for one first device 301 can also function as a first device for another second device. A plurality of second devices 302 may exist for one first device 301, and each of the plurality of second devices 302 may function as a first device for the other plurality of second devices, thereby forming a pyramidal relationship.

The second device 302 can establish communication connection with each of the server apparatus 303 and the management terminal 305 via the communication network 306. The time of the second device 302 is synchronized with reference to the time clocked by the first device 301, and the phase of a signal generated by an oscillator in the second device 302 is synchronized with reference to the phase of a signal generated by an oscillator in the first device 301.

In addition, the second device 302 may function as the first device 301 for another second device. The time of the other second device is synchronized with reference to the time clocked by the second device 302, and the phase of a signal generated by an oscillator in the other second device is synchronized with reference to the phase of the signal generated by the oscillator in the second device 302.

The acquisition device 304 may be a device capable of measuring the water content of soil or sand under the ground surface, or may be a device capable of measuring the information enabling specification of the water content of soil or sand under the ground surface. The water content refers to the proportion of water contained in hydrous soil or sand under the ground surface. The acquisition device 304 can directly establish communication connection with the second device 302 in a wireless or wired manner.

The management terminal 305 can establish communication connection with the server apparatus 303 via the communication network 306. The management terminal 305 is a terminal used by a business operator or the like who manages the system 310.

(First Device)

The first device 301 will be described below. Fig. 16 is a block diagram illustrating a hardware configuration of the first device according to at least one embodiment of the present invention. The first device 301 includes a control unit 311, an RF chip 312, and an oscillator 313. The RF chip 312 includes the clock 312a and the phase detector 312b. The first device 301 may include another element other than the control unit 311, the RF chip 312, the oscillator 313, the clock 312a, and the phase detector 312b as necessary.

The control unit 311 is not particularly limited, but for example, a microcomputer (microcontroller) can be used. The control unit 311 performs program execution processing based on a program and data. The RF chip 312 executes reception and transmission processing of a radio signal. Data received by the RF chip 312 is subjected to arithmetic processing by the control unit 311.

The oscillator 313 oscillates at a predetermined frequency and outputs a signal for giving an operational timing of each unit of the device. As the oscillator 313, an atomic oscillator or a crystal oscillator can be used. The clock 312a clocks the output signal of the oscillator 313 as a vibration source and outputs time. The time clocked by the clock 312a is controlled by the control unit 311 so as to be transmitted to the second device 302 via the RF chip 312. The phase detector 312b detects the phase of a carrier wave constituting information received from the second device 302, and detects the phase of the signal oscillated by the oscillator 313 in the first device 301.

The installation place of the first device 301 is not particularly limited, but the first device 301 can be installed, for example, in a transmission tower for supporting an overhead power line. It is preferable that the first device 301 is fixedly installed at a predetermined place.

(Second Device)

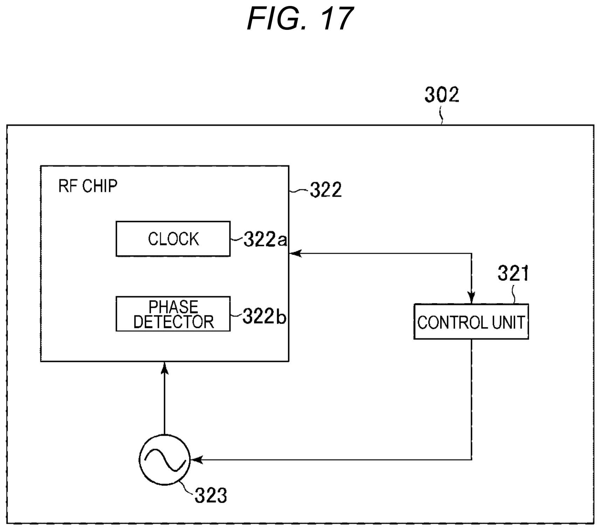

The second device 302 will be described below. Fig. 17 is a block diagram illustrating a hardware configuration of the second device according to the embodiment of the present invention. The second device 302 includes a control unit 321, an RF chip 322, and an oscillator 323, each of them are connected by a bus. The RF chip 322 includes the clock 322a and the phase detector 322b. The second device 302 may include another element other than the control unit 321, the RF chip 322, the oscillator 323, the clock 322a, and the phase detector 322b as necessary.

The control unit 321 is not particularly limited, but for example, a microcomputer (microcontroller) can be used. The control unit 321 performs program execution processing based on a program and data. The RF chip 322 executes reception and transmission processing of a radio signal. Data received by the RF chip 322 is subjected to arithmetic processing by the control unit 321.

The oscillator 323 oscillates at a predetermined frequency and outputs a signal for giving an operational timing of each unit of the device. As the oscillator 323, for example, a crystal oscillator can be used. The clock 322a clocks the output signal of the oscillator 323 as a vibration source and outputs time. The time clocked by the clock 322a is controlled by the control unit 321 so as to be transmitted to the first device 301 via the RF chip 322. The phase detector 322b detects the phase of a carrier wave constituting information received from the first device 301, and detects the phase of the signal oscillated by the oscillator 323 in the second device 302.

The second device 302 is installed within a predetermined distance from the acquisition device 304. The second device 302 may be installed so as to be in contact with the acquisition device 304, may be installed integrally with the acquisition device 304 (that is, the acquisition device 304 may have the function of the second device 302 and also function as the second device 302), or may be installed at a position away from the acquisition device 304. The "within a predetermined distance" is a concept including not only a case where the second device is installed so as to be in contact with the outer edge of the acquisition device but also a case where the second device is installed integrally with the acquisition device. In a case where the second device 302 is installed at a position away from the acquisition device 304, it is preferable that the second device 302 is installed within a predetermined distance from the acquisition device 304, for example, within 10 m, within 5 m, or within 1 m. In addition, the case where the second device 302 is installed integrally with the acquisition device 304 is a concept including a case where the acquisition device 304 has the function of the second device 302. In order to accurately clock time when the acquisition device 304 acquires information, it is preferable that the acquisition device 304 has the function of the second device 302 and also functions as the second device 302.

(Server Apparatus)

Next, the server apparatus will be described. As for the hardware configuration and function of the server apparatus 303, the description of the computer apparatus 205 in the second embodiment can be adopted within a necessary range.

In the system 310, by correcting a time deviation and a phase deviation of the second device 302 on the basis of the first device 301, the second device can accurately clock time. Here, as will be described later, a distance between the first device 301 and the second device 302 can be calculated after correcting the time deviation and the phase deviation of the second device 302. In addition, as will be described later, the position of the second device can be measured on the basis of the positions of the plurality of first devices 301 and respective distances between the plurality of first devices 301 and the second device 302. The second device 302 is installed within the predetermined distance from the acquisition device 304, and by measuring the position of the second device 302, it is possible to specify at which position the acquisition device 304 acquires the water content or the information enabling specification of the water content.

(Distance Calculation Processing)

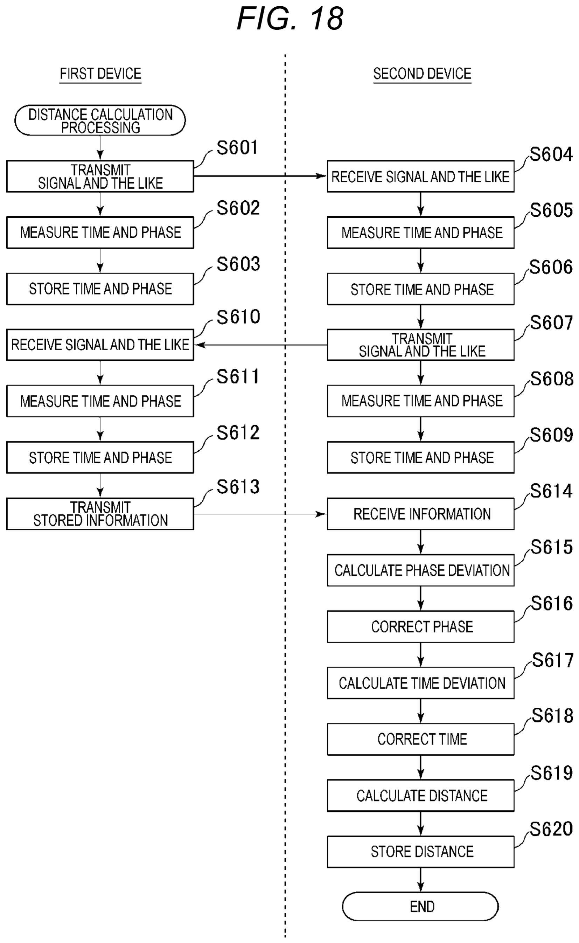

Hereinafter, the correction of the time deviation and the phase deviation and the calculation of the distance will be described. The correction of the time deviation and the phase deviation and the calculation of the distance (hereinafter, distance calculation processing) can be executed, for example, at predetermined time intervals or every time a predetermined condition is satisfied. Fig. 18 is a diagram illustrating a flowchart of the distance calculation processing according to the embodiment of the present invention. The frequency of executing the distance calculation processing is not particularly limited, and the distance calculation processing may be executed, for example, once a day at a predetermined time, or may be executed once every 1 hour.

First, the first device 301 transmits information or a signal to the second device 302 (step S601). The information or signal transmitted from the first device 301 to the second device 302 is not particularly limited. The first device 301 clocks a time at which the information or the signal is transmitted in step S601, and measures a phase at the time of transmission (step S602). Then, the clocked time and the measured phase are stored in a memory in the control unit 311 (step S603).

Next, the second device 302 receives the information or the signal from the first device 301 (step S604). The second device 302 clocks a time at which the information or the signal is received in step S604 and measures a phase at the time of reception (step S605). Then, the clocked time and the measured phase are stored in a memory in the control unit 322 (step S606).

Next, the second device 302 transmits information or a signal to the first device 301 (step S607). The information or signal transmitted from the second device 302 to the first device 301 is not particularly limited. The second device 302 clocks a time at which the information or the signal is transmitted in step S607, and measures a phase at the time of transmission (step S608). Then, the clocked time and the measured phase are stored in the memory in the control unit 322 (step S609).

The first device 301 receives the information or the signal transmitted in step S607 (step S610). The first device 301 clocks a time at which the information or the signal is received in step S610 and measures a phase at the time of reception (step S611). Then, the clocked time and the measured phase are stored in the memory in the control unit 311 (step S612). When step S612 ends, the process proceeds to step S613.

The first device 301 transmits information on the time at which the signal is transmitted in step S601 and the phase at the time of transmission, which are stored in step S603, and information on the time at which the signal is received in step S610 and the phase at the time of reception, which are stored in step S612, to the second device 302 by the RF chip 312 (step S613).

Then, the second device 302 receives the information on the time at which the information or the signal is transmitted by the first device 301 in step S601 and the phase at the time of transmission, and the information on the time at which the information or the signal is received by the first device 301 in step S610 and the phase at the time of reception (step S614).

Next, the control unit 321 of the second device 302 calculates a phase deviation between the phase of a signal generated by the oscillator 313 of the first device 301 and the phase of a signal generated by the oscillator 323 of the second device 302 (step S615). The phase deviation can be calculated on the basis of a phase difference between the phase of the carrier wave constituting the information or the signal transmitted from the first device 301 to the second device 302 and the phase of the signal oscillated by the oscillator 323 of the second device 302 when the information or the signal is received by the second device 302, and a phase difference between the phase of the carrier wave constituting the information or the signal transmitted from the second device 302 to the first device 301 and the phase of the signal oscillated by the oscillator 313 of the first device 301 when the information or the signal is received by the first device 301.

The phase of the carrier wave constituting the information or the signal transmitted from the first device 301 to the second device 302 is the phase of the information or the signal transmitted in step S601. The information on the phase is transmitted from the first device 301 to the second device 302 in step S613. The phase of the signal oscillated by the oscillator 323 of the second device 302 when the information or the signal is received by the second device 302 is the phase of the information or the signal received in step S604. The information on the phase is measured by the second device 302 in step S605 and stored in step S606. The phase of the carrier wave constituting the information or the signal transmitted from the second device 302 to the first device 301 is the phase of the information or the signal transmitted in step S607, for example. The information on the phase is stored by the second device 302 in step S609. The phase of the signal oscillated by the oscillator 313 of the first device 301 when the information or the signal is received by the first device 301 is the phase of the information or the signal received in step S610, for example. The information on the phase is measured in step S611 and transmitted from the first device 301 to the second device 302 in step S613.

Here, the phase of the carrier wave constituting the information or the signal transmitted from the first device 301 to the second device 302 is a concept including not only the phase of the carrier wave constituting the information or the signal transmitted from the first device 301 to the second device 302 but also the phase of a carrier wave constituting a signal obtained by mixing down the information or the signal. Similarly, the phase of the carrier wave constituting the information or the signal transmitted from the second device 302 to the first device 301 is a concept including not only the phase of the carrier wave constituting the information or the signal transmitted from the second device 302 to the first device 301 but also the phase of a carrier wave constituting a signal obtained by mixing down the information or the signal.

A phase difference $\Delta\Phi_P$ generated by the signal propagating between the first device 301 and the second device 302 can be calculated from the arithmetic mean of a phase difference $\Delta\Phi_S$ and a phase difference $\Delta\Phi_M$, by defining: as $\Delta\Phi_S$, the phase difference between the phase of the carrier wave constituting the information or the signal transmitted from the first device 301 to the second device 302 and the phase of the signal oscillated by the oscillator 323 of the second device 302 when the information or the signal is received by the second device 302; and as $\Delta\Phi_M$, the phase difference between the phase of the carrier wave constituting the information or the signal transmitted from the second device 302 to the first device 301 and the phase of the signal oscillated by the oscillator 313 of the first device 301 when the information or the signal is received by the first device 301. That is, the phase difference $\Delta\Phi_P$ can be calculated by

$$\text{Equation (1): } \Delta\Phi_P = 1/2 \times (\Delta\Phi_S + \Delta\Phi_M).$$

When the phase deviation between the first device 301 and the second device 302 is defined as $\Delta\Phi_C$, the relationship expressed by Equation (2): $\Delta\Phi_M = \Delta\Phi_P + (-\Delta\Phi_C)$ is established, so that the phase deviation $\Delta\Phi_C$ can be calculated by subtracting the phase difference $\Delta\Phi_M$ from the phase difference $\Delta\Phi_P$. That is, the phase deviation $\Delta\Phi_C$ can be calculated by Equation (3): $\Delta\Phi_C = 1/2 \times (\Delta\Phi_S - \Delta\Phi_M)$. In step S615, the phase deviation between the first device 301 and the second device 302 is calculated using Equation (3).

Here, the phase deviation $\Delta\Phi_C$ is calculated by Equation (3), but in some cases, the phase deviation $\Delta\Phi_C$ to be calculated may be obtained by further subtracting $2\pi$ or $4\pi$, that is, $2n\pi$. n may take zero or a positive integer. Therefore, it is also possible to specify whether n is zero, or an integer such as 1 or 2 (that is, whether the value obtained by further subtracting $2n\pi$ from the phase deviation $\Delta\Phi_C$ obtained by Equation (3) is the original phase deviation or whether the value not subtracted is the original phase deviation) on the basis of a propagation time TP to be described later or a time deviation between the first device 301 and the second device 302.

There may be a case in which the signal transmitted from the first device 301 to the second device 302 and the signal transmitted from the second device 302 to the first device 301 start with an output that is not zero but is an arbitrary value at the start of transmission. In such a case, it is necessary to correct the phase deviation $\Delta\Phi_C$ by measuring the phase at the start of transmission and the transmission time. Meanwhile, by configuring such that the phase at the start of transmission is always constant and transmission is performed at a predetermined time, it is possible to omit such a processing of correcting $\Delta\Phi_C$ after measuring the phase at the start of transmission and the transmission time.

The second device 302 corrects the phase of the signal generated by the oscillator 323 of the second device 302 to achieve synchronization with the signal generated by the oscillator 313 of the first device 301 based on the calculated phase deviation $\Delta\Phi_C$ (step S616). The correction of the phase in step S616 is controlled and executed by the control unit 321. The phase deviation of the oscillator 323 of the second device 302 occurs due to the influence of the environment around the second device 302. By executing the synchronization processing periodically in this manner, the clock 322a of the second device 302 can be continuously clocked with high accuracy.

Next, the first device 301 calculates a time deviation between the first device 301 and the second device 302 on the basis of the time at which the information or the signal is transmitted from the first device 301 to the second device 302, the time at which the information or the signal is transmitted from the second device 302 to the first device 301, the time at which the information or the signal is transmitted from the first device 301 and the second device 302 receives the information or the signal and clocks the time, and the time at which the information or the signal is transmitted from the second device 302 and the first device 301 receives the information or the signal and clocks the time (step S617).

The time at which the information or the signal is transmitted from the first device 301 to the second device 302 is the time at which the information is transmitted in step S601. The information on the time is transmitted from the first device 301 to the second device 302 in step S613. The time at which the information or the signal is transmitted from the second device 302 to the first device 301 is the time at which the information or the signal is transmitted in step S607. The information on the time is stored by the second device 302 in step S609. Next, the time at which the information or the signal is transmitted from the first device 301 and the second device 302 receives the information or the signal and clocks the time is the time at which the information is received in step S604. The information on the time is clocked by the second device 302 in step S605 and stored in step S606. The time at which the information or the signal is transmitted from the second device 302 and the first device 301 receives the information or the signal and clocks the time is the time at which the information or the signal is received in step S610. The information on the time is clocked in step S611 and transmitted from the first device 301 to the second device 302 in step S613.

The time deviation between the first device 301 and the second device 302 can be calculated by Equation (4): $T_L = 1/2 ((T_{SM} - T_S) - (T_{MS} - T_M))$ by defining: as $T_M$, the time at which the information or the signal is transmitted from the first device 301 to the second device 302; as $T_S$, the time at which the information or the signal is transmitted from the second device 302 to the first device 301; as $T_{MS}$, the time at which the information or the signal is transmitted from the first device 301 and the second device 302 receives the information or the signal and clocks the time; and further as $T_{SM}$, the time at which the information or the signal is transmitted from the second device 302 and the first device 301 receives the information or the signal and clocks the time. In step S617, the time deviation between the first device 301 and the second device 302 is calculated by Equation (4). The second device 302 corrects the time in the second device 302 so as to be synchronized with the time in the first device 301 on the basis of the calculated time deviation (step S618).

Next, the distance between the first device 301 and the second device 302 is calculated (step S619). In step S619, the distance between the first device 301 and the second device 302 can be calculated by calculating a propagation time during which the information or the signal propagates between the first device 301 and the second device 302 on the basis of a substantial difference between a time at which the first device 301 transmits the information or the signal and a time at which the second device 302 receives the information or the signal, and multiplying the propagation time by a propagation speed (for example, the speed of light) of the information or the signal. The difference between the time at which the first device 301 transmits the information or the signal and the time at which the second device 302 receives the information or the signal can be calculated on the basis of, for example, the time at which the first device 301 transmits the information or the signal to the second device 302 in step S601 (the time transmitted from the first device 301 to the second device 302 in step S613), the time at which the second device 302 receives the information or the signal from the first device 301 in step S604, which is the time stored in the memory in step S606, and the time deviation calculated in step S617.

In addition, in step S619, the distance between the first device 301 and the second device 302 can be calculated by calculating a propagation time during which the information or the signal propagates between the first device 301 and the second device 302 on the basis of a substantial difference between a time at which the second device 302 transmits the information or the signal and a time at which the first device 301 receives the information or the signal, and multiplying the propagation time by a propagation speed (for example, the speed of light) of the information or the signal. The difference between the time at which the second device 302 transmits the information or the signal and the time at which the first device 301 receives the information or the signal can be calculated on the basis of, for example, the time at which the second device 302 transmits the information or the signal to the first device 301 in step S607, which is the time stored in the memory in step S609, the time at which the first device 301 receives the information or the signal in step S610 (transmitted from the first device 301 to the second device 302 in step S613), and the time deviation calculated in step S617.

The distance between the first device 301 and the second device 302 calculated in step S619 is stored in the memory in the control unit 321 in association with, for example, time information related to the calculated time or the like and identification information enabling identification of the first device 301 (or position information of the first device 301) (step S620). By executing step S620, the distance calculation processing ends.

By executing the processes of steps S601 to S620, not only the time deviation and the phase deviation between the first device 301 and the second device 302 can be corrected, but the distance between the first device 301 and the second device 302 can also be calculated. Although the time deviation between the first device 301 and the second device 302 is corrected in step S618, it is not always necessary to correct the time deviation, and the distance between the first device 301 and the second device 302 can also be calculated on the basis of the time deviation calculated in step S617 without correcting the time deviation. In addition, although the phase deviation between the first device 301 and the second device 302 is corrected in step S616, it is not always necessary to correct the phase deviation, and the distance between the first device 301 and the second device 302 can also be calculated without correcting the phase deviation.

In addition, by executing the processes of steps S601 to S620, the time deviation and the phase deviation between the first device 301 and the second device 302 are corrected, and the distance between the first device 301 and the second device 302 is calculated. However, the process of correcting the time deviation between the first device 301 and the second device 302, the process of correcting the phase deviation between the first device 301 and the second device 302, and the process of calculating the distance between the first device 301 and the second device 302 can be individually executed.

In the above process of calculating the distance between the first device 301 and the second device 302, the distance between one second device 302 and each of the plurality of first devices 301 can be calculated. In the case of specifying the position of the second device 302, the distance between the first device 301 and the second device 302 is specified for the number of first devices 301 required for specifying the position as described later. However, even in a case where the distance between one second device 302 and each of the plurality of first devices 301 is calculated, the time deviation correction processing and the phase deviation correction processing may be performed only with one first device 301, and the time deviation correction processing and the phase deviation correction processing may not be executed at the time of communication with the other first devices 301.

Here, the second device 302 calculates the distance between the first device 301 and the second device 302, but instead of the second device 302, the first device 301 may calculate the distance between the first device 301 and the second device 302 by a process similar to step S619. In a case where the first device 301 calculates the distance, the distance between the first device 301 and the second device 302 is stored in the memory in the control unit 311 in association with the time information related to the calculated time or the like and identification information enabling identification of the second device 302.

In addition, instead of the second device 302, the server apparatus 303 may calculate the distance between the first device 301 and the second device 302 by a process similar to step S619. In a case where the server apparatus 303 calculates the distance, information necessary for the calculation is received from the first device 301 and/or the second device 302. In a case where the server apparatus 303 calculates the distance, the distance between the first device 301 and the second device 302 is stored in the storage unit of the server apparatus 303 in association with the time information related to the calculated time or the like, the identification information enabling identification of the first device 301 (or the position information of the first device 301), and the identification information enabling identification of the second device 302.

Here, the distance between the first device 301 and the second device 302 is calculated. In a case where there are a plurality of second devices 302, a distance between one second device 302 and another second device 302 different therefrom can be calculated. In this case, the distance between the one second device 302 and the other second device 302 can be calculated by calculating a propagation time during which information or a signal propagates between the one second device 302 and the other second device 302 on the basis of a substantial difference between a time at which the one second device 302 transmits the information or the signal and a time at which the other second device 302 receives the information or the signal, and multiplying the propagation time by a propagation speed (for example, the speed of light) of the information or the signal.

(Acquisition Device)

Next, the acquisition device 304 will be described. The acquisition device 304 is not particularly limited as long as it has a function of measuring the water content under the ground surface or has a function of measuring the information enabling specification of the water content under the ground surface. As a device having these functions, a known device can be used. In a case where the acquisition device 304 measures the information enabling specification of the water content under the ground surface, the acquisition device 304 can specify the water content on the basis of the measured information. In addition, for example, the information enabling specification of the water content under the ground surface acquired by the acquisition device 304 may be transmitted to another computer apparatus, and the water content may be specified by the other computer apparatus. The acquisition device 304 includes a known water content sensor that acquires a physical property value of soil or sand, such as permittivity, capacitance, thermal conductivity, or electrical conductivity of soil or sand under the ground surface, and specifies the water content on the basis of the acquired information. The acquisition device 304 also includes a device that acquires the reception intensity of an electromagnetic wave as the information enabling specification of the water content as described below.

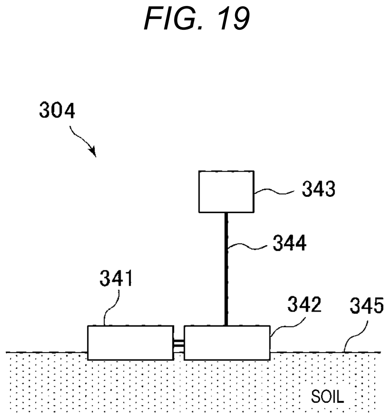

Fig. 19 is a block diagram illustrating a configuration of the acquisition device according to the embodiment of the present invention. Fig. 19 relates to the acquisition device that acquires the reception intensity of an electromagnetic wave by an antenna as the information enabling specification of the water content of soil or sand under the ground surface. The acquisition device 304 includes an antenna 341, a reactance circuit 342, and a control circuit 343, which are electrically connected to each other. The acquisition device 304 may include another configuration as necessary in addition to the antenna 341, the reactance circuit 342, and the control circuit 343.

The antenna 341 has a function of receiving an electromagnetic wave. It is preferable that the electromagnetic wave received by the antenna 341 is transmitted from a predetermined transmission antenna at a predetermined distance from the antenna 341. The electromagnetic wave received by the antenna 341 is not particularly limited as long as it is an electromagnetic wave. It is preferable that the electromagnetic wave is a standard radio wave used for a terrestrial television broadcasting wave, a radio broadcasting wave, or standard-time and frequency-signal emission from the viewpoint of penetrating deep into hydrous soil.

The shape of the antenna 341 is not particularly limited as long as the electromagnetic wave can be received, and may be appropriately selected from shapes such as a rod shape, a planar shape, and a spiral shape depending on the wavelength of the received electromagnetic wave.

The antenna 341 may be installed at any point where it is desired to acquire the information enabling specification of the water content, and above and in the vicinity of the ground surface. In Fig. 19, the antenna 341 is installed above the ground surface formed by soil 345 and in the vicinity of the ground surface. In a case where the antenna 341 is installed above and in the vicinity of the ground surface, the electromagnetic wave has a smaller propagation loss and the antenna 341 has higher reception sensitivity as compared with a case where the antenna 341 is installed in the ground or in a space away from the ground surface.

The electromagnetic wave received by the antenna 341 includes electromagnetic waves of various wavelengths. From the viewpoint of improving the reception sensitivity of the electromagnetic wave received by the antenna 341, it is preferable to provide a filter function for removing noise between the antenna 341 and the control circuit 343. By using the reactance circuit as this filter function, an electromagnetic wave in a frequency band different from the electromagnetic wave transmitted by the transmission antenna can be removed as noise. By using the reactance circuit whose resonance frequency matches or approximates the frequency of the electromagnetic wave transmitted by the transmission antenna, it is possible to remove an electromagnetic wave in a frequency band different from the electromagnetic wave transmitted by the transmission antenna.

The electromagnetic wave received by the antenna 341 passes through the reactance circuit 342 to be transmitted to the control circuit 343 by a transmission line 344 as an AC signal including information on the received electromagnetic wave. The control circuit 343 can convert the AC signal into a DC signal proportional to the reception intensity and transmit the DC signal to the server apparatus 303 as information on the reception intensity of the electromagnetic wave. Alternatively, the control circuit 343 can transmit the DC signal to the second device 302 as the information on the reception intensity of the electromagnetic wave. The process in which the second device 302 transmits the information on the reception intensity of the electromagnetic wave to the server apparatus 303 corresponds to step S702 to be described later.

The server apparatus 303 can specify the water content on the basis of the information on the reception intensity. For example, for a multiple soils having different water contents (the water contents are known), the reception intensity (for example, the intensity of the DC signal) obtained when an electromagnetic wave transmitted at a predetermined intensity and a predetermined frequency from a predetermined transmission antenna is received by the reception antenna is measured, and a relationship between the water content and the information on the reception intensity is stored as a data table, or a relational expression between the water content and the reception power is stored. Then, the water content can be specified by referring to the above data table on the basis of the reception intensity (for example, the intensity of the DC signal received by the server apparatus 303) obtained when an electromagnetic wave transmitted under the same condition as the soil with a known water content, that is, the electromagnetic wave transmitted at a predetermined intensity and a predetermined frequency from a predetermined transmission antenna is received by the reception antenna, or by substituting the reception intensity into the above relational expression. Although the case in which the server apparatus 303 specifies the water content on the basis of the information on the reception intensity has been described here, the second device 302 or the acquisition device 304 may specify the water content on the basis of the information on the reception intensity.

Note that the process of specifying the water content can be executed, for example, after the server apparatus 303 receives the information on the reception intensity in step S703 and before the storage unit stores water content information in step S706 to be described later. In a case where the process of specifying the water content is executed before the storage unit stores water content information in step S706, the specified water content can be stored as the water content information in step S706.

The frequency with which the acquisition device 304 acquires the information enabling specification of the water content under the ground surface may be appropriately designed. For example, in a case where the acquisition device 304 includes another sensor such as a temperature sensor and a humidity sensor, an increase/decrease in the acquisition frequency may be automatically changed according to a predetermined condition set for temperature, humidity, or the like measured by the other sensor. In a case where the rate of increase of the humidity during the lapse of a predetermined time exceeds a predetermined value, the water content of soil may increase. Therefore, the acquisition frequency can be increased from every 10 minutes to every 5 minutes, every 1 minute, or the like in preparation for a disaster. On the other hand, in a case where the rate of increase of the humidity during the lapse of a predetermined time is lower than the predetermined value, the water content of soil may decrease. Therefore, the frequency of acquiring the information enabling specification of the water content can be decreased from every 5 minutes, every 1 minute, or the like to every 10 minutes.

The frequency with which the acquisition device 304 acquires the information enabling specification of the water content under the ground surface may be changed according to an environment around the acquisition device 304. Another sensor such as a humidity sensor may be installed in the acquisition device 304, and the frequency of acquiring the information enabling specification of the water content may be changed in a case where information acquired by the sensor satisfies a predetermined condition (for example, the humidity is equal to or higher than a threshold). Note that the second device 302 can also control the frequency and timing of acquiring the information enabling specification of the water content by the acquisition device 304.

The information of the water content under the ground surface or the information enabling specification of the water content acquired by the acquisition device 304 is transmitted from the second device 302 to the server apparatus 303 and is stored in the storage unit of the server apparatus 303 in association with a date and time when these pieces of information are acquired (date and time clocked by the second device 302). These pieces of information may also be stored in the memory in the control unit 321 of the second device 302.

(Management Terminal)

As for the hardware configuration and function of the management terminal 305, the description of the computer apparatus 103 in the first embodiment can be adopted within a necessary range.

As will be described later, the management terminal 305 can receive a warning from the server apparatus 303 in a case where there is an abnormality in the water content information. In addition, as will be described later, since the server apparatus 303 stores the water content information in association with time, it is also possible to display temporal transition of the water content information in a graph or the like on the display screen of the management terminal 305 by the management terminal 305 accessing the server apparatus 303.

(Information Acquisition Processing)

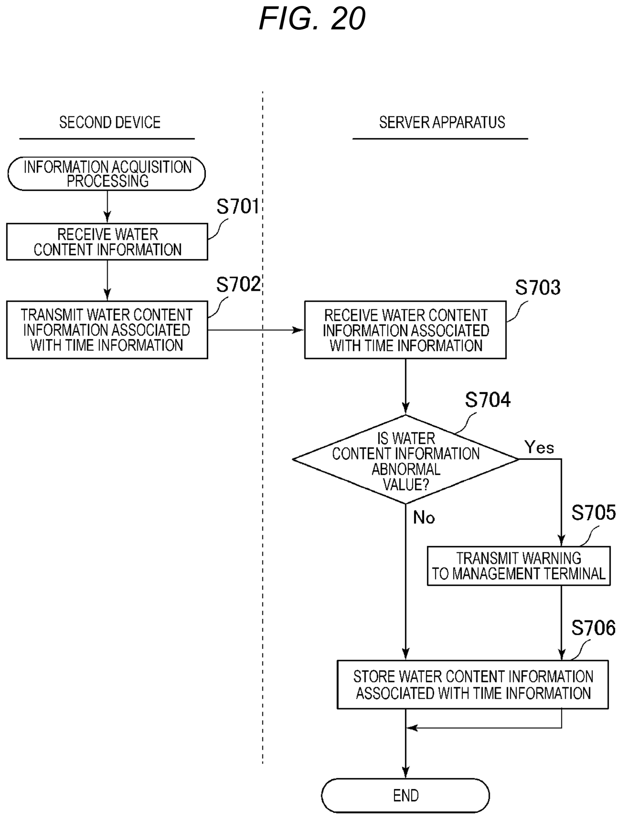

Next, information acquisition processing for transmitting the water content or the information enabling specification of the water content under the ground surface acquired by the acquisition device 304 to the server apparatus 303 and storing it as a history will be described below. Fig. 20 is a diagram illustrating a flowchart of the information acquisition processing for acquiring the information enabling specification of the water content according to the embodiment of the present invention.

First, the second device 302 receives the water content or the information enabling specification of the water content (for example, the information on the electromagnetic wave received by the antenna; hereinafter, also collectively referred to as "water content information" by combining the water content or the information enabling specification of the water content) from the acquisition device 304 (step S701). The water content information acquired by the second device 302 may be, for example, any of the water content acquired by the acquisition device 304, the physical property value of soil such as permittivity, capacitance, thermal conductivity, or electrical conductivity of soil acquired by the acquisition device 304, the water content specified on the basis of the acquired physical property value, the reception intensity of the electromagnetic wave by the antenna (including the intensity obtained when the intensity of a signal received by the antenna is amplified or attenuated), and the water content specified on the basis of the reception intensity.

The second device 302 clocks a time at which the water content information is received in step S701, associates information (hereinafter, also referred to as time information) on the time (the time at which the water content information is received) clocked by the second device 302 with the water content information, and transmits the information to the server apparatus 303 (step S702). It is desired that the acquisition device 304 transmits the acquired water content information to the second device 302 immediately after acquiring the water content information. With such a configuration, it is possible to reduce a deviation between a time at which the water content information is acquired by the acquisition device 304 and the time clocked by the second device 302.

In a case where the acquisition device 304 has the function of the second device 302 and also functions as the second device 302, the acquisition device 304 clocks the time at which the water content information is acquired by the acquisition device 304, and transmits the clocked time and the water content information in association with each other to the server apparatus 303 instead of steps S701 and S702.

Next, the server apparatus 303 receives the water content information associated with the time information from the second device 302 (step S703). The server apparatus 303 determines whether or not the water content information received in step S703 satisfies a predetermined condition (step S704). The predetermined condition is not particularly limited, but may be a condition that the water content information is an abnormal value different from a normal value. In this case, in step S704, it is determined whether or not the water content information received in step S703 is an abnormal value. A range in which the water content information is an abnormal value can be appropriately set on the basis of the water content or the information enabling specification of the water content of soil at the time of occurrence of flooding of a river or a landslide in the past. That is, the predetermined condition may be a condition determined on the basis of the water content or the information enabling specification of the water content. In addition, it is also possible to adopt a configuration in which the server apparatus 303 specifies the predetermined condition on the basis of past water content information and information related to a disaster situation such as whether or not a disaster has occurred in the past and the degree of the disaster if the disaster has occurred.

In a case where it is determined in step S704 that the water content information does not satisfy the predetermined condition, for example, in a case where it is determined that the water content information is not an abnormal value (No in step S704), the water content information is stored in the storage unit in association with the time (time information) clocked by the second device 302 (step S706). In this manner, the information acquisition processing ends.

On the other hand, in a case where it is determined in step S704 that the water content information satisfies the predetermined condition, for example, in a case where it is determined that the water content information is an abnormal value (Yes in step S704), a warning indicating that the water content information is an abnormal value is transmitted to the management terminal 305 (step S705). Then, the water content information is stored in the storage unit in association with the time (time information) clocked by the second device 302 (step S706). In this manner, the information acquisition processing ends.

In a case where the warning is transmitted to the management terminal 305 by the process of step S705, a business operator or the like who manages the system 310 can transmit an emergency alert to a local government on the basis of the warning. In addition, in a case where it is determined in step S704 that the water content information satisfies the predetermined condition, for example, in a case where it is determined that the water content information is an abnormal value, information on the warning may be transmitted to a computer apparatus having a predetermined relationship with the second device 302 or the acquisition device 304. Specifically, for example, the server apparatus 303 can transmit the information on the warning (for example, information indicating that the water content information is an abnormal value, or information for notifying a user that there is a risk of a disaster or the like) to a user terminal having a predetermined positional relationship with the second device 302 or the acquisition device 304 (for example, a user terminal within a predetermined range from the second device 302 or the acquisition device 304, a user terminal present in a region within a predetermined range from the second device 302 or the acquisition device 304, a user terminal capable of communicating with a reference station within a predetermined range from the second device 302 or the acquisition device 304, a user terminal possessed by a resident of a region within a predetermined range from the second device 302 or the acquisition device 304, or the like). Note that the user may be a person who has made a contract or the like to receive a warning from the system 310, or may be a person who has not made a contract or the like to receive a warning from the system 310. The user terminal that has received these pieces of information may emit sound reporting the warning or display information reporting the warning.

(Position Specification Processing)

Position specification processing for specifying the position of the second device 302 will be described. In order to specify the position of the second device 302, it is a prerequisite that the distance between one second device 302 and each of the plurality of first devices 301 is calculated in the distance calculation processing. For example, in a case where the one second device 302 and the plurality of first devices 301 are at the same height positions, that is, in a case where these devices exist on the same XY plane, the position of the second device 302 (for example, XY coordinates of the second device 302) can be specified on the basis of respective distances between one second device 302 and three first devices 301 and the respective positions of the three first devices 301. Therefore, in a case where the one second device 302 and the plurality of first devices 301 are at the same height positions, the number of distances between the first devices 301 and the second device 302 required for specifying the position is 3.

In addition, for example, in a case where the one second device 302 and at least any of the plurality of first devices 301 have different heights, and do not exist on the same plane, the position of the second device 302 (for example, XYZ coordinates or latitude/longitude/altitude of the second device 302) can be specified on the basis of respective distances between one second device 302 and four first devices 301 and the respective positions of the four first devices 301. Therefore, in a case where the one second device 302 and at least any of the plurality of first devices 301 have different heights and do not exist on the same plane, the number of distances between the first devices 301 and the second device 302 required for specifying the position is 4. In this case, it is preferable that the four first devices 301 do not exist on the same plane. For example, it is preferable that the installation height of at least one of the first devices 301 is different from the installation heights of the other three first devices 301. This makes it possible to specify the position of the second device 302 in three dimensions, no matter at which position the second device 302 is.

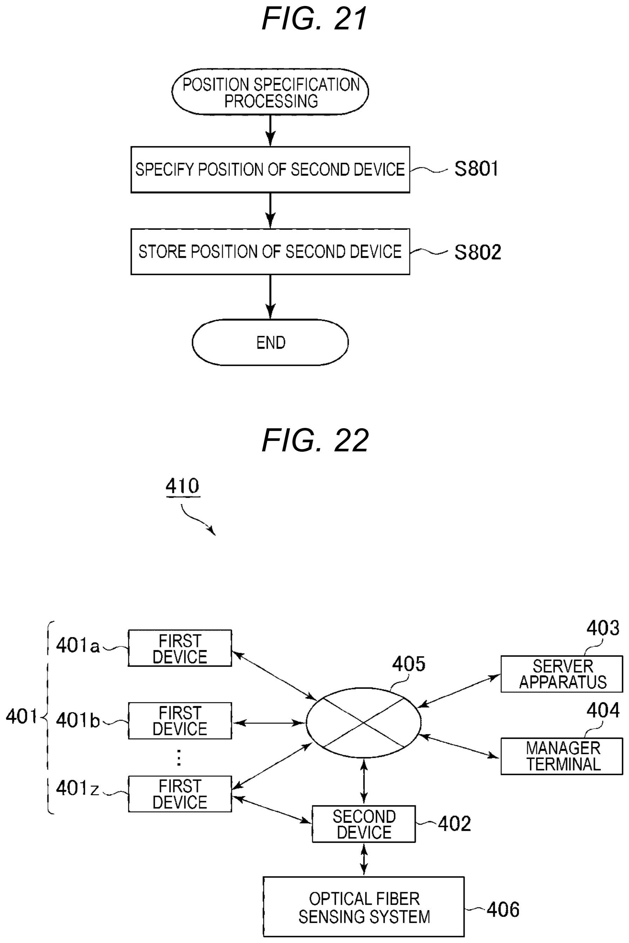

Fig. 21 is a diagram illustrating a flowchart of the position specification processing according to the embodiment of the present invention. The position specification processing illustrated in Fig. 21 can be executed by any of the first device 301, the second device 302, or the server apparatus 303, for example. In a case where the position specification processing is executed by the first device 301 or the server apparatus 303, information on the distance (distance calculated in step S619) between each of the plurality of first devices 301 and the second device 302 is transmitted to and used in the first device 301 or the server apparatus 303 in association with the time information related to the calculated time, the identification information of the first device 301 (or the position information of the first device 301), and the identification information of the second device 302.

In the position specification processing, the position of the second device 302 is specified on the basis of the distance between each of the plurality of first devices 301 and the second device 302 and the positions of the first devices 301 (step S801). The positions of the first devices may be stored in advance in any of the first device 301, the second device 302, or the server apparatus 303 that executes the position specification processing. The calculation process for specifying the position of the second device 302 is not particularly limited.

The specified position of the second device 302 is stored in the memory in the control unit 311 of the first device 301, the memory in the control unit 321 of the second device 302, or the storage unit of the server apparatus 303 in association with the time information related to the calculated time (the time information related to the time when the distance is calculated or the time information related to the time when the position is specified), the identification information of the first device 301 (or the position information of the first device 301), and the identification information of the second device 302 (step S802). With steps S801 and S802, the position specification processing ends.

It is preferable that the distances between the plurality of first devices 301 and the second device 302, on the basis of which the position of the second device 302 is specified in step S801, are calculated at the same time or close times (for example, the distances are calculated in a case where the times of measuring the propagation time of the information or the signal between each of the plurality of first devices and the second device are the same time or close times). Here, the "close times" are not particularly limited, but are preferably times within a predetermined time range from the time at which the distance between one first device 301 and the second device 302 is calculated. By using the distances between the plurality of first devices 301 and the second device 302 calculated at the same time or close times, the position at this time can be specified more accurately.

Here, the distance between each of the plurality of first devices 301 and the second device 302 is calculated, and the position of the second device 302 is specified on the basis of the calculated distance. However, in a case where there are a plurality of second devices 302, a distance between one second device 302 and each of the plurality of second devices 302 different from the one second device 302 can be calculated, and the position of the one second device 302 can be specified on the basis of the calculated distance.

In step S702 of the information acquisition processing, the second device 302 may transmit the water content information and the specified position information of the second device 302 to the server apparatus 303 in association with the time (time information) clocked by the second device 302. In this case, the latest position information specified by the second device 302 is used as the position information transmitted from the second device 302 to the server apparatus 303.

In step S706, the time (time information) clocked by the second device 302, the water content information, and the position information can be stored in the storage unit of the server apparatus 303 in association with each other. In addition, in step S704, the server apparatus 303 may determine whether or not the water content information is an abnormal value on the basis of the water content information and the position information associated with the clocked time (time information). Since the range of the water content to be determined to be abnormal is considered to be different depending on the position where the acquisition device 304 is installed, for example, a different value can be used depending on the position information as a threshold for determining that the water content information is an abnormal value.

Since it is possible to detect a change in the position of the acquisition device 304 by specifying the position information in addition to acquiring the water content or the information enabling specification of the water content in association with the time, it is also possible to grasp the sign of a landslide, a debris flow, or the like.

In the above description, the case has been described in which the second device 302 calculates the phase deviation in step S615 and/or calculates the time deviation in step S617 of the distance calculation processing. However, the first device 301 or the server apparatus 303 may calculate the phase deviation and/or calculate the time deviation. In these cases, the first device 301 or the server apparatus 303 that calculates the phase deviation and/or calculates the time deviation can receive data regarding the time at which the information or the signal is transmitted from the first device 301 to the second device 302, the time at which the information or the signal is transmitted from the second device 302 to the first device 301, the time at which the information or the signal is transmitted from the first device 301 and the second device 302 receives the information or the signal and clocks the time, and the time at which the information or the signal is transmitted from the second device 302 and the first device 301 receives the information or the signal and clocks the time, and can calculate the phase deviation/time deviation between the first device 301 and the second device 302 on the basis of these times.

As described above, the system includes: the first wireless device; the acquisition device configured to acquire a water content under a ground surface or information enabling specification of a water content under a ground surface; and the second wireless device installed within a predetermined distance from the acquisition device, the system including: a time deviation calculator configured to calculate a time deviation between the first wireless device and the second wireless device by performing communication between the first wireless device and the second wireless device; a time corrector configured to correct a time in the second wireless device on the basis of the calculated time deviation; and a storage configured to store the water content or the information enabling specification of the water content in association with the time clocked by the second wireless device. As a result, the system can be provided that can acquire the water content or the information enabling specification of the water content in association with the time.

In addition, as described above, the system includes: a phase deviation calculator configured to calculate a phase deviation of the clock between the first wireless device and the second wireless device by performing communication between the first wireless device and the second wireless device; and a phase corrector configured to correct a phase in the second wireless device on the basis of the calculated phase deviation. As a result, the phase deviation of the clock between the wireless devices can be corrected.

In addition, as described above, the system includes a transmitter configured to transmit information on a warning to at least one computer apparatus in a case where the water content or the information enabling specification of the water content satisfies a predetermined condition. As a result, it is possible to report occurrence of a disaster or possibility of occurrence of a disaster.

In addition, as described above, the transmitter transmits the information on a warning to a computer apparatus having a predetermined relationship with the second wireless device or the acquisition device. As a result, it is possible to transmit the warning to, for example, a user near a place where the disaster occurs or a place where the disaster possibly occurs.

In addition, as described above, the predetermined condition is a condition determined on the basis of the water content or the information enabling specification of the water content. As a result, it is possible to transmit the warning on the basis of the water content or the information enabling specification of the water content at the time of occurrence of a disaster in the past, for example.

In addition, as described above, the acquisition device includes the antenna installed above and in the vicinity of the ground surface, the system including a specifier configured to specify the water content under the ground surface on the basis of information on an electromagnetic wave received by the antenna. As a result, the water content under the ground surface can be specified using the electromagnetic wave.

In addition, as described above, the acquisition device includes the antenna installed above and in the vicinity of the ground surface, the system including a detector configured to detect that the information on an electromagnetic wave received by the antenna satisfies a predetermined condition. As a result, it is possible to detect occurrence of a disaster or possibility of occurrence of a disaster using the electromagnetic wave, for example.

In addition, as described above, the antenna is connected to a reactance circuit. As a result, noise included in the electromagnetic wave can be removed.

In addition, as described above, the system includes the server apparatus, wherein the server apparatus includes the storage. As a result, the server apparatus can store the water content or the information enabling specification of the water content in association with the time.

In addition, as described above, the system includes the server apparatus, wherein the server apparatus includes the specifier. As a result, the server apparatus can specify the water content under the ground surface.

In addition, as described above, the system includes at least one computer apparatus, the system including a calculator configured to calculate information usable for detecting occurrence of a disaster or detecting possibility of occurrence of a disaster on the basis of communication between at least two wireless devices. As a result, the system can be provided that calculates the information usable for detecting occurrence of a disaster or detecting possibility of occurrence of a disaster on the basis of the communication between at least two wireless devices.

Note that the distance calculator and the time deviation calculator described above correspond to a subordinate concept of the calculator. The calculator only needs to have a function of calculating the information usable for detecting the occurrence of a disaster or sensing the possibility of the occurrence of a disaster, and is not limited to those described in the above first to third embodiments. The present invention may include a plurality of calculators having different functions. In addition, the system may use the above acquisition device for acquiring the water content under the ground surface or the information enabling specification of the water content under the ground surface, or the above optical fiber for sensing (sensor) that detects sound, vibration, and/or temperature alone or in combination with another apparatus. The system can use the information acquired by the acquisition device and/or the information detected by the optical fiber for the calculator.

[Fourth Embodiment]

In the fourth embodiment, a case in which a situation of a road, a building, or equipment is specified using an optical fiber will be described. That is, in the fourth embodiment, information on an optical signal received via the optical fiber may be information available for abnormality detection.

Fig. 22 is a block diagram illustrating a configuration of a system according to the embodiment of the present invention. As illustrated, a system 410 of the present invention includes at least one computer apparatus. Specifically, the system 410 may include a plurality of first devices 401 (401a to 401z), a second device 402, a server apparatus 403, a manager terminal 404, and an optical fiber sensing system 406. Although not illustrated, the system 410 may include a plurality of second devices 402, a plurality of server apparatuses 403, a plurality of manager terminals 404, or a plurality of optical fiber sensing systems 406. The first devices 401 and the second device 402 can directly establish communication connection. The second device 402 and the optical fiber sensing system 406 can establish communication connection. The first devices 401, the second device 402, and the manager terminal 404 can establish communication connection with the server apparatus 403 via a communication network 405.

(First Device)

The first device 401 is a reference device for synchronizing a clock of the second device 402, and one first device 401 can also function as a device for synchronizing clocks of the plurality of second devices 402. Since the first device 401 is a reference device for synchronizing the clock of the second device 402, the first device 401 preferably has a clock with higher accuracy.

As for the hardware configuration and function of the first device 401 according to the embodiment of the present invention, the description of the first device 301 in the third embodiment can be adopted within a necessary range.

In the system 410, the installation place of the first device 401 is not particularly limited, but it is preferable that the first device 401 is installed at a fixed position where the installation position can be specified. The first device 401 may be installed, for example, in a transmission tower for supporting an overhead power line. In addition, the plurality of first devices 401 may be installed. In order to accurately specify the position of the second device 402, the plurality of first devices 401 may be disposed at predetermined distances (for example, every 500 m) or may be disposed in a lattice shape. Note that position information regarding the installation of the first device 401 may be stored in the server apparatus 403 or the like in association with identification information enabling identification of the first device 401.

(Second Device)

Next, the second device 402 according to the embodiment of the present invention will be described. The second device 402 is a device installed in the vicinity of a reception unit included in the optical fiber sensing system 406. The vicinity of the reception unit refers to being within a predetermined distance from the reception unit. The predetermined distance can be changed according to a road, a building, or equipment. For example, in a case where the system 410 specifies the situation of equipment, the predetermined distance is preferably within 1 m, more preferably within 50 cm, and still more preferably within 10 cm.

The second device 402 may be configured as a device separate from a signal detection device included in the optical fiber sensing system 406, or may be configured as a device integrated with the signal detection device. The second device 402 may be incorporated in the signal detection device. In the following embodiment, a case in which the second device 402 is a device separate from the signal detection device will be described. In a case where the second device 402 is a device integrated with the signal detection device, the processing executed in the second device 402 is executed in the signal detection device.

The second device 402 has not only a function as a computer apparatus but also a function of synchronizing the clock of the second device 402 with reference to the time clocked by the first device 401. Specifically, in the system 410, the time of the second device 402 is synchronized with reference to the time clocked by the first device 401, and the phase of a signal generated by an oscillator in the second device 402 is synchronized with reference to the phase of a signal generated by the oscillator in the first device 401. In addition, the second device 402 may function as a reference device for synchronizing a clock of another second device 402. That is, the time of the other second device 402 is synchronized with reference to the time clocked by the second device 402, and the phase of a signal generated by an oscillator in the other second device 402 is synchronized with reference to the phase of a signal generated by the oscillator in the second device 402.

Next, a hardware configuration of the second device 402 will be described. As for the hardware configuration of the second device 402, a configuration similar to the hardware configuration of the first device 401 can be adopted. Note that the time clocked by the clock of the second device 402 is controlled by the control unit so as to be transmitted to the first device 401 via the RF chip. The phase detector detects the phase of a carrier wave constituting information received from the first device 401 and detects the phase of a signal oscillated by the oscillator of the second device 402. Note that the second device 402 may include a GPS reception unit. The GPS reception unit receives a GPS signal to specify the position of the second device 402.

(Server Apparatus)

Next, the server apparatus 403 according to the embodiment of the present invention will be described. The server apparatus 403 receives and analyzes information on an optical signal and a time at which the optical signal is received from the second device 402. The server apparatus 403 can specify the situation of a monitoring target by analyzing the information on the optical signal and the like.

Here, in the embodiment of the present invention, examples of the monitoring target include a road, a building, and equipment. The road is not particularly limited, but is a concept including not only a road along which vehicles or persons pass but also equipment accessory to the road. Examples of the road include a railroad, a bridge, and a tunnel. The server apparatus 403 can specify, for example, a congestion situation of the road, a situation related to the soundness of the road, or the type of a vehicle present on the road as the situation of the road.

The building is not particularly limited, but is a concept including not only the building itself but also a part of the building such as a floor, a wall, and a room in the building and equipment in the building. Examples of the building include a house, a commercial facility, an office building, a store, and a wooden building. The server apparatus 403 can specify, for example, a situation related to the soundness of the building, information on equipment in the building, or information on activities of a human or an animal in the building as the situation of the building.

The equipment is not particularly limited, but for example, one that slightly vibrates in operation. Examples thereof include an industrial machine, a construction machine, a precision machine, electronic equipment, a generator, an air conditioning system, transportation equipment, a home appliance, office equipment, and medical equipment. The server apparatus 403 can specify, for example, an operating situation of the equipment, durability of the equipment, a usage mode of the equipment, or a situation related to the soundness of the equipment as the situation of the equipment.

As for the hardware configuration and function of the server apparatus 403, the description of the computer apparatus 205 in the second embodiment can be adopted within a necessary range.

(Manager Terminal)

Next, the manager terminal 404 according to the embodiment of the present invention will be described. The manager terminal 404 is a terminal operated by a manager. The manager is not particularly limited, but may be, for example, a person belonging to an organization that manages the road, the building, or the equipment. The manager can grasp the situation of the road, the building, or the equipment by using the manager terminal 404.

The manager terminal 404 is not particularly limited as long as it has a function as a computer apparatus. Examples of the manager terminal 404 include a conventional mobile phone, a tablet terminal, a smartphone, a mobile terminal, a desktop/notebook personal computer, and the like.

As for the hardware configuration and function of the manager terminal 404, the description of the computer apparatus 103 in the first embodiment can be adopted within a necessary range. The control unit of the manager terminal 4 outputs a signal for displaying a character or an image on the display screen according to the result of arithmetic processing. For example, in a case where the server apparatus 403 determines that there is an abnormality in the road, the building, or the equipment, the display unit of the manager terminal 4 may display the contents of the abnormality and the occurrence place of the abnormality. Here, the display screen of the display unit of the manager terminal 4 may be a touch panel including a touch sensor. In this case, the touch panel functions as the input unit of the manager terminal 4.

(Optical Fiber Sensing System)

Next, the optical fiber sensing system 406 according to the embodiment of the present invention will be described. The optical fiber sensing system 406 transmits information on an optical signal received via an optical fiber 461 to the second device 402 or the server apparatus 403. Alternatively, the optical fiber sensing system 406 may receive information on the time from the second device 402 and analyze the information on the optical signal received via the optical fiber 461 and a time at which the optical signal is received.

Note that the "information on the optical signal" may include the optical signal itself, a digital signal obtained by being converted from the analog optical signal, and information obtained by analyzing the optical signal.

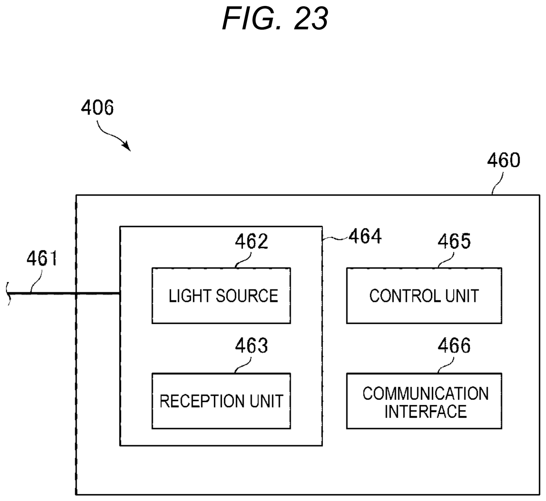

Fig. 23 is a block diagram illustrating a configuration of the optical fiber sensing system 406 according to the embodiment of the present invention. The optical fiber sensing system 406 includes the optical fiber 461 and a signal detection device 460. The signal detection device 460 includes a detection unit 464 including a light source 462 and a reception unit 463, a control unit 465, and a communication interface 66. The control unit 465 is, for example, a CPU, a main memory, or the like.

The optical fiber 461 is laid in the vicinity of the road, the building, or the equipment. Here, the vicinity of the road, the building, or the equipment refers to being within a predetermined distance from the road, the building, or the equipment. The predetermined distance can be changed according to the type of the road, the building, or the equipment, or according to the situation of the road, the building, or the equipment to be specified. For example, in a case where the optical fiber 461 is laid in the vicinity of the road, the predetermined distance is preferably within 5 m, more preferably within 2 m, and still more preferably within 1 m.

In addition, laying the optical fiber 461 includes a case where the optical fiber 461 is merely placed in the vicinity of the monitoring target and a case where the optical fiber 461 is fixed. In a case where the optical fiber 461 is fixed, the optical fiber 461 may be attached to the vicinity of the monitoring target, may be embedded in the vicinity of the monitoring target, or may be integrated into the monitoring target. As the optical fiber 461, an optical fiber used as communication infrastructure may be used. The optical fiber 461 is connected to the detection unit 464.

The light source 462 is a light source for allowing pulsed light to be incident on the optical fiber 461. The light incident on the optical fiber 461 from the light source 462 generates an optical signal (also referred to as back reflected light) returning toward the light source 462 during transmission through the optical fiber 461. The optical signal generated in the optical fiber 461 is received by the reception unit 463.

For example, the optical fiber sensing system 406 may periodically (for example, every 0.01 seconds) cause light to be incident on the optical fiber 461 from the light source 462 for a predetermined time (for example, 1 second), and receive the optical signal at the reception unit 463 via the optical fiber 461. The optical signal received by the reception unit 463 may be converted into a digital signal.

(Distance Calculation Processing)

In distance calculation processing, the system 410 can calculate a distance between the first device 401 and the second device 402 by synchronizing the clock of the second device 402 through communication between the first device 401 and the second device 402. As for the distance calculation processing, the description of the distance calculation processing in the third embodiment can be adopted within a necessary range. The distance calculation processing includes a process of calculating the distance between each of the plurality of first devices 401 and the second device 402 on the basis of a propagation time of information or a signal between each of the plurality of first devices 401 and the second device 402.

The distance calculation processing can be executed, for example, at predetermined time intervals or every time a predetermined condition is satisfied. For example, the distance calculation processing may be executed once every several seconds, once every several hours, or once a day.

In the distance calculation processing, the processes related to the calculation and storage of the distance between the first device 401 and the second device 402 may be omitted. In the present embodiment, the system 410 may execute clock synchronization processing between the first device 401 and the second device 402 in the distance calculation processing.

(Position Specification Processing)

The system 410 can specify the position of the second device 402 in position specification processing. As for the position specification processing, the description of the position specification processing in the third embodiment can be adopted within a necessary range. In a case where the system 410 specifies the position of the second device 402 using the first devices 401 and the second device 402, it is preferable that the system 410 includes at least four first devices 401. This is because the first devices 401 and the second device 402 do not exist at the same height in a case where the first devices 401 are installed in a transmission tower.

The position specification processing may be executed by the second device 402. Alternatively, the first device 401 or the server apparatus 403 may specify the position of the second device 402 instead of the second device 402. In a case where the position specification processing is executed by the first device 401 or the server apparatus 403, information on the distance (distance calculated in the distance calculation processing) between each of the plurality of first devices 401 and the second device 402 is transmitted to and used in the first device 401 or the server apparatus 403 in association with the time information related to the calculated time, the identification information of the first device 401, and the identification information of the second device 402. In a case where the first device 401 or the server apparatus 403 specifies the position of the second device 402, the specified position of the second device 402 is stored in the memory in the control unit of the first device 401 or the storage unit of the server apparatus 403 in association with the time information related to the calculated time, the identification information of the first device 401, and the identification information of the second device 402. Note that the positions of the first devices 401 used for specifying the position of the second device 402 may be stored in advance in any of the first device 401, the second device 402, or the server apparatus 403 that executes the position specification processing.

Note that the calculation process for specifying the position of the second device 402 in the position specification processing is not particularly limited. Similarly to the position specification processing in the third embodiment, the position of the second device 402 may be specified on the basis of the propagation time of the information or the signal between the first device 401 and the second device 402 calculated in the distance calculation processing. As another method of specifying the position of the second device 402, for example, a GPS function provided in the second device 402 can be used.

[Processing of Application Program]

Before using the system 410, the manager installs an application program (hereinafter, referred to as a manager app) for using the system 410 on the manager terminal 404. The manager app can be downloaded from a predetermined website or the like. In use of the system 410, the manager app may be made accessible on a browser.

Here, in the system 410, identification information for identifying the second device 402 may be a second device ID, and identification information for identifying the manager may be a manager ID. The manager ID may be set for each organization to which the manager belongs. By using the manager ID, a plurality of managers can access the manager app from the respective manager terminals 404. The second device ID is stored in the storage unit 33 of the server apparatus 403 in association with the manager ID and the information on the monitoring target corresponding to the second device 402. In addition, the second device ID may be stored in the storage unit 43 of the manager terminal 404 in association with the manager app. The manager terminal 404 may also be associated with a plurality of second device IDs. In a case where the second device 402 is fixedly installed, the second device ID may be position information of the second device 402.

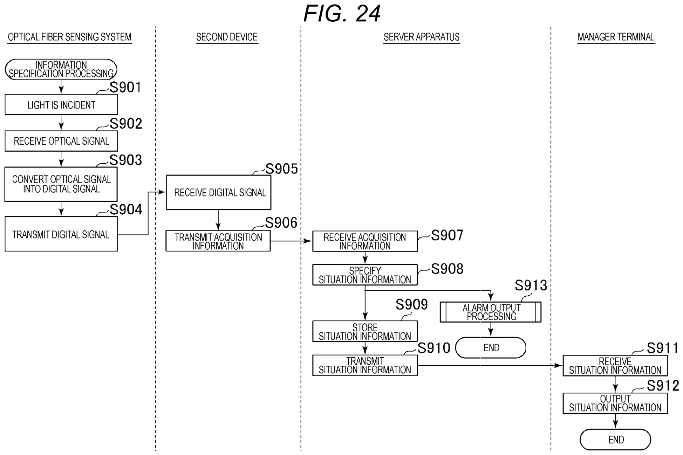

Next, the information specification processing according to the embodiment of the present invention will be described in Embodiment 4-1, Embodiment 4-2, and Embodiment 4-3. Fig. 24 is a diagram illustrating a flowchart of the information specification processing according to Embodiment 4-1, Embodiment 4-2, and Embodiment 4-3 of the present invention.

<Embodiment 4-1 >

Hereinafter, in Embodiment 4-1, a case in which the monitoring target is a road and the manager is a person of an organization that monitors the road will be described as an example. The optical fiber 461 is embedded in the vicinity of the road to be monitored.

First, the optical fiber sensing system 406 causes light to be incident on the optical fiber 461 from the light source 462 (step S901). After the light is incident on the optical fiber 461 from the light source 462, the reception unit 463 receives an optical signal via the optical fiber 461 (step S902). The reception unit 463 converts the optical signal received in step S902 into a digital signal (step S903).

The digital signal corresponding to the optical signal is transmitted to the second device 402 via the communication interface 466 (step S904), and received by the second device 402 (step S905). Acquisition information including the digital signal corresponding to the optical signal is transmitted from the second device 402 to the server apparatus 403 (step S906), and received by the server apparatus 403 (step S907). The acquisition information includes information on the optical signal and a time at which the optical signal is received. The acquisition information may include the second device ID or the position information of the second device 402.

Here, the time at which the optical signal is received by the reception unit 463 is specified by the clock of the second device 402. As the time at which the optical signal is received by the reception unit 463, a time at which the acquisition information is received in step S905 may be used. Alternatively, the time at which the optical signal is received by the reception unit 463 may be a time at which predetermined information is transmitted to the second device 402 and received by the second device 402 in response to the reception of the optical signal by the reception unit 463.

Alternatively, the time at which the optical signal is received by the reception unit 463 may be specified from the time information obtained by transmitting a time required for transmitting the information on the optical signal to the second device 402 in step S904, and the time at which the acquisition information is received in step S905. Alternatively, the time at which the optical signal is received by the reception unit 463 may be specified by the signal detection device 460 using the time information of the clock of the second device 402 transmitted from the second device 402. In this case, the time at which the optical signal is received is specified in step S902.

The server apparatus 403 specifies situation information that is the situation of the road on the basis of the acquisition information received in step S907 (step S908). The situation of the road specified in step S908 is the situation of the road corresponding to the second device ID received in step S907. The situation of the road specified in step S908 may be one piece of information or a plurality of pieces of information. For example, the situation information may include the information of the congestion situation, the soundness, the vehicle type, or the vehicle position. The process of step S908 will be described later. The situation information specified in step S908 is stored in a road situation management table 407 by the server apparatus 403 (step S909). In step S909, the specified situation information may be stored in association with the position information and the time of the second device 402.

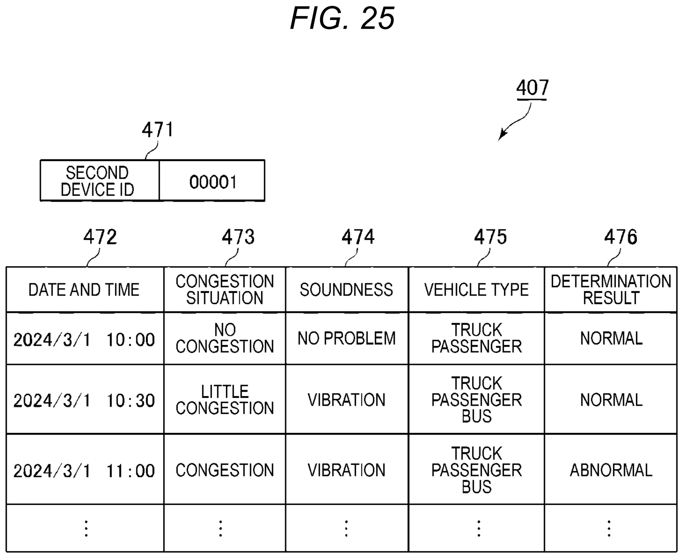

Fig. 25 is a diagram illustrating an example of the road situation management table 407 according to Embodiment 4-1 of the present invention. The storage unit of the server apparatus 403 stores the road situation management table 407. The road situation management table 407 stores, for example, a date and time 472, a congestion situation 473, soundness 474, a vehicle type 475, a determination result 476, and the like in association with a second device ID 471. The road situation management table 407 may store information other than the above information.

The congestion situation 473, the soundness 474, and the vehicle type 475 are information specified in step S908. The congestion situation 473 stores information related to the congestion situation of the road such as the degree of congestion. The soundness 474 stores information indicating a situation related to the soundness of the road. The vehicle type 475 stores, for example, information related to the type of a vehicle present on the road, such as a light vehicle, a passenger vehicle, and a truck.

The determination result 476 stores information related to whether the situation of the road satisfies a predetermined condition in step S1001 to be described later, that is, whether the situation of the road is normal or abnormal. The determination result 476 may be stored in the road situation management table 407 in step S1005 to be described later. In step S908, the server apparatus 403 may specify position information of vehicles present on the road, and cause the road situation management table 407 to store the positions of the respective vehicles in time series.

When the situation information specified in step S908 is stored, the specified situation information is transmitted from the server apparatus 403 to the manager terminal 404 (step S910) and received by the manager terminal 404 (step S911). The manager terminal 404 outputs the received situation information (step S912). The information specification processing ends by the processes of steps S901 to S912.

In step S912, the situation of the road may be displayed as a list for each road on the display screen of the display unit provided in the manager terminal 404, or the situation of the road may be displayed in association with the position of the road and a map. In addition, in step S912, the situation of the road specified in step S908 may be displayed on the display screen of the manager terminal 404 in association with the position of the second device 402 corresponding to the road. It is preferable that the display mode of the situation or the like displayed on the map is changed according to the contents thereof. For example, in a case where the determination result 476 is normal, nothing is particularly displayed, and in a case where the determination result 476 is abnormal, a region corresponding to the road determined to be abnormal may be displayed in red or by flickering. As a result, the manager can be effectively informed that an abnormality is occurring on a predetermined road.

Here, the process of step S908 will be described. The process of step S908 is the process of specifying the situation of the road present in the vicinity of the optical fiber 461 corresponding to the optical signal at the time of receiving the optical signal according to the information on the optical signal obtained by receiving light from the light source 462 via the optical fiber 461 and the time at which the optical signal is received. In addition, the process of step S908 may be the process of specifying the situation of the road present in the vicinity of the optical fiber 461 corresponding to a plurality of optical signals at the time of receiving the plurality of optical signals according to information on the plurality of optical signals and a time zone in which the plurality of optical signals are received. The time zone in which the plurality of optical signals are received is determined on the basis of a first reception time and a last reception time at which the optical signals are received.

In a case where the system 410 specifies the situation of a building or equipment, the following process is adopted using the building or the equipment instead of the road.

In step S908, the server apparatus 403 adapts a variation pattern or a temporal variation pattern of the information on the received optical signal to a unique variation pattern of information on the optical signal that varies according to the situation of the road, which makes it possible to specify the situation of the road present in the vicinity of the optical fiber corresponding to the received optical signal. In addition, the server apparatus 403 adapts the variation pattern or the temporal variation pattern of the information on the received optical signal to a unique variation pattern of information on the optical signal that varies according to the time and the situation of the road, which makes it possible to specify the situation of the road present in the vicinity of the optical fiber corresponding to the received optical signal at this time. The temporal variation pattern is a variation pattern of the optical signal from the first reception time to the last reception time at which the plurality of optical signals are received.

Here, parameters related to various situations such as vibration, sound, temperature, stress, vehicle position/operating situation, congestion situation, and soundness generated on the road to be monitored are superimposed on the optical signal received via the optical fiber 461. The pattern of each parameter on the road is a variation pattern that dynamically varies, and differs depending on the time at which the pattern is acquired and the state of the road. In a case where a predetermined parameter is in the same situation at the same time, a similar variation pattern is indicated. For example, in a case where the parameter is the vehicle position, the unique variation pattern of the vehicle position at a predetermined time can be acquired by correlating the vehicle position with a variation pattern corresponding to a change in the vehicle position at the predetermined time.

The unique variation pattern of the information on the optical signal varying according to the situation of the road is stored in the server apparatus 403 in advance in association with the situation of the road occurring at the time of the unique variation pattern and the time of the occurrence. In addition, the unique variation pattern may be stored in the server apparatus 403 in advance in association with the situation of the road occurring at the time of the unique variation pattern and a time zone including the time of the occurrence. Moreover, the fixed variation pattern may be stored in the server apparatus 403 in advance in association with the attribute of the road, date information, or day-of-week information in addition to the above information. Examples of the attribute of the road include the width of the road, the number of lanes of the road, whether the road is a highway or a general road, and a place where the road is located (e.g. urban or rural). In addition, the fixed variation pattern may be specified on the basis of a variation pattern acquired in the past on the road where the optical fiber 461 on which light is incident in step S901 is laid.

It is determined whether or not the variation pattern or the temporal variation pattern acquired by the signal detection device 460 is adapted to a plurality of unique variation patterns respectively corresponding to the situations of the road according to the situation of the road to be specified. The method of detecting the adaptation between the unique variation pattern and the variation pattern is not particularly limited, and a known method can be applied. For example, pattern matching between the unique variation pattern and the variation pattern may be executed.

In step S908, for example, the server apparatus 403 specifies the fixed variation pattern corresponding to the time (or time zone) at which the optical signal is received, which is received in step S907. In a case where the variation pattern or the temporal variation pattern is adapted to the unique variation pattern, it is specified that the situation of the road is the situation corresponding to the unique variation pattern.

In step S908, the server apparatus 403 may determine the degree of adaptation or the length of adaptation between the variation pattern or the temporal variation pattern and the unique variation pattern. The server apparatus 403 can specify that a predetermined situation of the monitoring target is abnormal when the degree of adaptation is larger than a threshold, and that the predetermined situation is normal when the degree of adaptation is always smaller than the threshold. For example, when the variation pattern includes vibration larger than assumed vibration caused by a vehicle, it is specified as abnormal (estimated that an accident such as a rockfall has occurred), and when the variation pattern of the digital signal corresponding to the optical signal is always within an assumed range of vibration caused by a vehicle, it is specified as normal.

In addition, in step S908, the server apparatus 403 can specify the situation of the road corresponding to the optical signal received via the optical fiber and the time (or time zone) at which the optical signal is received using a prediction model. The prediction model is obtained by machine learning using, as input data, information on the optical signal received via the optical fiber 461 laid in the vicinity of the road and information on the time (or time zone) at which the optical signal is received and, as output data, information on the situation of the road present in the vicinity of the optical fiber 461 corresponding to the optical signal at the time of receiving the optical signal. The prediction model is stored in the storage unit of the server apparatus 403.

The machine learning algorithm is not particularly limited, and a known algorithm can be used. Examples thereof include deep learning using linear regression, multiple regression analysis, a support vector machine, a decision tree, a random forest, a multilayer neural network, or the like. The multilayer neural network includes an input layer, an output layer, and a plurality of intermediate layers. A weight is set for an edge connecting the nodes of the respective layers. A weight corresponding to each input to the node is set for the edge. Each input to the node is multiplied by the corresponding weight, and values obtained by multiplying each input by the weight and a bias are added up. A value obtained by the addition is subjected to nonlinear conversion using an activation function to calculate an activity value. The calculated activity value is the value of input passed to the node of the next layer. The number of intermediate layers can be appropriately designed. The weight is optimized by training data.

As the input data, the information on the optical signal received via the optical fiber 461 laid in the vicinity of the road and the information on the time (or time zone) at which the optical signal is received are used. In addition to the above, the attribute of the road, the date information, or the day-of-week information may be used as the input data. Alternatively, a different prediction model may be constructed for each attribute of the road. As the output data, the situation of the road present in the vicinity of the optical fiber 461 corresponding to the optical signal at the time of receiving the optical signal input as the input data is used. Note that the input data and the output data may be information acquired in the past on the road where the optical fiber 461 on which light is incident in step S901 is laid.

In step S908, the server apparatus 403 specifies the prediction model to which the information is input, and inputs the information on the optical signal and the time (or time zone) at which the optical signal is received, which are received in step S907, to the prediction model. The prediction model is specified according to the attribute of the monitoring target corresponding to the second device ID. Then, the server apparatus 403 acquires the situation of the road output from the prediction model. Note that the prediction model may be stored in another computer apparatus. In this case, the server apparatus 403 acquires the situation of the road by transmitting the information on the optical signal and the time (or time zone) at which the optical signal is received, which are received in step S907, to the other computer apparatus.

Note that the server apparatus 403 may specify another situation of the road using a predetermined situation of the road specified in step S908. For example, the server apparatus 403 may specify the vehicle position on the road and obtain the speed of the vehicle from a temporal change in the vehicle position. In addition, the server apparatus 403 can also determine that an abnormality is occurring (estimates that congestion is occurring or the like) when the speed continues to be 10 km/h or less for a predetermined time (for example, 30 minutes).

Note that the process of step S908 may be executed by the optical fiber sensing system 406. The optical fiber sensing system 406 may transmit information on the specified situation to the server apparatus 403. In a case where the optical fiber sensing system 406 specifies the situation of the monitoring target, for example, it is preferable that the signal detection device 460 stores the information necessary for each processing, such as the unique variation pattern and the prediction model.

Before the process of step S908, the server apparatus 403 may specify the attribute of the road corresponding to the second device ID received in step S907, or the date information or the day-of-week information when the optical signal is received in step S902.

Note that the process of step S908 may specify a position where the specified situation of the road is occurring. The position where the specified situation of the road is occurring (also referred to as an occurrence position) is specified on the basis of a time difference between the time at which the light source 462 causes light to be incident and the time at which the reception unit 463 receives the light. Specifically, a distance from the signal detection device 460 to the occurrence position is specified on the basis of the time difference between the time at which the light source 462 causes light to be incident in step S901 and the time at which the reception unit 463 receives the light in step S902. By correlating the specified distance with the installation position of the optical fiber 461, the occurrence position can be specified more accurately. The information on the specified occurrence position is stored in the road situation management table 407 in association with the situation of the occurrence road.

Here, the information specification processing may include alarm output processing (step S913). Alternatively, in the information specification processing, the alarm output processing may be executed instead of the processes of steps S909 to S912. The alarm output processing is executed after step S908.

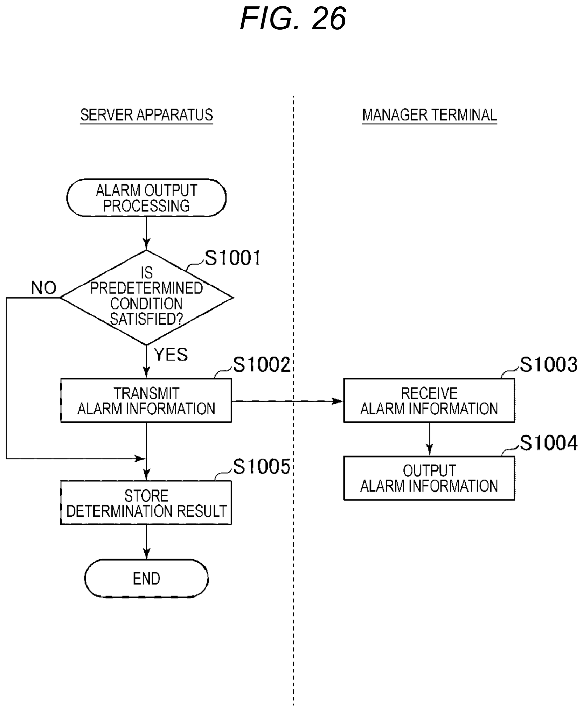

Fig. 26 is a diagram illustrating a flowchart of the alarm output processing according to Embodiment 4-1 of the present invention. First, after specifying the situation information in step S908, the server apparatus 403 determines whether or not the specified situation satisfies a predetermined condition (step S1001). In a case where the specified situation satisfies a predetermined condition, the server apparatus 403 can specify that the situation is abnormal, or in a case where the specified situation does not satisfy a predetermined condition, the server apparatus 403 can specify that the situation is normal.

The predetermined condition is appropriately set by the manager. The predetermined condition is not particularly limited, but is set according to information on the situation to be determined and time information. For example, the predetermined condition of the soundness 474 of the road may be different between 8:00 to 10:00 and 15:00 to 17:00. The predetermined condition may be set according to the attribute of the road, the date information, or the day-of-week information in addition to the information on the situation to be determined and the time information.

In step S1001, the determination as to whether or not the specified situation satisfies the predetermined condition may be executed with reference to a determination table stored in the storage unit of the server apparatus 403, or may be executed on the basis of the above-described prediction model or a determination prediction model constructed for determination.

The determination table may store the predetermined condition in association with one piece of information included in the situation information specified in step S908, or may store the predetermined condition in association with two or more pieces of information included in the situation information. The determination prediction model is obtained by machine learning by using, for example, information on the situation of the road as input data, and information on whether or not the situation of the road satisfies the predetermined condition as output data. The prediction model is stored in the storage unit of the server apparatus 403. In a case where the above-described prediction model is used for determining whether or not the specified situation satisfies the predetermined condition, the process of step S1001 is executed at the same time as step S908.

In a case where the specified situation satisfies the predetermined condition (YES in step S1001), the server apparatus 403 transmits alarm information to the manager terminal 404 (step S1002). Upon receiving the alarm information (step S1003), the manager terminal 404 outputs the alarm information (step S1004). That is, in a case where the situation specified by the process of step S908 satisfies the predetermined condition, the system 410 performs control such that information indicating that the predetermined condition is satisfied can be output by another apparatus.

The alarm information may include, for example, information on the road whose situation has been specified, information indicating that an abnormality is occurring in the specified situation, information on the contents of the abnormality, information on a position where the abnormality is occurring, or information on the second device 402 that has detected the abnormality. The contents of the alarm information may be changed according to the degree of the abnormality or the like. For example, in a case where the abnormality of the soundness is less than a predetermined time (for example, 30 minutes), it is considered that the necessity of emergently coping with the abnormality is low, and the alarm has a low warning level. In a case where the abnormality of the soundness is equal to or more than the predetermined time (for example, 3 hours), it is considered that the necessity of emergently coping with the abnormality is high, and the alarm has a high warning level. For example, in a case where the manager terminal 404 outputs the alarm information with a high warning level, louder sound may be output, a text or a moving image with a more conspicuous color scheme may be displayed on the display screen, or stronger vibration may be output as compared with the output of the alarm information with a low warning level.

The output of the alarm information in step S1004 may be either display of a text or a moving image on the display screen or voice output. In addition, in step S1004, the manager terminal 404 may be controlled to output predetermined vibration, predetermined sound, or predetermined light emission, may be controlled to output a pop-up notification, or may be controlled to start the manager app to output the alarm information in response to the reception of the alarm information. With such output, it is possible to effectively notify the manager of the situation of the road. In addition, even if the manager does not always keep checking the situation of the road, the manager can be informed of the road that needs to be handled in some way.

After the alarm information is transmitted in step S1002 or in a case where the specified situation does not satisfy the predetermined condition (NO in step S1001), the server apparatus 403 causes the road situation management table 407 to store the determination result (step S1005). The alarm output processing ends by the processes of steps S1001 to S1005 described above.

After the information specification processing ends, the information specification processing (steps S901 to S912) is executed at predetermined time intervals (for example, 30 minutes). In addition, the processes of steps S901 to S907 may be executed at predetermined first time intervals (for example, 1 minute), and the processes of step S908 and subsequent steps may be executed at predetermined second time intervals (for example, 30 minutes) longer than the predetermined first time interval. It is preferable that the information specification processing is continuously executed.

In step S906, the position information of the second device 402 may be transmitted. The transmitted position information of the second device 402 may be specified by the position specification processing. Since the position of the second device 402 is fixed in the vicinity of the reception unit 463 of the optical fiber sensing system 406, the position specification in the position specification processing only needs to be executed once. Alternatively, the position information of the second device 402 may be stored in the server apparatus 403. Since it is necessary to correct the time deviation of the second device 402, it is preferable that communication (for example, time synchronization processing in the distance calculation processing) between the second device 402 and the first device 401 is executed at a predetermined cycle while the information specification processing is being executed.

Note that the plurality of optical fiber sensing systems 406 may be installed on the road whose situation is to be specified. For example, the plurality of optical fiber sensing systems 406 may be installed by being buried in the road itself, may be installed in a structure such as a tunnel, or may be installed in equipment such as a utility pole near the road. The fixed variation pattern or the prediction model used in step S908 is set for each target in which the plurality of optical fiber sensing systems 406 are installed.

<Embodiment 4-2>

As Embodiment 4-2 of the present invention, a case in which the monitoring target is a building will be described as an example. Hereinafter, the monitoring target is a store such as a restaurant, and the manager is an owner of the store. The optical fiber 461 is installed in the store to be monitored.

As for the information specification processing in Embodiment 4-2, the description of the information specification processing in Embodiment 4-1 can be adopted as long as no contradiction occurs by using the store instead of the road. However, in Embodiment 4-2, the following modes can be added to or replace the matters described in Embodiment 4-1.

In Embodiment 4-2, it is highly necessary to immediately notify the manager of the situation of the monitoring target, such that there is a region where a fire is likely to occur, such as a kitchen, and there is a possibility of intrusion of a human or an animal outside opening hours. Therefore, in the information specification processing, the alarm output processing is preferably executed.

In addition, in Embodiment 4-2, the plurality of optical fiber sensing systems 406 may be installed in the store. For example, the plurality of optical fiber sensing systems 406 may be installed on a building itself such as a wall, a floor, and a ceiling in the store, may be installed on an article such as a chair, a desk, and a safe used by an employee of the store, or may be installed on equipment in the store.

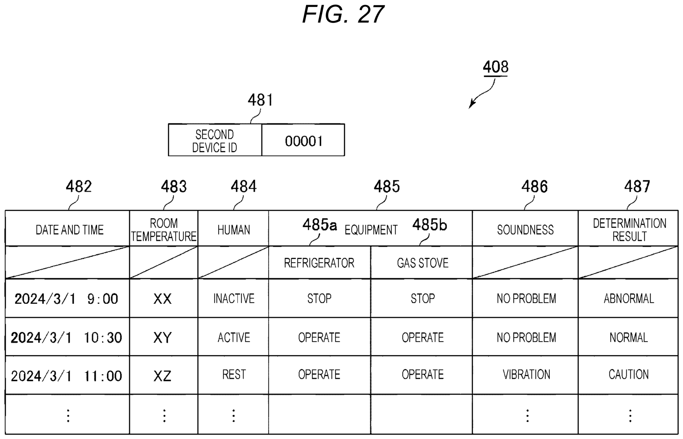

In Embodiment 4-2, in step S1005, the situation information specified in step S908 and the information determined in step S1001 are stored in an in-store situation management table 408 by the server apparatus 403. Fig. 27 is a diagram illustrating an example of the in-store situation management table 408 according to Embodiment 4-1 of the present invention. The storage unit of the server apparatus 403 stores the in-store situation management table 408. The in-store situation management table 408 stores, for example, a second device ID 481, a date and time 482, a room temperature 483, a human activity 484, an equipment situation 485, soundness 486, a determination result 487, and the like. The equipment situation 485 stores operating situations of a refrigerator 485a and a gas stove 485b. Note that the in-store situation management table 408 may store information other than the above information.

The room temperature 483, the human activity 484, the equipment situation 485, and the soundness 486 are information specified in step S908. The human activity 484 stores information indicating whether or not there is a human in the store and what kind of activity the human in the store is doing. The equipment situation 485 stores information indicating a situation of equipment in the store. The soundness 486 stores information indicating a situation related to the soundness of the store. The determination result 487 stores information related to whether the situation of the store satisfies the predetermined condition in step S1001, that is, whether the situation of the store is normal or abnormal.

In Embodiment 4-2, the predetermined condition in step S1001 is set according to information on the situation to be determined and time information. The predetermined condition may be set according to the attribute of the monitoring target. For example, the predetermined condition of the human activity 484 can be set to "active" outside the opening hours of the store and "inactive" within the opening hours of the store.

<Embodiment 4-3>

As Embodiment 4-3 of the present invention, a case in which the monitoring target is equipment will be described as an example. Hereinafter, the monitoring target is a serving robot, and the manager is a person belonging to a store where the serving robot is installed. The optical fiber 461 and the second device 402 are installed in the serving robot to be monitored. Embodiment 4-3 is different from the other embodiments in that the serving robot to be monitored and the second device 402 are movable.

As for the information specification processing in Embodiment 4-3, the description of the information specification processing in Embodiment 4-1 can be adopted as long as no contradiction occurs by using the serving robot instead of the road. However, in Embodiment 4-3, the following modes can be added to or replace the matters described in Embodiment 4-1.

In Embodiment 4-3, the serving robot to be monitored and the second device 402 are movable. Therefore, in step S906, specified position information of the second device 402 is transmitted in association with the acquisition information. The position information of the second device 402 is specified by, for example, the position specification processing.

In addition, the fixed variation pattern or the prediction model used in step S908 may be set for each type of equipment. For example, the fixed variation pattern or the prediction model of equipment A can be used as the fixed variation pattern or the prediction model of equipment B that is the same type of equipment as the equipment A.

<Other Embodiments>

Note that the processes executed by the server apparatus 403 in the above embodiment may be executed by the first device 401. For example, the processes of steps S907 to S910 in the information specification processing and the processes of steps S1001, S1002, and S1005 in the alarm output processing according to Embodiment 4-1 are executed by the first device 401.

Note that the processes executed by the server apparatus 403 in the above embodiment may be executed by the second device 402 or the manager terminal 404. For example, the processes of steps S907 to S910 in the information specification processing and the processes of steps S1001, S1002, and S1005 in the alarm output processing according to Embodiment 4-1 are executed by the second device 402 or the manager terminal 404. In this case, for example, it is preferable to download the information necessary for each processing, such as the road situation management table 407, to the second device 402 or the manager terminal 404.

For example, in a case where the processes of steps S907, S908, and S1001 are executed by the manager terminal 404, the manager terminal 404 can include a unit that outputs information indicating that the predetermined condition is satisfied in a case where the situation specified by the process of step S908 satisfies the predetermined condition.

Note that the processes of steps S901 to S906 are executed by the second device 402 corresponding to the second device ID associated with the manager ID and the optical fiber sensing system 406 corresponding to the second device 402. The manager terminal 404 can receive the acquisition information from the plurality of second devices 402.

Note that an operator of the system 410 can request a usage fee from the manager or the like as a consideration for using the system 410. For example, the server apparatus 403 may calculate the usage fee according to the number of times the specified situation of the monitoring target is stored in step S909 or S1005 in the information specification processing according to Embodiment 4-1, the calculation of the time deviation or the calculation of the phase deviation between the first device 401 and the second device 402 in the second device 402, or the correction of the time or the correction of the phase of the second device 402. In addition, it is possible to control the frequency of executing the time correction or the phase correction, the accuracy of the clock of the first device 401 that is the basis of the calculation of the time deviation or the calculation of the phase deviation, or the response speed of the first device 401, the second device 402, or the server apparatus 403 to be different according to the usage fee. For example, as the usage fee becomes higher, the frequency of the time correction or the phase correction can be increased, or the time deviation or the phase deviation can be calculated on the basis of a clock with higher accuracy.

As Embodiment 4-1 of the present invention, the case in which the monitoring target is a road and the manager is a person of an organization that monitors the road has been described as an example. The system 410 can also evaluate the road. In the system 410, the road situation management table 407 records the determination result 476. Therefore, for example, in a case where there are many road sections continuously evaluated as normal in the determination result 476, the road can receive a high evaluation as a road where the possibility of abnormality occurring is low, and in a case where there are many road sections continuously evaluated as abnormal in the determination result 476, the road can receive a low evaluation as a road where the possibility of abnormality occurring is high. The manager can consider road repair work or the like on the basis of the evaluation.

In addition, the case in which the monitoring target is a building has been described as an example of Embodiment 4-2, and the case in which the monitoring target is equipment has been described as an example of Embodiment 4-3. The system 410 may evaluate the building or the equipment as in Embodiment 4-1. The manager can consider inspection and repair of the building or inspection and replacement of the equipment on the basis of the evaluation.

According to the present invention, the system includes at least one computer apparatus, the system including a situation specifier configured to specify a situation of a road, a building, or equipment present in the vicinity of an optical fiber laid in the vicinity of the road, the building, or the equipment corresponding to an optical signal obtained by receiving light from a light source via the optical fiber at the time of receiving the optical signal according to information on the optical signal, and a time at which the optical signal is received. As a result, it is possible to specify the situation of the road, the building, or the equipment according to time.

According to the present invention, the situation specifier specifies the situation of the road, the building, or the equipment present in the vicinity of the optical fiber corresponding to the received optical signal by adapting a variation pattern of the information on the received optical signal to a unique variation pattern of information on the optical signal that varies according to the situation of the road, the building, or the equipment. As a result, it is possible to grasp the situation of the road, the building, or the equipment adapted to the unique variation pattern.

According to the present invention, the situation specifier uses a prediction model obtained by machine learning using, as input data, information on the optical signal obtained by receiving light from the light source via the optical fiber laid in the vicinity of the road, the building, or the equipment and information on the time at which the optical signal is received, and as output data, a situation of the road, the building, or the equipment present in the vicinity of the optical fiber corresponding to the optical signal at the time of receiving the optical signal, to specify the situation of the road, the building, or the equipment corresponding to the optical signal received via the optical fiber and the time at which the optical signal is received. As a result, the situation of the road, the building, or the equipment can be grasped more accurately by using the prediction model.

In the present invention, for the purpose of more accurately grasping the situation of the road, the building, or the equipment, the situation specifier may specify a congestion situation of the road, a situation related to the soundness of the road, or the type of a vehicle present on the road. In addition, the situation specifier may specify a situation related to the soundness of the building, information on equipment in the building, or information on activities of a human or an animal in the building. Moreover, the situation specifier may specify an operating situation of the equipment or a situation related to the soundness of the equipment.

According to the present invention, the system includes an outputter configured to output information indicating that a predetermined condition is satisfied in a case where the situation specified by the situation specifier satisfies the predetermined condition, and/or an output controller configured to perform control such that the information can be output by another apparatus. As a result, for example, the manager can grasp that the specified situation satisfies the predetermined condition.

Reference Signs List

| | |
|---|---|
| 101 | Ground improvement object |
| 102 | Wireless device |
| 103 | Computer apparatus |
| 104 | Communication network |
| 110 | System |
| 111 | Rock bolt |
| 112 | Bearing plate |
| 113 | Wire rope |
| 114 | Tree |
| 115 | Slope |
| 121 | Control unit |
| 122 | RF chip |
| 123 | Oscillator |
| 124 | Clock |
| 125 | Phase detector |
| 131 | Control unit |
| 132 | RAM |
| 133 | Storage unit |
| 134 | Input unit |
| 135 | Display unit |
| 136 | Communication interface |
| 140 | Execution screen |
| 141 | Icon |
| 142 | Plane |
| 150 | Execution screen |
| 151 | Icon |
| 152 | Plane |
| 153 | Icon |
| 154 | Plane |
| 155 | Icon |
| 201 | Ground improvement wall |
| 202 | First wireless device |

| | |
|---|---|
| 203 | Steel tower |
| 204 | Second wireless device |
| 205 | Computer apparatus |
| 206 | Terminal apparatus |
| 207 | Communication network |
| 210 | System |
| 221 | Control unit |
| 222 | RF chip |
| 223 | Oscillator |
| 224 | Clock |
| 225 | Phase detector |
| 251 | Control unit |
| 252 | RAM |
| 253 | Storage unit |
| 254 | Communication interface |
| 301 | First device |
| 302 | Second device |
| 303 | Server apparatus |
| 304 | Acquisition device |
| 305 | Management terminal |
| 306 | Communication network |
| 310 | System |
| 311 | Control unit |
| 312 | RF chip |
| 312a | Clock |
| 312b | Phase detector |
| 313 | Oscillator |
| 321 | Control unit |
| 322 | RF chip |
| 322a | Clock |
| 322b | Phase detector |
| 323 | Oscillator |
| 341 | Antenna |
| 342 | Reactance circuit |
| 343 | Control circuit |
| 344 | Transmission line |
| 345 | Soil |
| 401 | First device |
| 402 | Second device |
| 403 | Server apparatus |
| 404 | Manager terminal |
| 405 | Communication network |
| 406 | Optical fiber sensing system |
| 410 | System |
| 460 | Signal detection device |
| 461 | Optical fiber |
| 462 | Light source |
| 463 | Reception unit |
| 464 | Detection unit |
| 465 | Control unit |
| 466 | Communication interface |
| 407 | Road situation management table |
| 471 | Second device ID |
| 472 | Date and time |
| 473 | Congestion situation |
| 474 | Soundness |
| 475 | Vehicle type |
| 476 | Determination result |

| 408 | In-store situation management table |
| 481 | Second device ID |
| 482 | Date and time |
| 483 | Room temperature |
| 484 | Human activity |
| 485 | Equipment situation |
| 485a | Refrigerator |
| 485b | Gas stove |
| 486 | Soundness |
| 487 | Determination result |

**Claims**

1. A system comprising at least one computer apparatus, the system comprising:

   a communicator that establishes communication between at least two wireless devices; and
   a calculator that calculates information usable for abnormality detection.

2. The system according to claim 1, comprising:

   a time deviation calculator that calculates a time deviation between internal clocks of the wireless devices by performing communication between the wireless devices; and
   a time deviation corrector that corrects the time deviation between the internal clocks of the wireless devices on a basis of the calculated time deviation.

3. The system according to claim 2, comprising
   a storage that stores the information calculated by the calculator in association with the time of the internal clock corrected by the time deviation corrector.

4. The system according to claim 3, comprising a server apparatus,
   wherein the server apparatus comprises the storage.

5. The system according to claim 2, comprising:

   a phase deviation calculator that calculates a phase deviation between the internal clocks of the wireless devices by performing communication between the wireless devices; and
   a phase deviation corrector that corrects the phase deviation between the internal clocks of the wireless devices on a basis of the calculated phase deviation.

6. The system according to claim 5,
   wherein the time deviation calculator calculates the time deviation after the phase deviation corrector corrects the phase deviation.

7. The system according to claim 2,
   wherein the calculator comprises a distance calculator that calculates a distance between the wireless devices on a basis of a propagation time of communication between the wireless devices.

8. The system according to claim 7,
   wherein the distance calculator calculates the distance on a basis of the time deviation calculated by the time deviation calculator.

9. The system according to claim 8,
   wherein the distance calculator calculates the distance after the time deviation corrector corrects the time deviation.

10. The system according to any one of claims 7 to 9, comprising
    a positional relationship specifier that specifies a positional relationship of the wireless devices on a basis of the calculated distance between the wireless devices.

11. The system according to any one of claims 7 to 9,
wherein the calculator comprises a change amount specifier that specifies a change amount of the calculated distance between the wireless devices.

12. The system according to any one of claims 1 to 9, comprising an acquisition device for acquiring a water content under a ground surface or information enabling specification of a water content under a ground surface.

13. The system according to claim 12,

wherein the acquisition device comprises an antenna installed above and in a vicinity of the ground surface, the system comprising at least one of:

a specifier that specifies the water content under the ground surface on a basis of information on an electromagnetic wave received by the antenna; and
a detector that detects that the information on an electromagnetic wave received by the antenna satisfies a predetermined condition.

14. The system according to claim 13,
wherein the antenna is connected to a reactance circuit.

15. The system according to any one of claims 1 to 9, comprising a fiber cable including an optical fiber, and further comprising
a sensor that detects sound, vibration, and/or temperature by the optical fiber.

16. The system according to any one of claims 1 to 9, comprising
a notification outputter that outputs a notification in a case where the information calculated by the calculator satisfies a predetermined condition.

17. The system according to any one of claims 7 to 9, comprising two or more ground improvement objects,
wherein each of the ground improvement objects comprises at least one wireless device.

18. The system according to claim 17, comprising the wireless device provided in the ground improvement object, and a wireless device installed at another predetermined location.

19. The system according to any one of claims 7 to 9,
wherein one of the at least two wireless devices is a first wireless device installed in a structure, and another one of the at least two wireless devices is a second wireless device installed at another predetermined location.

20. The system according to claim 19,
wherein the second wireless device is installed on a steel tower and/or a utility pole.

21. The system according to claim 1, comprising: a first wireless device; an acquisition device for acquiring a water content under a ground surface or information enabling specification of a water content under a ground surface; and a second wireless device installed within a predetermined distance from the acquisition device, the system comprising:

a time deviation calculator that calculates a time deviation between the first wireless device and the second wireless device by performing communication between the first wireless device and the second wireless device;
a time corrector that corrects a time in the second wireless device on a basis of the calculated time deviation; and
a storage that stores the water content or the information enabling specification of the water content in association with the time clocked by the second wireless device.

22. A method executed in a system comprising at least one computer apparatus, the method comprising:

a communication step of establishing communication between at least two wireless devices; and
a calculation step of calculating information usable for abnormality detection.

23. The method according to claim 22, comprising:

a time deviation calculation step of calculating a time deviation between internal clocks of the wireless devices by performing communication between the wireless devices; and

a time deviation correction step of correcting the time deviation between the internal clocks of the wireless devices on a basis of the calculated time deviation.

24. The method according to claim 22, comprising:

a phase deviation calculation step of calculating a phase deviation between internal clocks of the wireless devices by performing communication between the wireless devices; and

a phase deviation correction step of correcting the phase deviation between the internal clocks of the wireless devices on a basis of the calculated phase deviation.

25. The method according to any one of claims 22 to 24,
wherein the calculation step comprises a distance calculation step of calculating a distance between the wireless devices on a basis of a propagation time of communication between the wireless devices.

26. A wireless device comprising:

a communicator that establishes communication with another wireless device; and

a calculator that calculates information usable for abnormality detection.

27. The wireless device according to claim 26, comprising:

a time deviation calculator that calculates a time deviation between internal clocks of the wireless devices by performing communication between the wireless devices; and

a time deviation corrector that corrects the time deviation between the internal clocks of the wireless devices on a basis of the calculated time deviation.

28. The wireless device according to claim 26, comprising:

a phase deviation calculator that calculates a phase deviation between internal clocks of the wireless devices by performing communication between the wireless devices; and

a phase deviation corrector that corrects the phase deviation between the internal clocks of the wireless devices on a basis of the calculated phase deviation.

29. The wireless device according to any one of claims 26 to 28,
wherein the calculator comprises a distance calculator that calculates a distance between the wireless devices on a basis of a propagation time of communication between the wireless devices.

30. The wireless device according to claim 26, in a system comprising two or more wireless devices provided in ground improvement objects,

wherein the communicator establishes communication with another wireless device provided in a ground improvement object,
the wireless device comprising
a distance calculator that calculates a distance between the wireless devices on a basis of a propagation time of communication between the wireless devices,
wherein the distance calculator calculates the distance on a basis of a time deviation between internal clocks of the wireless devices.

31. The wireless device according to claim 26, the wireless device being provided in a ground improvement object in a system comprising the wireless device provided in the ground improvement object and a wireless device installed at another predetermined location,

wherein the communicator establishes communication with the wireless device installed at the other predetermined location,
the wireless device comprising
a distance calculator that calculates a distance between the wireless devices on a basis of a propagation time of communication between the wireless devices,
wherein the distance calculator calculates the distance on a basis of a time deviation between internal clocks of the wireless devices.

32. The wireless device according to claim 26, the wireless device being installed at another predetermined location in a system comprising a wireless device provided in a ground improvement object and the wireless device installed at the other predetermined location,

wherein the communicator establishes communication with the wireless device provided in the ground improvement object,
the wireless device comprising
a distance calculator that calculates a distance between the wireless devices on a basis of a propagation time of communication between the wireless devices,
wherein the distance calculator calculates the distance on a basis of a time deviation between internal clocks of the wireless devices.

33. A ground improvement object comprising the wireless device according to claim 30 or 31.

34. The first wireless device according to claim 26, in a system comprising the first wireless device installed in a structure and a second wireless device installed at another predetermined location,

wherein the communicator establishes communication with the second wireless device,
the first wireless device comprising
a distance calculator that calculates a distance between the wireless devices on a basis of a propagation time of communication between the wireless devices,
wherein the distance calculator calculates the distance on a basis of a time deviation between internal clocks of the wireless devices.

35. The second wireless device according to claim 26, in a system comprising a first wireless device installed in a structure and the second wireless device installed at another predetermined location,

wherein the communicator establishes communication with the first wireless device,
the second wireless device comprising
a distance calculator that calculates a distance between the wireless devices on a basis of a propagation time of communication between the wireless devices,
wherein the distance calculator calculates the distance on a basis of a time deviation between internal clocks of the wireless devices.

# FIG. 1

# FIG. 2

(A)

(B)

## FIG. 3

## FIG. 4

# FIG. 5

| FIRST WIRELESS DEVICE | SECOND WIRELESS DEVICE |
|---|---|

**DISTANCE CALCULATION PROCESSING**

S101 TRANSMIT SIGNAL → S102 RECEIVE SIGNAL

S104 RECEIVE SIGNAL ← S103 TRANSMIT SIGNAL

S106 RECEIVE INFORMATION ON PHASE OF SECOND WIRELESS DEVICE ← S105 TRANSMIT INFORMATION ON PHASE OF SECOND WIRELESS DEVICE

S107 CALCULATE PHASE DEVIATION

S108 TRANSMIT PHASE DEVIATION CORRECTION INSTRUCTION → S109 RECEIVE PHASE DEVIATION CORRECTION INSTRUCTION

S110 CORRECT PHASE DEVIATION

S112 RECEIVE SIGNAL ← S111 TRANSMIT SIGNAL

S113 TRANSMIT SIGNAL → S114 RECEIVE SIGNAL

S116 RECEIVE INFORMATION ON TIME OF SECOND WIRELESS DEVICE ← S115 TRANSMIT INFORMATION ON TIME OF SECOND WIRELESS DEVICE

S117 CALCULATE TIME DEVIATION

S118 TRANSMIT TIME DEVIATION CORRECTION INSTRUCTION → S119 RECEIVE TIME DEVIATION CORRECTION INSTRUCTION

S120 CORRECT TIME DEVIATION

S122 RECEIVE INFORMATION ON TIME OF SECOND WIRELESS DEVICE ← S121 TRANSMIT INFORMATION ON TIME OF SECOND WIRELESS DEVICE

S123 CALCULATE PROPAGATION TIME

S124 CALCULATE DISTANCE

**END**

# FIG. 6

WIRELESS DEVICE

COMPUTER APPARATUS

( POSITIONAL RELATIONSHIP SPECIFICATION PROCESSING )

TRANSMIT INFORMATION ON DISTANCE — S201

RECEIVE INFORMATION ON DISTANCE — S202

SPECIFY POSITIONAL RELATIONSHIP — S203

OUTPUT POSITIONAL RELATIONSHIP — S204

( END )

## FIG. 7

# FIG. 8

COMPUTER APPARATUS

NOTIFICATION PROCESSING

S301
SPECIFY CHANGE AMOUNT OF DISTANCE/ POSITIONAL RELATIONSHIP

S302
DOES CHANGE AMOUNT SATISFY PREDETERMINED CONDITION? — No

Yes

S303
OUTPUT NOTIFICATION

END

## FIG. 9

*FIG. 10*

210

201
GROUND
IMPROVEMENT WALL
FIRST
WIRELESS DEVICE

202

203
STEEL TOWER
SECOND
WIRELESS DEVICE

204

207a

205
COMPUTER APPARATUS

207b

206
TERMINAL APPARATUS

## FIG. 11

202

RF CHIP ~222

CLOCK ~224

PHASE DETECTOR ~225

221

CONTROL UNIT

223

## FIG. 12

205

251 CONTROL UNIT

253 STORAGE UNIT

252 RAM

254 COMMUNICATION INTERFACE

# FIG. 13

FIRST WIRELESS DEVICE | SECOND WIRELESS DEVICE

DISTANCE CALCULATION PROCESSING — S401

| S402 | RECEIVE SIGNAL ← TRANSMIT SIGNAL | S401 |

| S403 | TRANSMIT SIGNAL → RECEIVE SIGNAL | S404 |

| S405 | TRANSMIT INFORMATION ON PHASE OF FIRST WIRELESS DEVICE → RECEIVE INFORMATION ON PHASE OF FIRST WIRELESS DEVICE | S406 |

CALCULATE PHASE DEVIATION — S407

| S409 | RECEIVE PHASE DEVIATION CORRECTION INSTRUCTION ← TRANSMIT PHASE DEVIATION CORRECTION INSTRUCTION | S408 |

CORRECT PHASE DEVIATION — S410

| S411 | TRANSMIT SIGNAL → RECEIVE SIGNAL | S412 |

| S414 | RECEIVE SIGNAL ← TRANSMIT SIGNAL | S413 |

| S415 | TRANSMIT INFORMATION ON TIME OF FIRST WIRELESS DEVICE → RECEIVE INFORMATION ON TIME OF FIRST WIRELESS DEVICE | S416 |

CALCULATE TIME DEVIATION — S417

| S419 | RECEIVE TIME DEVIATION CORRECTION INSTRUCTION ← TRANSMIT TIME DEVIATION CORRECTION INSTRUCTION | S418 |

CORRECT TIME DEVIATION — S420

| S421 | TRANSMIT INFORMATION ON TIME OF FIRST WIRELESS DEVICE → RECEIVE INFORMATION ON TIME OF FIRST WIRELESS DEVICE | S422 |

CALCULATE PROPAGATION TIME — S423

CALCULATE DISTANCE — S424

END

# FIG. 14

## FIG. 15

## FIG. 16

# FIG. 17

# FIG. 18

FIRST DEVICE

SECOND DEVICE

DISTANCE CALCULATION PROCESSING

TRANSMIT SIGNAL AND THE LIKE — S601

MEASURE TIME AND PHASE — S602

STORE TIME AND PHASE — S603

RECEIVE SIGNAL AND THE LIKE — S610

MEASURE TIME AND PHASE — S611

STORE TIME AND PHASE — S612

TRANSMIT STORED INFORMATION — S613

RECEIVE SIGNAL AND THE LIKE — S604

MEASURE TIME AND PHASE — S605

STORE TIME AND PHASE — S606

TRANSMIT SIGNAL AND THE LIKE — S607

MEASURE TIME AND PHASE — S608

STORE TIME AND PHASE — S609

RECEIVE INFORMATION — S614

CALCULATE PHASE DEVIATION — S615

CORRECT PHASE — S616

CALCULATE TIME DEVIATION — S617

CORRECT TIME — S618

CALCULATE DISTANCE — S619

STORE DISTANCE — S620

END

# FIG. 19

# FIG. 20

SECOND DEVICE | SERVER APPARATUS

INFORMATION ACQUISITION
PROCESSING

S701
RECEIVE WATER
CONTENT INFORMATION

S702
TRANSMIT WATER CONTENT
INFORMATION ASSOCIATED
WITH TIME INFORMATION

S703
RECEIVE WATER CONTENT
INFORMATION ASSOCIATED
WITH TIME INFORMATION

S704
IS WATER
CONTENT INFORMATION
ABNORMAL
VALUE?

Yes

No

S705
TRANSMIT WARNING
TO MANAGEMENT TERMINAL

S706
STORE WATER CONTENT INFORMATION
ASSOCIATED WITH TIME INFORMATION

END

# FIG. 21

```
POSITION SPECIFICATION
PROCESSING
        │
        ▼
SPECIFY POSITION OF SECOND DEVICE ──── S801
        │
        ▼
STORE POSITION OF SECOND DEVICE ──── S802
        │
        ▼
       END
```

# FIG. 22

410

```
401a ─ FIRST
       DEVICE

401b ─ FIRST          405
       DEVICE
401                          SERVER      403
       ⋮                     APPARATUS

401z ─ FIRST                 MANAGER     404
       DEVICE                TERMINAL

              SECOND ─── 402
              DEVICE

          OPTICAL FIBER
          SENSING SYSTEM ─── 406
```

72

# FIG. 23

406

460

461

462 LIGHT SOURCE

464    465 CONTROL UNIT

463 RECEPTION UNIT

466 COMMUNICATION INTERFACE

## FIG. 24

OPTICAL FIBER SENSING SYSTEM | SECOND DEVICE | SERVER APPARATUS | MANAGER TERMINAL

INFORMATION SPECIFICATION PROCESSING

S901 LIGHT IS INCIDENT

S902 RECEIVE OPTICAL SIGNAL

S903 CONVERT OPTICAL SIGNAL INTO DIGITAL SIGNAL

S904 TRANSMIT DIGITAL SIGNAL

S905 RECEIVE DIGITAL SIGNAL

S906 TRANSMIT ACQUISITION INFORMATION

S907 RECEIVE ACQUISITION INFORMATION

S908 SPECIFY SITUATION INFORMATION

S913 ALARM OUTPUT PROCESSING

END

S909 STORE SITUATION INFORMATION

S910 TRANSMIT SITUATION INFORMATION

S911 RECEIVE SITUATION INFORMATION

S912 OUTPUT SITUATION INFORMATION

END

## FIG. 25

407

471

| SECOND DEVICE ID | 00001 |
|---|---|

| DATE AND TIME | CONGESTION SITUATION | SOUNDNESS | VEHICLE TYPE | DETERMINATION RESULT |
|---|---|---|---|---|
| 2024/3/1  10:00 | NO CONGESTION | NO PROBLEM | TRUCK PASSENGER | NORMAL |
| 2024/3/1  10:30 | LITTLE CONGESTION | VIBRATION | TRUCK PASSENGER BUS | NORMAL |
| 2024/3/1  11:00 | CONGESTION | VIBRATION | TRUCK PASSENGER BUS | ABNORMAL |
| ⋮ | ⋮ | ⋮ | ⋮ | ⋮ |

472  473  474  475  476

# FIG. 26

SERVER APPARATUS | MANAGER TERMINAL

## FIG. 27

408

481

| SECOND DEVICE ID | 00001 |
|---|---|

| 482 | 483 | 484 | 485 | | 486 | 487 |
|---|---|---|---|---|---|---|
| DATE AND TIME | ROOM TEMPERATURE | HUMAN | 485a EQUIPMENT 485b | | SOUNDNESS | DETERMINATION RESULT |
| | | | REFRIGERATOR | GAS STOVE | | |
| 2024/3/1 9:00 | XX | INACTIVE | STOP | STOP | NO PROBLEM | ABNORMAL |
| 2024/3/1 10:30 | XY | ACTIVE | OPERATE | OPERATE | NO PROBLEM | NORMAL |
| 2024/3/1 11:00 | XZ | REST | OPERATE | OPERATE | VIBRATION | CAUTION |
| ⋮ | ⋮ | ⋮ | | | ⋮ | ⋮ |

## INTERNATIONAL SEARCH REPORT

| International application No. |
| --- |
| **PCT/JP2024/012516** |

**A.    CLASSIFICATION OF SUBJECT MATTER**

*G01C 15/00*(2006.01)i; *G01B 7/16*(2006.01)i; *G01B 11/16*(2006.01)i; *G01B 21/32*(2006.01)i; *G01N 22/00*(2006.01)i; *G01N 22/04*(2006.01)i

FI:    G01C15/00 102Z; G01N22/00 W; G01N22/04 C; G01C15/00 104Z; G01B21/32; G01B11/16 Z; G01B7/16 Z

According to International Patent Classification (IPC) or to both national classification and IPC

**B.    FIELDS SEARCHED**

Minimum documentation searched (classification system followed by classification symbols)

G01C15/00; G01B7/16; G01B11/16; G01B21/32; G01N22/00; G01N22/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 2008-64495 A (RICOH COMPANY, LTD.) 21 March 2008 (2008-03-21) claims 1-3, paragraphs [0006]-[0010], fig. 1, 2 | 1-11, 16, 19, 20, 22-32, 34, 35 |
| Y | | 12, 21 |
| A | | 13, 14, 17, 18, 33 |
| Y | JP 2000-46597 A (HITACHI, LTD.) 18 February 2000 (2000-02-18) claim 1, paragraphs [0011], [0018], fig. 1, 3, 6 | 12, 21 |
| X | WO 2019/189192 A1 (NEC CORPORATION) 03 October 2019 (2019-10-03) claim 1, paragraphs [0018], [0019] | 15 |

☐ Further documents are listed in the continuation of Box C.        ☑ See patent family annex.

| | |
| --- | --- |
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | "&"    document member of the same patent family |
| "P"    document published prior to the international filing date but later than the priority date claimed | |

| Date of the actual completion of the international search | Date of mailing of the international search report |
| --- | --- |
| **11 June 2024** | **18 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

| International application No. |
| --- |
| **PCT/JP2024/012516** |

| Patent document cited in search report | | | Publication date (day/month/year) | Patent family member(s) | Publication date (day/month/year) |
| --- | --- | --- | --- | --- | --- |
| JP | 2008-64495 | A | 21 March 2008 | (Family: none) | |
| JP | 2000-46597 | A | 18 February 2000 | (Family: none) | |
| WO | 2019/189192 | A1 | 03 October 2019 | US 2021/0010836 A1<br>claim 1, paragraphs [0027], [0028] | |

**EP 4 692 724 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018146469 A
- JP 2000046597 A
- JP 2000180219 A